# EUROPÄISCHE PATENTSCHRIFT

(11) **EP 3 027 362 B1**
(45) Veröffentlichungstag und Bekanntmachung des Hinweises auf die Patenterteilung: **11.04.2018**
(21) Anmeldenummer: 14747835.8
(22) Anmeldetag: 25.07.2014
(51) Int. Cl.: B24B 23/04, B27B 19/00, B23D 61/00, B24B 45/00, B23Q 3/12, B27B 5/30

(54) **WERKZEUGEINRICHTUNG**
TOOL DEVICE
SYSTÈME D'OUTIL

(30) Priorität: 01.08.2013 DE 202013006920 U
(43) Veröffentlichungstag der Anmeldung: 08.06.2016
(73) Patentinhaber: C. & E. Fein GmbH, 73529 Schwäbisch Gmünd-Bargau (DE); Robert Bosch GmbH, 70469 Stuttgart (DE)
(72) Erfinder: KLABUNDE, Olaf, 89537 Giengen/Brenz (DE); BLICKLE, Jürgen, 73035 Göppingen (DE); THOMASCHEWSKI, Walter, 70794 Filderstadt (DE); BEK, Fabian, 73560 Böbingen (DE); DELFINI, Stefano, 2544 Bettlach (CH); FELLMANN, Willi, 4500 Solothurn (CH); LÜSCHER, Bruno, 4800 Zofingen (CH); BOZIC, Milan, 4500 Solothurn (CH); MATHYS, Thomas, 3250 Lyss (CH); GROLIMUND, Daniel, 4528 Zuchwil (CH)
(74) Vertreter: Wallinger, Michael
(86) Internationale Anmeldenummer: PCT/EP2014/002048
(87) Internationale Veröffentlichungsnummer: WO 2015/014467

(56) Entgegenhaltungen:
- EP-A1- 1 852 218
- DE-U1- 29 605 728
- DE-U1-202011 050 511
- US-A1- 2012 169 018

## Beschreibung

Die vorliegende Erfindung betrifft eine Werkzeugeinrichtung, welche dafür geeignet ist, mit einer insbesondere handgeführten Werkzeugmaschine verwendet zu werden, die eine sich um eine Antriebsachse bewegende Antriebseinrichtung aufweist.

Die Erfindung wird nachfolgend vorwiegend am Beispiel einer Werkzeugeinrichtung beschrieben, welche dafür vorgesehen ist, mit einer insbesondere handgeführten Werkzeugmaschine verwendet zu werden, die eine sich um eine Antriebsachse oszillierend bewegende Antriebseinrichtung aufweist. Diese Einschränkung der Darstellung ist aber nicht als Einschränkung der Anwendungsmöglichkeiten einer solchen Werkzeugeinrichtung zu verstehen.

Statt des Begriffs "Werkzeugeinrichtung" wird im Folgenden - vereinfachend - auch der Begriff "Werkzeug" verwendet. Auch dies soll aber nicht als Einschränkung zu verstehen sein.

Eine Werkzeugmaschine ist eine Vorrichtung, die ein oder mehrere Antriebsmotoren und ggf. eine oder mehrere Getriebeeinrichtungen aufweist. Die Antriebseinrichtung einer Werkzeugmaschine ist das Bauteil bzw. sind die Bauteile, mit denen das Drehmoment auf das Werkzeug aufgebracht wird, also üblicherweise eine An-/Abtriebswelle, eine An-/Abtriebsspindel oder dergleichen.

Eine handgeführte Werkzeugmaschine weist eine Trageeinrichtung, insbesondere Griffe und dergleichen auf, mit denen die Werkzeugmaschine mit dem daran befestigten Werkzeug von einer Bedienungskraft getragen und geführt werden kann. Typischerweise sind handgeführte Werkzeugmaschinen mit einem elektrischen Antriebsmotor versehen, es sind aber auch andere Bauarten, wie z. B. hydraulisch oder pneumatisch oder mit Muskelkraft betriebene Werkzeugmaschinen bekannt.

Im Stand der Technik ist eine Vielzahl von Werkzeugen bekannt, die dafür vorgesehen sind, mit einer Werkzeugmaschine verwendet zu werden, die eine umlaufende Antriebseinrichtung aufweist. Derartige Werkzeugeinrichtungen sind z. B. Bohrer, Schleif- und Trennscheiben, Kreissägen, etc. Diese Werkzeuge sind an der Abtriebseinrichtung befestigt, die sich - je nach Einsatz, Werkzeug und Maschine - mit einer Drehzahl zwischen nahe 0 bis zu einigen 1000 Umdrehungen/min., in Extremfällen aber auch deutlich höher, dreht. Das Werkzeug wird beim Betrieb mit mehr oder weniger hohem Anpressdruck in Kontakt mit einem Werkstück gebracht, an dem es dann den entsprechenden Bearbeitungsvorgang ausführt. Die dabei im Abstand zur Drehachse auftretenden Bearbeitungskräfte, also beispielsweise Schnitt- oder Schleifkräfte, führen zu einem Drehmoment um die Antriebsachse, welches durch das von der Werkzeugmaschine auf die Werkzeugeinrichtung übertragende Antriebsmoment ausgeglichen wird. Die Übertragung dieses Antriebsmoments auf das Werkzeug erfolgt über die Anschlusseinrichtung des Werkzeugs, mit der dieses an der Antriebseinrichtung befestigt ist. Bei einem Werkzeug, welches bei der Bearbeitung im Wesentlichen immer in gleicher Richtung rotiert, treten somit die während des Werkzeugeinsatzes auf die Anschlusseinrichtung wirkenden Kräfte im Wesentlichen in gleicher Richtung auf, sind aber in der Höhe unterschiedlich.

Im Stand der Technik sind ferner Werkzeugmaschinen mit oszillierender Antriebseinrichtung bekannt. Als oszillierenden Antrieb der Werkzeugeinrichtung wird hier ein drehoszillierender Antrieb verstanden und nicht ein hub-oszillierender Antrieb, wie dieser insbesondere von Hubsägeeinrichtungen bekannt ist. Unter einer Hubsägeeinrichtung ist insbesondere eine Stichsäge-, Säbelsäge- oder Fuchsschwanzsägeeinrichtung oder dergleichen zu verstehen. Unter einer Werkzeugmaschine mit oszillierender Antriebseinrichtung wird hier also eine Werkzeugmaschine mit einer Bewegung der Antriebseinrichtung verstanden, bei der die Antriebseinrichtung sich ausgehend von einer Mittellage in einer ersten Drehrichtung bewegt, zum Stillstand abgebremst wird und sich dann in umgekehrter Drehrichtung wieder bis zum Stillstand bewegt.

Der Winkelabstand von der Mittellage zur jeweiligen Endlage kann typischerweise bis zu 5° betragen, üblich sind allerdings bei ausgeführten Maschinen meist geringere Winkel von 1° bis 2,5°, was einer Gesamtwinkelbewegung (1. - 2. Endlage) von 2° bis 5° entspricht. Diese Oszillationsbewegung wird typischerweise zwischen 5.000 und 50.000 mal pro Minute ausgeführt, es sind allerdings geringere und auch höhere Oszillationsfrequenzen (hier ausgedrückt als Schwingungen/min.) möglich.

Die Umkehr der Drehrichtung bewirkt, dass auch die Bearbeitungskräfte des Werkzeugs, die bekanntlich immer entgegen der Bewegungsrichtung bzw. hier entgegen der Drehrichtung, wirken, ebenfalls ihre Richtung ändern. Aus den ihre Richtung wechselnden Bearbeitungskräften ergibt sich entsprechend dem Hebelarm, d.h. dem Abstand des Bearbeitungspunktes des Werkzeugs zur Drehachse, ein Drehmoment, das mit der Oszillation die Richtung umkehrt. Dem aus den Bearbeitungskräften herrührenden Drehmoment überlagert sich ein weiteres Moment, das sowohl während der Bearbeitung aber auch im Leerlauf wirksam ist, nämlich das aus dem Massenträgheitsmoment des Werkzeugs herrührende Drehmoment zum Abbremsen des Werkzeugs nach seiner höchsten Geschwindigkeit (z. B. dem jeweiligen Amplitudenmaximum der Sinuskurve bei einer sinusförmigen Drehgeschwindigkeitsänderung der Antriebseinrichtung) und der nach der Drehrichtungsumkehr erfolgenden erneuten Beschleunigung des Werkzeugs in die Gegenrichtung.

Die Drehmomente, die durch die Bearbeitungskräfte und durch die kinematischen Gegebenheiten des Oszillationsantriebs entstehen, werden im Wesentlichen von der Werkzeugmaschine aufgebracht und über die Antriebseinrichtung in die Werkzeugeinrichtung eingeleitet.

Der vorliegenden Erfindung liegt die Aufgabe zugrunde, die Werkzeugeinrichtung so zu gestalten, dass das über die Antriebseinrichtung eingeleitete Drehmoment zuverlässig aufgenommen wird.

Diese Aufgabe wird durch den Gegenstand des Anspruchs 1 gelöst.

Zu bevorzugende Weiterbildungen der Erfindung sind Gegenstand der Unteransprüche.

Erfindungsgemäß weist eine Werkzeugeinrichtung eine Anschlusseinrichtung auf, mit der die Werkzeugeinrichtung so an der Werkzeugmaschine befestigt werden kann, dass deren Antriebsachse und eine Werkzeugdrehachse im Wesentlichen zusammenfallen. Der Begriff "Antriebsachse" und "Werkzeugdrehachse" bezeichnet dabei die fiktive geometrische Drehachse der Werkzeugmaschine bzw. der Werkzeugeinrichtung.

Ferner sind wenigstens zwei im Abstand zu dieser Werkzeugdrehachse angeordnete Antriebsflächenbereiche vorgesehen, die jeweils eine Vielzahl von Flächenpunkten aufweisen. Der Begriff "Antriebsflächenbereich" (im Folgenden teilweise auch nur als "Antriebsfläche" bezeichnet) bezeichnet eine Fläche, die zumindest teilweise mittelbar oder unmittelbar in Kontakt mit der Abtriebseinrichtung der Werkzeugmaschine stehen kann, um ein Drehmoment von der Werkzeugmaschine aufzunehmen. Der Begriff "Flächenpunkt" meint dabei Punkte auf der Oberseite dieser Antriebsflächen und ist geometrisch zu verstehen.

Der Begriff wird verwendet, um den geometrischen Punkt zu charakterisieren, an welchem eine Tangentialebene an einer Fläche anliegt. Der Vektor auf dem Flächenpunkt senkrecht zur Tangentialebene beschreibt die Orientierung der Fläche in diesem Punkt in einen Raum, der z.B. durch ein dreidimensionales Koordinatensystem oder durch andere Bezugsebenen oder Bezugsflächen definiert ist.

Eine Fläche hat unendlich viele Flächenpunkte, da jeder Punkt der Fläche gleichzeitig auch ein Flächenpunkt im vorliegenden Sinne ist. Um eine einsinnig oder mehrsinnig gekrümmte Fläche für die Praxis zu beschreiben, genügt jedoch eine endliche Anzahl von Flächenpunkten. Unter dem Begriff einsinnig gekrümmt ist eine an jedem Punkt nur in eine Richtung gekrümmte Fläche, z.B. eine zylindrische Fläche, zu verstehen, unter dem Begriff mehrsinnig gekrümmt eine an wenigstens einem Punkt in mehrere Richtungen gekrümmte Fläche, z.B. eine Kugeloberfläche.

Eine ebene Fläche hat nur eine Tangentialebene, die mit der Fläche selbst zusammenfällt. Zur Charakterisierung einer ebenen Fläche genügt somit ein einzelner Flächenpunkt, wobei dies jeder beliebige Punkt der ebenen Fläche sein kann.

Da Flächenpunkte geometrische Punkte sind, sind sie auf der Fläche nicht sichtbar.

Für die Tangentialebenen an diesen Flächenpunkten gelten besondere geometrische Bedingungen. Tangentialebenen sind, wie in der Geometrie allgemein üblich, die Ebenen, die senkrecht zu den Normalvektoren der Flächenpunkte ausgebildet sind und die Oberfläche im Flächenpunkt berühren. Dabei meint der Begriff "Normalvektor" einen Vektor, der in diesem Flächenpunkt exakt senkrecht zur Fläche ausgerichtet ist.

Die Tangentialebenen in diesen Flächenpunkten sind in zwei Richtungen geneigt. Zum einen sind die Tangentialebenen gegenüber einer Axialebene geneigt, welche die Werkzeugdrehachse einschließt. Ferner sind diese Tangentialebenen gegenüber einer Radialebene, welche sich senkrecht zur Werkzeugdrehachse erstreckt, geneigt.

Damit unterscheidet sich die Anordnung dieser Antriebsfläche gegenüber den im Stand der Technik bekannten Werkzeugeinrichtungen für Oszillationsmaschinen.

Bei den bekannten Werkzeugeinrichtungen, wie sie beispielsweise in den deutschen Patentanmeldungen DE 10 2011 005 818 A1 und in der deutschen Gebrauchsmusteranmeldung DE 296 05 728 U1 dargestellt sind, sind die Werkzeuge im Verbindungsbereich zur Antriebseinrichtung der Werkzeugmaschine im Wesentlichen eben gestaltet, d.h. sie erstrecken sich in diesem Bereich in einer Ebene, die senkrecht zur Werkzeugdrehachse angeordnet ist.

Es sei bereits jetzt angemerkt, dass bei einer bevorzugten Ausführungsform die Antriebsfläche im Wesentlichen eben ist, d.h. dass die Normalvektoren aller Flächenpunkte parallel zueinander ausgerichtet sind und somit die Antriebsfläche insgesamt nur eine einzelne Tangentialebene aufweist. Es ist aber im Rahmen der Erfindung ebenfalls möglich, dass die Antriebsflächen einsinnig oder zweisinnig gekrümmt sind; in diesem Fall sind dann die Normalvektoren nicht mehr parallel zueinander.

In der deutschen Gebrauchsmusteranmeldung DE 20 2011 050 511 U1, die die Basis für den Oberbegriff des Anspruchs 1 bildet, wird ein Arbeitsbauteil zum Ankuppeln an vielfältige Wellenenden von Vielfachwerkzeugen offenbart. Das Arbeitsbauteil umfasst einen Rumpfbereich und einen Spannbereich, der mit dem Rumpfbereich verbunden und zur Montage des Arbeitsbauteils an den Wellenenden geeignet ist, wobei der Rumpfbereich einen Werkstück-Bearbeitungsbereich zum Einwirken auf ein zu bearbeitendes Werkstück aufweist, der Spannbereich ein Montageloch mit einer Längsachse Y aufweist und der Spannbereich einen Trägerbereich und einen Kuppelbereich enthält, die sich entlang der Richtung der Längsachse Y überlappen.

Die europäische Patentanmeldung EP 1 852 218 A1 offenbart einen Oszillationsantrieb mit einer Abtriebswelle, die um ihre Längsachse drehoszillierend antreibbar ist und ein freies Ende aufweist, einer Aufnahme am freien Ende der Abtriebswelle, die eine Anlagefläche zur Anlage eines Werkzeugs aufweist, einem Befestigungsabschnitt an der Aufnahme, der gegenüber der Anlagefläche erhaben in Richtung der Längsachse nach aussen hervorsteht und der zur formschlüssigen Verbindung mit einer Befestigungsöffnung eines an der Anlagefläche anliegenden Werkzeugs ausgebildet ist und mit einem Befestigungsmittel zur Befestigung des Werkzeugs mit seiner Befestigungsöffnung an der Aufnahme, wobei das Befestigungsmittel ein axiales Ausweichen des Werkzeugs unter der Wirkung eines Drehmoments gegen eine Vorspannung erlaubt und der Befestigungsabschnitt bei axialem Ausweichen des Werkzeugs eine Verdrehung des Werkzeugs um einen gewissen Verdrehwinkel erlaubt.

Der Erfindung liegen folgende Überlegungen zugrunde:
Durch die oszillierende Bewegung unterliegt der Bereich des Werkzeugs, in dem das Drehmoment eingeleitet wird, einer Biege-Wechsel-Beanspruchung. Diese sind bei metallischen Werkstoffen, aus denen die hier in Rede stehenden Werkzeuge üblicherweise gefertigt werden, besonders problematisch. Metalle weisen ein Kristallgefüge auf. Kommt es in einem Bereich eines metallischen Bauteils zu örtlichen Überlastungen, d.h. dass die im Bauteil wirkenden Spannungen an dieser Stelle höher sind als die vom Bauteil ertragbaren Spannungen, so entstehen zwischen den einzelnen Körnern des Metallgefüges Mikrorisse. Diese beeinträchtigen die Festigkeit des Bauteils in doppelter Hinsicht. Zum einen können in dem Bereich, in dem Mikrorisse entstanden sind, keine Spannungen im Bauteil übertragen werden. Dies bedeutet, dass durch die Rissbildung die Belastungen innerhalb dieses Bereiches erhöht werden, da sich die wirksame Fläche zur Kraftübertragung vermindert.

Zum anderen entsteht ein Phänomen, das im Maschinenbau üblicherweise als "Kerbwirkung" bezeichnet wird. Die Bezeichnung rührt daher, da im Bereich einer Kerbe, insbesondere wenn die Kerbe scharfkantig ist, eine örtliche Spannungskonzentration entsteht, die im Bereich des die Kerbe umgebenden Werkstoffes zu Schubspannungen führt, die höher sind, als die Schubspannungen in den Bereichen des Bauteils, die nicht durch eine solche Geometrie beeinflusst werden.

Diese erhöhten Belastungen führen dazu, dass die Rissbildung fortschreitet und schließlich zu einem Versagen des Bauteils führt.

Dieser Vorgang, der beispielsweise in den Arbeiten von Palmgren und Miner dokumentiert ist, wird als Schadensakkumulation bezeichnet.

Die Eigenschaft eines Werkstoffes bzw. eines Bauteils, schwingende Belastungen und insbesondere Biege-Wechsel-Belastungen zu ertragen, wird üblicherweise durch die sogenannte Wöhlerlinie dieses Bauteils dargestellt. Der Wöhler-Linie liegt die Erkenntnis zugrunde, dass eine wechselnde Belastung, beim Wöhler-Versuch wird vom Lastwechsel gesprochen, insbesondere von einem aus Stahl bestehenden Bauteil in vielen Fällen dann auf Dauer ertragen werden kann, wenn das Bauteil zwischen 2 Mio. und 6 Mio. (abhängig vom Werkstoff) derartiger Lastwechsel bei dieser Belastung ohne Schädigung übersteht. Im Maschinenbau spricht man dann von der sogenannten Dauerfestigkeit des Werkstoffs bzw. des Bauteils.

Ein oszillierend angetriebenes Werkzeug schwingt, wie vorstehend ausgeführt, z. B. mit einer Frequenz von 20.000 Schwingungen/min. Dies bedeutet in der Diktion der betriebsfesten Bauteilgestaltung 20.000 Lastwechsel/min. oder 1,2 Mio. Lastwechsel/h..

Die untere Dauerfestigkeitsgrenze des Wöhler-Versuchs von 2 Mio. Lastwechseln wird also schon nach 2 Stunden Betriebszeit des Werkzeugs überschritten.

Durch die erfindungsgemäße Gestaltung wird die Drehmomentbelastung, die das Werkzeug ertragen kann, erhöht. Dies wird zunächst dadurch erreicht, dass die Antriebsflächen im Abstand zur Drehachse angeordnet sind. Da sich die vom Werkzeug aufzunehmende Kraft als Quotient aus Drehmoment und Abstand bestimmt (Fᵣ = M/r, M als Drehmoment gemessen in Nm (Newtonmeter), F als Kraft an der Stelle r in N und r der Abstand des Kraftangriffspunktes von der Werkzeugdrehachse in m).

Eine Vergrößerung des Kraftangriffspunktes nach außen, d.h. von der Werkzeugachse weg, reduziert das Drehmoment.

Die Neigung der Antriebsflächen führt weiterhin dazu, dass der Kraftangriffspunkt insgesamt vergrößert wird, wodurch die örtliche Belastung sinkt und, bei entsprechender Gestaltung, die Krafteinleitung in die übrigen Bereiche des Werkzeuges verbessert wird.

Ein Teil der bei Oszillationsmaschinen üblicherweise verwendbaren Werkzeugeinrichtungen hat einen Arbeitsbereich, der in Umfangsrichtung angeordnet ist, wie beispielsweise Säge- und Schneidwerkzeuge. Der Arbeitsbereich dieser Werkzeuge erstreckt sich also im Wesentlichen in einer Ebene senkrecht zur Drehachse des Werkzeugs.

Bei derartigen Werkzeugen ist es im Stand der Technik üblich, dass der Anschlussbereich ebenfalls eben ausgeführt ist. Das Antriebsmoment wird dann als Kraft in einer Richtung senkrecht zur Werkzeugebene, z. B. durch Stifte, einen Antriebsstern oder dergleichen eingeleitet. In der Werkzeugebene ist das Werkzeug aber besonders steif, so dass die Krafteinleitung nur über einen relativ kleinen Bereich erfolgt. In diesem Bereich kann es dann zu höheren örtlichen Belastungen kommen, die zu einer Reduzierung der Betriebsfestigkeit des Werkzeugs führen.

Gemäß der vorliegenden Erfindung erfolgt bei einem solchen Werkzeug die Kraftübertragung zunächst von der geneigten Fläche in die ebene Fläche, wodurch sich - bei entsprechender Gestaltung - die Kraftübertragungsfläche erhöht und dadurch die örtliche Belastung vermindert.

Es sei an dieser Stelle angemerkt, dass es gerade darauf ankommt, die Spitzenbelastungen zu reduzieren. Da der Verschleiß bis hin zur Zerstörung des Werkzeugs gerade durch die vorstehend beschriebenen Belastungskonzentrationen, die zu Mikrorissen führen, entsteht und weiter begünstigt wird, lässt sich durch eine Reduzierung dieser Spitzenbelastungen eine erhebliche Verlängerung der Lebensdauer des Werkzeugs erreichen.

Gemäß einer bevorzugten Ausführungsform gibt es wenigstens einen Antriebsflächenbereich, für den an keinem Flächenpunkt der Normalvektor an diesem Flächenpunkt auf einer Geraden liegt, die durch die Werkzeugdrehachse verläuft. Ein solcher Antriebsflächenbereich ist also an keinem Flächenpunkt zur Werkzeugdrehachse hin orientiert, sondern der Antriebsflächenbereich ist gegenüber der Werkzeugdrehachse "verdreht". Dadurch werden die Antriebskräfte von der Werkzeugmaschine auf diesen Antriebsflächenbereich an keinem Flächenpunkt tangential eingeleitet, wodurch die Drehmomentübertragung weiter verbessert wird.

Wie bereits ausgeführt, sind die Antriebsflächen vorzugsweise im Wesentlichen eben gestaltet. Dies bedeutet, dass die Antriebsflächen einen ebenen Bereich mit im Wesentlichen gleicher Tangentialebene haben, die aber durch Kanten, einseitig oder mehrseitige gekrümmte Flächen, etc. begrenzt sein können bzw. über Kanten oder über gewölbte Bereiche in andere Bereiche der Werkzeugeinrichtung übergehen können.

Der Vorteil der ebenen Antriebsflächen liegt darin, dass dadurch eine Werkzeugeinrichtung geschaffen werden kann, die einerseits sowohl spielfrei an der Antriebseinrichtung der Werkzeugmaschine befestigt ist - wenn diese entsprechend gestaltet ist - und bei denen bei entsprechenden Toleranzen und Werkstoffeigenschaften wie Elastizität, etc. eine Flächenberührung zwischen der Antriebseinrichtung, der Werkzeugmaschine und der Antriebseinrichtung möglich ist, wodurch sich der Bereich der Kraftübertragung erhöht.

Gemäß einer weiteren bevorzugten Ausführungsform sind die Antriebsflächen wenigstens abschnittsweise gekrümmt. Dabei kann die Krümmung sowohl einsinnig als auch zweisinnig, konvex, konkav mit festen oder variablen Krümmungsradius ausgeführt sein.

Die gekrümmten Flächen können auch so gestaltet sein, dass sie durch ihre Formgebung und die Elastizität des Werkstoffes einer Elastizität unterworfen sind, durch die sich die Krümmung ändert und insbesondere durch die die Krümmung ab einer bestimmten Belastung im Wesentlichen verschwindet, d.h. also dann eine im Wesentlichen ebene Antriebsfläche gegeben ist.

In einer bevorzugten Ausführungsform weist die Werkzeugeinrichtung im Bereich der Anschlusseinrichtung wenigstens eine erste obere Begrenzungsebene und wenigstens eine zweite untere Begrenzungsebene auf. Dabei sind diese Begrenzungsebenen im Wesentlichen senkrecht zu dieser Werkzeugdrehachse angeordnet. Weiter sind diese beiden Begrenzungsebenen voneinander beabstandet. Jeder dieser Antriebsflächenbereiche ist zwischen einer dieser ersten oberen und einer dieser zweiten unteren Begrenzungsebenen angeordnet, und zwar vorzugsweise so, dass der Antriebsflächenbereich die jeweilige Begrenzungsebene berührt. Er schneidet sie aber nicht. Insbesondere durch die Anordnung wenigstens eines Antriebsflächenbereichs zwischen diesen Begrenzungsebenen ist ein besonders großflächiger Antriebsflächenbereich erreichbar und die Beanspruchung dieses Antriebsflächenbereichs ist dementsprechend gering. Vorzugsweise ist eine erste Gruppe von Antriebsflächenbereichen, wenigstens aber ein Antriebsflächenbereich, zwischen einer dieser ersten oberen Begrenzungsebenen und einer dieser zweiten unteren Begrenzungsebenen angeordnet, und weiter vorzugsweise ist eine zweite Gruppe von Antriebsflächenbereichen zwischen einer weiteren ersten oberen und einer weiteren zweiten unteren Begrenzungsebene angeordnet. Insbesondere durch die Gruppierung von mehreren Antriebsflächenbereichen und Zuordnung dieser zu Begrenzungsebenen wird einerseits eine einfache Fertigung der Werkzeugeinrichtung ermöglicht und andererseits eine besonders homogene Drehmomenteinleitung in die Werkzeugeinrichtung erreicht.

In einer bevorzugten Ausführungsform erstrecken sich alle Antriebsflächenbereiche zwischen einer einzigen ersten oberen und einer einzigen zweiten unteren Begrenzungsebene. Insbesondere durch die Erstreckung dieser Antriebsflächenbereiche zwischen einer einzigen ersten oberen und einer einzigen zweiten unteren Begrenzungsebene ist eine Werkzeugeinrichtung mit geringem Bauraumbedarf und darüber hinaus mit geringem notwendigen Materialeinsatz herzustellen. Weiter vorteilhaft ist es, insbesondere durch diese Art der Gestaltung der Antriebsflächenbereiche, dass das Drehmoment besonders gleichmäßig und damit materialschonend auf die Werkzeugeinrichtung übertragen wird.

In einer bevorzugten Ausführungsform sind wenigstens eine erste und eine zweite Begrenzungsebene um einen Abstand T voneinander beabstandet angeordnet. Vorzugsweise weist die Werkzeugeinrichtung, insbesondere im Bereich der Anschlusseinrichtung, im Wesentlichen eine Wandstärke t auf. Weiter vorzugsweise ist der Abstand T in Bezug auf die Wandstärke t aus einem definierten Bereich gewählt. Es hat sich als vorteilhaft herausgestellt, den Abstand T und die Wandstärke t in eine Beziehung zu setzen, insbesondere sind dadurch günstige Steifigkeitsverhältnisse im Anschlussbereich der Werkzeugeinrichtung erreichbar und damit ist eine günstige Drehmomenteinleitung von der Werkzeugmaschine in die Werkzeugeinrichtung erreichbar. Vorzugsweise ist der Abstand T aus einem Bereich ausgewählt, wobei T vorzugsweise größer als ein Mal t, bevorzugt größer als zwei Mal t und besonders bevorzugt größer drei Mal t ist und weiter vorzugsweise ist der Abstand T kleiner als 20 Mal t, bevorzugt kleiner als 10 Mal t und besonders bevorzugt kleiner als 5 Mal t. Besonders bevorzugt entspricht der Abstand T, insbesondere wenn die Wandstärke t in einem Bereich zwischen 0,75 und 3 mm, bevorzugt zwischen 1 und 1,5 mm liegt, im Wesentlichen 3,5 Mal t. Dabei bedeutet vorliegend im Wesentlichen +/- 0,75 Mal t. Insbesondere durch die mit dieser Beziehung zwischen dem Abstand T und der Wandstärke t erreichbaren Steifigkeitsverhältnisse im Bereich der Anschlusseinrichtung der Werkzeugeinrichtung ist eine besonders günstige Drehmomenteinleitung in die Werkzeugeinrichtung erreichbar und damit ist eine große Lebensdauer der Werkzeugeinrichtung erreichbar.

In einer bevorzugten Ausführungsform weist die Werkzeugeinrichtung eine Vielzahl von Antriebsflächenbereichen auf. Vorzugsweise ist diese Vielzahl von Antriebsflächenbereichen rotationssymmetrisch um die Werkzeugdrehachse angeordnet.

"Rotationssymmetrisch um die Werkzeugdrehachse" im Sinne der vorliegenden Anmeldung soll bedeuten, dass die Vielzahl von Antriebsflächenbereichen durch Drehung um die Werkzeugdrehachse um wenigstens einen Winkel, der größer als 0° und kleiner als 360° ist, - oder auch um jeden beliebigen Winkel - geometrisch gesehen in sich selbst übergeht. Insbesondere beträgt einer dieser Winkel 360° / n, wobei n eine natürliche Zahl größer 1 ist.

Insbesondere durch eine rotationssymmetrische Anordnung der Antriebsflächenbereiche ist es ermöglicht, Zusatzbeanspruchungen auf die Werkzeugeinrichtung zu verringern bzw. die Antriebsflächenbereiche gleichmäßig zu beanspruchen und damit insbesondere eine erhöhte Lebensdauer zu erreichen. Weiter vorteilhaft lässt sich bei einer rotationssymmetrischen Ausrichtung der Antriebsflächenbereiche die Werkzeugeinrichtung in unterschiedlichen Winkelpositionen, bezüglich der Werkzeugdrehachse, an der Werkzeugmaschine aufnehmen. Vorzugsweise ist die Werkzeugeinrichtung um diskrete Winkelschritte um die Werkzeugdrehachse verdreh- und an der Werkzeugmaschine aufnehmbar.

In einer bevorzugten Ausführungsform sind wenigstens jeweils zwei dieser Antriebsflächenbereiche symmetrisch zu einer Symmetrieebene angeordnet. Vorzugsweise sind mehr als zwei dieser Antriebsflächenbereiche symmetrisch zu einer Symmetrieebene angeordnet, bevorzugt vier. Dabei liegt in dieser Symmetrieebene insbesondere die Werkzeugdrehachse. Weiter vorzugsweise sind diese Antriebsflächenbereiche im Wesentlichen aneinanderstoßend angeordnet. Dabei ist unter einer aneinanderstoßenden Anordnung im Sinne der Erfindung insbesondere auch eine solche Anordnung zu verstehen, wenn die Antriebsflächenbereiche durch einen Übergangsbereich miteinander verbunden sind. Vorzugsweise kann ein solcher Übergangsbereich durch einen gekrümmt oder einen wenigstens abschnittsweise eben verlaufenden Flächenbereiche gebildet sein. Weiter vorzugsweise schließt sich ein solcher Übergangsbereich an wenigstens einen, bevorzugt an beide dieser Antriebsflächenbereiche tangential an. Insbesondere durch eine symmetrische und auch aneinanderstoßende Anordnung der Antriebsflächenbereiche ist eine besonders hohe Stabilität dieser Antriebsflächenbereiche und damit eine gute Kraftübertragung auf die Werkzeugeinrichtung erreichbar. Erfindungsgemäss weist die Anschlusseinrichtung eine Seitenwandung auf. Diese Seitenwandung verläuft radial beabstandet von der Werkzeugdrehachse. Weiter erstreckt sich diese Seitenwandung zwischen der ersten oberen und der zweiten unteren Begrenzungsebene. Diese Seitenwandung weist diese Antriebsflächenbereiche auf. Insbesondere durch die Gestaltung der Anschlusseinrichtung mit einer Seitenwandung entsteht ein im Wesentlicher hohlkegeliger Abschnitt im Bereich der Anschlusseinrichtung, jedoch weist dieser hohlkegelige Abschnitt keinen kreisrunden Querschnitt auf, sondern einen Querschnitt mit variablen Abstand der Seitenwandung zur Werkzeugdrehachse in einer zu dieser Werkzeugdrehachse orthogonalen Ebene. Insbesondere durch die beschriebene Art der Ausgestaltung der Anschlusseinrichtung ist eine besonders stabile Anschlusseinrichtung und damit eine gute Drehmomenteinleitung in die Werkzeugeinrichtung erreichbar.

In einer bevorzugten Ausführungsform weist die Seitenwandung im Wesentlichen eine mittlere Wandstärke t₁ auf. Vorzugsweise entspricht die mittlere Wandstärke t₁ im Wesentlichen der Wandstärke t. Dabei ist diese Wandstärke t₁ bzw. t vorzugsweise aus einem definierten Bereich ausgewählt, wobei diese Wandstärke vorzugsweise größer oder gleich 0,2 mm, bevorzugt größer als 0,5 mm und besonders bevorzugt größer 0,8 mm ist, weiter vorzugsweise ist die Wandstärke kleiner oder gleich 4 mm, bevorzugt kleiner als 2 mm und besonders bevorzugt kleiner als 1,5 mm. Besonders bevorzugt ist die Wandstärke t im Wesentlichen 1 mm oder 1,5 mm oder bevorzugt auch ein Maß zwischen 1 mm und 1,5 mm. Insbesondere durch die Wahl einer geeigneten Wandstärke aus dem zuvor genannten Bereich ist es ermöglicht, ein einerseits leichtes und damit ein geringes Trägheitsmoment aufweisendes Werkzeug und andererseits ein ausreichend stabiles Werkzeug zu erreichen.

In einer bevorzugten Ausführungsform läuft diese Seitenwandung im Wesentlichen radial geschlossen um die Werkzeugdrehachse um. In einer weiteren Ausführungsform weist die Seitenwandung in ihrem Verlauf um die Werkzeugdrehachse Ausnehmungen bzw. Unterbrechungen auf. Insbesondere durch eine geschlossen umlaufende Seitenwandung ist eine besonders stabile Anschlusseinrichtung erreichbar; durch eine unterbrochene oder Ausnehmungen aufweisende Seitenwandung ist insbesondere eine besonders leichte und ein geringes Trägheitsmoment aufweisende Anschlusseinrichtung erreichbar.

In einer bevorzugten Ausführungsform weist die Anschlusseinrichtung einen Deckflächenabschnitt auf. Vorzugsweise schließt sich dieser Deckflächenabschnitt mittelbar oder unmittelbar an wenigstens einen dieser Antriebsflächenbereiche an. Dabei ist unter einer mittelbaren Verbindung des Deckflächenabschnitts mit einem dieser Antriebsflächenbereiche insbesondere zu verstehen, dass dieser Deckflächenabschnitt und dieser Antriebsflächenbereich durch einen Verbindungsbereich miteinander verbunden sind. Dabei kann ein solcher Verbindungsbereich vorzugsweise als eine gekrümmte oder wenigstens abschnittsweise gerade verlaufende Wandung verstanden werden. Vorzugsweise ist unter dem unmittelbaren Anschließen des Deckflächenabschnitts an wenigstens einem dieser Antriebsflächenbereiche zu verstehen, dass dieser Deckflächenabschnitt nur durch einen fertigungsbedingten Zwischenabschnitt von diesem einen Antriebsflächenbereich getrennt ist oder sich direkt an diesen anschließt. Unter einem solchen fertigungsbedingten Zwischenabschnitt ist insbesondere ein Biegeradius, eine Formschräge oder dergleichen zu verstehen. Vorzugsweise weist die Erstreckung dieses Deckflächenabschnitts wenigstens eine Flächen-Komponente senkrecht zur Werkzeugdrehachse auf. Weiter vorzugsweise erstreckt sich der Deckflächenabschnitt wenigstens abschnittsweise im Wesentlichen senkrecht zu dieser Werkzeugdrehachse. Insbesondere durch diese Ausgestaltung des Deckflächenabschnitts ist eine zusätzliche Stabilisierung der Antriebsflächenbereiche erreichbar.

In einer bevorzugten Ausführungsform ist der Deckflächenabschnitt im Wesentlichen im Bereich einer dieser ersten oberen Begrenzungsebenen angeordnet. Vorzugsweise weist die Anschlusseinrichtung im Bereich, in welchem der Deckflächenabschnitt angeordnet ist, eine besonders geringe radiale Erstreckung auf. Weiter vorzugsweise ist der Deckflächenabschnitt im Wesentlichen im Bereich einer dieser ersten unteren Begrenzungsebenen, weiter vorzugsweise zwischen einer dieser ersten oberen und einer dieser zweiten unteren Begrenzungsebenen angeordnet. Insbesondere die Anordnung des Deckflächenabschnitts im Bereich dieser ersten oberen Begrenzungsebene ist fertigungstechnisch einfach darzustellen und kann insbesondere zu einer zusätzlichen Stabilisierung der Anschlusseinrichtung führen.

In einer bevorzugten Ausführungsform erstreckt sich der Deckflächenabschnitt in radialer Richtung von radial außen hin zur Werkzeugdrehachse. Weiter vorzugsweise weist dieser Deckflächenabschnitt wenigstens eine Ausnehmung auf. Weiter vorzugsweise weist dieser Deckflächenabschnitt mehrere, bevorzugt eine Vielzahl von Ausnehmungen auf. Insbesondere durch diese Ausnehmungen lässt sich das Rotationsträgheitsmoment der Werkzeugeinrichtung und damit deren Beanspruchung senken.

In einer bevorzugten Ausführungsform ist wenigstens eine dieser Ausnehmungen im Wesentlichen im Bereich der Werkzeugdrehachse angeordnet. Weiter vorzugsweise sind mehrere dieser Ausnehmungen im Wesentlichen im Bereich dieser Werkzeugdrehachse angeordnet. Dabei ist unter im Wesentlichen im Bereich der Werkzeugdrehachse insbesondere zu verstehen, dass eine dieser Ausnehmungen die Werkzeugdrehachse beinhaltet oder wenigstens eine dieser Ausnehmungen unmittelbar an die Werkzeugdrehachse angrenzt oder nur einen geringen Abstand zu dieser aufweist. Insbesondere durch eine oder mehrere Ausnehmungen im Bereich der Werkzeugdrehachse ist eine einfache Befestigung der Werkzeugeinrichtung an einer Werkzeugmaschine und damit eine gute Kraftübertragung von der Werkzeugmaschine auf die Werkzeugeinrichtung erreichbar.

In einer bevorzugten Ausführungsform ist eine oder mehrere dieser Ausnehmungen rotationssymmetrisch zu dieser Werkzeugdrehachse angeordnet. Weiter vorzugsweise sind alle diese Ausnehmungen rotationssymmetrisch zu dieser Werkzeugdrehachse angeordnet. Insbesondere durch diese Art der Ausrichtung der Ausnehmungen können Unwuchten bei der Bewegung der Werkzeugeinrichtung vermieden oder verringert werden, damit ist eine verbesserte Werkzeugeinrichtung erreichbar.

In einer bevorzugten Ausführungsform ist einer der Normalvektoren, auf eine dieser Tangentialebenen, in radialer Richtung von der Werkzeugdrehachse weg orientiert. Vorzugsweise sind die Normalvektoren mehrerer, bevorzugt aller dieser Tangentialebenen in radialer Richtung von der Werkzeugdrehachse weg orientiert. Insbesondere durch diese Orientierung der Tangentialebene stellt die Anschlusseinrichtung im Vergleich mit einer herkömmlichen Welle-Nabe-Verbindung das Wellenteil dar. Diese Gestaltung des Anschlussbereichs bietet insbesondere die Möglichkeit einer einfachen Fertigung bzw. sind die Antriebskräfte von der Werkzeugmaschine auf die Werkzeugeinrichtung besonders gleichmäßig übertragbar.

In einer bevorzugten Ausführungsform ist einer der Normalvektoren auf eine dieser Tangentialebenen in radialer Richtung zu der Werkzeugdrehachse hin orientiert. Vorzugsweise sind die Normalvektoren mehrerer, bevorzugt aller, dieser Tangentialebenen in radialer Richtung zu der Werkzeugdrehachse hin orientiert. Insbesondere durch diese Orientierung der Tangentialebenen stellt die Anschlusseinrichtung im Vergleich mit einer herkömmlichen Welle-Nabe-Verbindung das Nabenteil dar. Bei einer derartigen Gestaltung des Anschlussbereichs werden die Antriebskräfte durch innenliegende Fläche (Nabenteil) übertragen, derartige Flächen sind insbesondere gut vor Verschmutzung und Beschädigung geschützt.

In einer bevorzugten Ausführungsform weist die Werkzeugeinrichtung wenigstens einen Arbeitsbereich, wenigstens einen Anschlussbereich und wenigstens einen Verbindungsbereich auf. Vorzugsweise dieser Arbeitsbereich ist dazu eingerichtet, auf eine Werkstückanordnung oder auf ein Werkstück einzuwirken. Unter einem Werkstück oder einer Werkstückanordnung ist insbesondere ein Halbzeug, ein Maschinenelement, ein Bauteil, eine Anordnung mehrerer der genannten Elemente, eine Maschine, vorzugsweise ein Bauelement eines Kraftfahrzeugs, ein Baustoff, ein Bauwerk oder dergleichen zu verstehen. Vorzugsweise ist unter einem Arbeitsbereich eine Schneid-, Schleif-, Trenn-, Schabe-, Hebeleinrichtung oder dergleichen zu verstehen. Weiter vorzugsweise ist unter einem Verbindungsbereich ein Abschnitt der Werkzeugeinrichtung zu verstehen, durch welchen die Antriebskräfte vom Anschlussbereich, in welchen die Antriebskräfte von der Werkzeugmaschine auf die Werkzeugeinrichtung eingeleitet werden, zum Arbeitsbereich übertragen werden. Weiter vorzugsweise ist der Verbindungsbereich ein ebener, gewölbter, gerippter oder gebogener Abschnitt. Weiter vorzugsweise ist dieser Verbindungsbereich einstückig mit wenigstens diesem Arbeitsbereich oder wenigstens dieser Anschlusseinrichtung ausgebildet, bevorzugt kann dieser Verbindungsbereich aus dem gleichen oder auch aus einem anderen Werkstoff wie dieser Arbeitsbereich oder diese Anschlusseinrichtung bestehen und mit diesen verbunden sein. Vorzugsweise ist diese Verbindung form-, kraft- oder stoffschlüssig oder bevorzugt eine Kombination aus mehreren dieser Verbindungsarten, besonders bevorzugt geschweißt, genietet, verstemmt oder verschraubt. Weiter vorzugsweise ist zwischen dieser Anschlusseinrichtung und jedem dieser Arbeitsbereiche ein einziger Verbindungsbereich angeordnet. Insbesondere durch die beschriebene Ausgestaltung der Werkzeugeinrichtung mit Anschlusseinrichtung, Arbeitsbereich und Verbindungsbereich ist eine vorteilhafte Übertragung der Antriebskräfte von der Anschlusseinrichtung auf den Arbeitsbereich ermöglicht.

In einer bevorzugten Ausführungsform ist wenigstens einer dieser Verbindungsbereiche in einem bestimmten Bereich der Anschlusseinrichtung angeordnet. Vorzugsweise ist wenigstens einer dieser Verbindungsbereiche im Wesentlichen im Bereich einer dieser zweiten unteren Begrenzungsebenen, die von einer aufnehmenden Werkzeugmaschine weiter entfernt ist als die obere, angeordnet, bevorzugt im Bereich einer dieser ersten oberen Begrenzungsebenen und besonders bevorzugt zwischen diesen Begrenzungsebenen. Weiter vorzugsweise fällt wenigstens einer dieser Verbindungsbereiche im Wesentlichen mit einer dieser zweiten unteren Begrenzungsebenen zusammen. Weiter vorzugsweise sind alle Verbindungsbereiche in der zuvor beschriebenen Form angeordnet. Weiter vorzugsweise ist der Deckflächenabschnitt und bevorzugt ein, besonders bevorzugt alle Verbindungsbereiche gegengleich an der Anschlusseinrichtung angeordnet, d.h. ist der Deckflächenabschnitt im Bereich einer ersten oberen Begrenzungsebenen angeordnet, ist/sind wenigstens ein oder vorzugsweise alle Verbindungsbereiche im Bereich der zweiten unteren Begrenzungsebene angeordnet oder umgekehrt. Insbesondere durch die beschriebene Art der Ausgestaltung und Anordnung der Verbindungsbereiche ist eine besonders stabile Werkzeugeinrichtung und damit eine gleichmäßige Drehmomenteinleitung in die Werkzeugeinrichtung erreichbar.

In einer bevorzugten Ausführungsform ist zwischen einer dieser Tangentialebenen und dieser Radialebene, wobei diese Radialebene senkrecht zur Werkzeugdrehachse angeordnet ist, der Winkel α eingeschlossen. Vorzugsweise ist der Winkel α aus einem bestimmten Bereich ausgewählt, wobei der Winkel α vorzugsweise gleich oder kleiner ist als 90°, bevorzugt kleiner ist als 80° und besonders bevorzugt kleiner ist als 75°, weiter vorzugsweise ist der Winkel α größer als 0°, bevorzugt größer als 45° und besonders bevorzugt größere als 60°. Weiter vorzugsweise liegt der Winkel α in einem Bereich zwischen 62,5° und 72,5°. Vorzugsweise wird der Winkel α aufgrund der Bauteileigenschaften (insbesondere Geometrie, Wandstärke, E-Modul, Festigkeit und dergleichen) der Werkzeugeinrichtung im Bereich der Anschlusseinrichtung oder bevorzugt aufgrund der auftretenden Kräfte, in dem zuvor genannten Bereich, gewählt. Insbesondere durch die zuvor beschriebene Auswahl des Winkels α aus dem genannten Bereich ist einerseits eine stabile Anschlusseinrichtung und andererseits eine gleichmäßige Einleitung der Antriebskräfte in die Werkzeugeinrichtung erreichbar. Es ist in der Regel zu bevorzugen, den Winkel α kleiner als 70° zu wählen, da dann die Gefahr des Verklemmens geringer ist. Dabei ist der Begriff "Verklemmen" derart aufzufassen, dass die Werkzeugeinrichtung nicht planmäßig aus der Werkzeugmaschine entfernbar ist, also insbesondere nicht ohne zusätzliche Krafteinwirkung. Diesem "Verklemmen" ähnliche Effekte sind in der Mechanik insbesondere als Selbsthemmung bekannt. Vorteilhaft führt ein aus dem genannten Bereich (α >= 70°) gewählter Winkel α zu einem besonders geringen Bauraumbedarf. Weiter vorteilhaft kann durch kleinere Winkel α (α < 70°) diese Neigung zum Verklemmen der Werkzeugeinrichtung verringert werden. Als besonders bevorzugter Bereich für den Winkel α hat sich der Bereich um 60° (+/-5°) gezeigt, da hierdurch ein relativ geringer Bauraumbedarf erreichbar ist und ein ungewolltes Verklemmen der Werkzeugeinrichtung verringert oder vermieden werden kann.

In einer bevorzugten Ausführungsform ist zwischen einer dieser Tangentialebenen und dieser Axialebene, wobei in dieser Axialebene die Werkzeugdrehachse liegt, der Winkel β eingeschlossen. Vorzugsweise ist der Winkel β aus einem bestimmten Bereich ausgewählt, wobei der Winkel β vorzugsweise gleich oder kleiner ist als 90°, bevorzugt kleiner ist als 70° und besonders bevorzugt kleiner ist als 65° und weiter vorzugsweise ist der Winkel β größer als 0°, bevorzugt größer als 15° und besonders bevorzugt größer als 30°. Weiter vorzugsweise ist der Winkel β im Wesentlichen 30°, 45° oder 60°. Weiter vorzugsweise weicht der Winkel β nur geringfügig von einem der zuvor genannten drei Winkelwerte ab, wobei unter geringfügig vorzugsweise ein Bereich von vorzugsweise +/-7,5°, vorzugsweise +/- 5° und besonders bevorzugt von +/- 2,5° zu verstehen ist. Insbesondere durch die beschriebene Wahl des Winkels β aus dem genannten Bereich ist eine besonders stabile Werkzeugeinrichtung und damit eine gleichmäßige Drehmomenteinleitung von der Werkzeugmaschine in die Werkzeugeinrichtung erreichbar. Das übertragbare Drehmoment steigt insbesondere mit abnehmenden Winkel β, vorzugsweise wird der Winkel β, insbesondere für Auslegungen bei welchen ein hohes übertragbares Drehmoment im Vordergrund steht, aus einem Bereich gewählt für den gilt 0° < β < 30°.

Der Bauraumbedarf nimmt insbesondere mit steigendem Winkel β ab, vorzugsweise wird der Winkel β, insbesondere bei Auslegungen für welche ein geringer Bauraumbedarf im Vordergrund steht, aus einem Bereich gewählt für den gilt 60° < β < 90°. In einer besonders bevorzugten Ausführungsform, bei welcher insbesondere ein großes Drehmoment übertragbar ist und ein geringer Bauraumbedarf entsteht, beträgt der Winkel β im Wesentlichen 60°.

In einer bevorzugten Ausführungsform weist die Werkzeugeinrichtung eine gerade Anzahl von Antriebsflächenbereichen auf. Vorzugsweise weist die Werkzeugeinrichtung 4 oder mehr, bevorzugt 8 oder mehr und besonders bevorzugt 16 oder mehr Antriebsflächenbereiche auf. Besonders bevorzugt ist eine Anzahl von 24 Antriebsflächenbereichen. Weiter vorzugsweise weist die Werkzeugeinrichtung 64 oder weniger, bevorzugt 48 oder weniger und besonders bevorzugt 32 oder weniger Antriebsflächenbereiche auf. Weiter vorzugsweise weist die Werkzeugeinrichtung eine ungerade Anzahl an Antriebsflächenbereichen auf. Vorzugsweise ist die Anzahl der Antriebsflächenbereiche von der Größe der Anschlusseinrichtung der Werkzeugeinrichtung abhängig. Weiter vorzugsweise können große Werkzeugeinrichtungen mit einer dementsprechend großen Anschlusseinrichtung auch größere Anzahlen von Antriebsflächenbereichen aufweisen als die hier angegebene. Dabei ist unter einer großen Werkzeugeinrichtung insbesondere eine Werkzeugeinrichtung zu verstehen, bei welcher der Anschlussbereich im Wesentlichen einen Durchmesser von mehr als 50 mm oder mehr mm aufweist. Insbesondere durch die gerade Anzahl von Antriebsflächenbereichen können die Antriebskräfte von der Werkzeugmaschine paarweise auf die Werkzeugeinrichtung übertragen werden. Dabei hat sich gezeigt, dass insbesondere durch diese paarweise Einleitung der Antriebskräfte in die Werkzeugeinrichtung eine besonders langlebige und damit verbesserte Werkzeugeinrichtung erreichbar ist.

In einer bevorzugten Ausführungsform sind die Antriebsflächenbereiche im Wesentlichen sternartig angeordnet. Vorzugsweise sind die Antriebsflächenbereiche im Wesentlichen sternartig um die Werkzeugdrehachse angeordnet. Weiter vorzugsweise wird durch die Antriebsflächenbereiche ein dreidimensionaler Körper beschrieben, welcher geschnitten mit einer zur Werkzeugdrehachse orthogonalen Ebene die Grundfläche eines sternförmigen Polygons aufweist.

Unter dem Begriff Polygon wird im Sinne der vorliegenden Erfindung nicht nur die mathematisch exakte Form mit recht- stumpf- oder spitzwinkeligen Ecken verstanden, sondern auch eine Form, bei der die Ecken abgerundet sind.

Weiter vorzugsweise erscheinen diese sternartig angeordneten Antriebsflächenbereiche ähnlich einer Zahnwelle einer herkömmlichen Welle-Nabe-Verbindung, wobei diese Welle durch die doppelte Neigung der Antriebsflächenbereiche eine kegelige Grundform aufweist. Insbesondere durch die sternförmige Anordnung dieser Antriebsflächenbereiche ist es ermöglicht, eine Vielzahl von Antriebsflächenbereichen auf kleinem Bauraum anzuordnen und so große Antriebskräfte von der Werkzeugmaschine sicher auf die Werkzeugeinrichtung zu übertragen.

Eine Baureihe von erfindungsgemäßen Werkzeugeinrichtungen weist wenigstens zwei dieser Werkzeugeinrichtungen auf. Dabei weist eine solche Werkzeugeinrichtung insbesondere eine Bezugsebene auf, diese Bezugsebene ist senkrecht zur Werkzeugdrehachse angeordnet. Diese Bezugsebene weist wenigstens einen Referenzdurchmesser oder ein anderes Referenzlängenmaß dieser Antriebsflächenbereiche auf. Dabei liegt ein erster Abstand Δ einer ersten Oberfläche dieses Deckflächenabschnitts zu dieser Bezugsebene für unterschiedliche Werkzeugeinrichtungen einer Baureihe zwischen einem ersten unteren Grenzmaß und einem zweiten oberen Grenzmaß.

Im Sinne der Erfindung ist unter einer Bezugsebene eine Ebene zu verstehen, deren Lage sich in der axialen Richtung der Werkzeugdrehachse dadurch bestimmt, dass diese den gleichen Referenzdurchmesser für ein erstes und wenigstens ein weiteres Werkzeug dieser Baureihe enthält. Dabei kann sich die axiale Position dieser Bezugsebene in axialer Richtung aufgrund der doppelten Neigung der Antriebsflächenbereiche von einem ersten und wenigstens einem zweiten Werkzeug dieser Baureihe unterscheiden. Durch diese Bezugsebene wird insbesondere die axiale Lage des Referenzdurchmessers für eine Werkzeugeinrichtung bestimmt. Dadurch ergibt sich insbesondere in axialer Richtung ein fester Bezugspunkt für mehrere Werkzeugeinrichtungen einer gemeinsamen Baureihe. Bildlich gesprochen kann dieses Vorgehen insbesondere so verstanden werden, dass ein gedachter Ring (Referenzdurchmesser, Referenzlängenmaß) in axialer Richtung auf den Antriebsflächenbereich aufgefädelt wird, und dieser definiert eine bestimmte axiale Position, welche sich bei unterschiedlichen Werkzeugeinrichtungen unterscheiden kann. Insbesondere durch die Angabe eines unteren und eines oberen Grenzmaßes ist es ermöglicht, unvermeidbare Toleranzen bei der Herstellung der Werkzeugeinrichtung zu berücksichtigen. Vorzugsweise sind diese Grenzmaße aus einem Bereich von einigen 10tel oder einigen 100stel mm ausgewählt.

In einer bevorzugten Ausführungsform dieser Baureihe ist der Abstand Δ für wenigstens zwei unterschiedliche Werkzeugeinrichtungen dieser Baureihe im Wesentlichen konstant. Vorzugsweise ist unter konstant zu verstehen, dass der Abstand Δ der wenigstens einen ersten Werkzeugeinrichtung und der wenigstens einen zweiten Werkzeugeinrichtung oder mehrerer zweiter Werkzeugeinrichtungen innerhalb dieser Grenzmaße liegt. Insbesondere dadurch, dass der Abstand Δ sich innerhalb einer Baureihe von Werkzeugen in einem schmalen Toleranzband bewegt, ist es ermöglicht, dass die Werkzeugeinrichtungen einer Baureihe im Wesentlichen in axialer Richtung gleich positioniert werden und damit eine sichere Drehmoment Einleitung in diese zu gewährleisten.

In einer bevorzugten Ausführungsform einer Baureihe von wenigstens zwei Werkzeugeinrichtungen weisen wenigstens zwei Werkzeugeinrichtungen dieser Baureihe unterschiedliche mittlere Wandstärken t bzw. t₁ auf. Insbesondere durch Werkzeugeinrichtungen mit unterschiedlichen Wandstärken ist es ermöglicht, die Werkzeugeinrichtungen belastungsgerecht zu gestalten, denn auf Werkzeuge, welche für unterschiedliche Einsatzwecke vorgesehen sind, beispielsweise Sägen oder Schleifen, wirken unterschiedliche Kräfte ein und diesen unterschiedlichen Kräften kann insbesondere mit unterschiedlichen Wandstärken Rechnung getragen werden.

In einer bevorzugten Ausführungsform weist eine Baureihe wenigstens zwei Werkzeugeinrichtungen auf, welche einen, bezüglich seiner Position zur Werkzeugdrehachse und diesen Antriebsflächen, im Wesentlichen gleich angeordneten Kodierungsbereich aufweisen. Weiter vorzugsweise weist jede Werkzeugeinrichtung einen derartigen Kodierungsbereich und bevorzugt ist jede dieser Werkzeugeinrichtungen durch wenigstens einen Anwendungsparameter, wie insbesondere eine bevorzugte Antriebsleistung, gekennzeichnet. Weiter vorzugsweise kann ein derartiger Anwendungsparameter auch die Art des Werkzeugs, die Art des Herstellers oder andere Parameter der Werkzeugmaschine berücksichtigen oder weiter vorzugsweise eine zum Antrieb der Werkzeugeinrichtung notwendige Leistung berücksichtigen. Vorzugsweise weist dieser Kodierungsbereich wenigstens eine Kodierungseinrichtung auf. Bevorzugt ist diese Kodierungseinrichtung für wenigstens einen dieser Anwendungsparameter charakteristisch. Insbesondere durch die beschriebene Ausgestaltung des Kodierungsbereichs ist es ermöglicht, unterschiedliche Werkzeuge einer Baureihe unterschiedlichen Anwendungsbereichen vorzubehalten und damit einer Überlastung der Werkzeugeinrichtungen von vornherein zu begegnen.

In einer bevorzugten Ausführungsform einer Baureihe von wenigstens zwei Werkzeugeinrichtungen weist wenigstens eine erste Werkzeugeinrichtung eine erste Kodierungseinrichtung auf. Vorzugsweise ist diese erste Kodierungseinrichtung dafür vorgesehen, mit einem ersten Kodierungselement, welches vorzugsweise an einer Werkzeugmaschine angeordnet ist, zusammenzuwirken. Weiter vorzugsweise weist wenigstens eine zweite Werkzeugeinrichtung dieser Baureihe eine zweite Kodierungseinrichtung auf. Weiter vorzugsweise ist diese zweite Kodierungseinrichtung dafür vorgesehen, mit einem zweiten Kodierungselement zusammenzuwirken. Vorzugsweise ist ein erstes Kodierungselement an einer ersten Werkzeugmaschine angeordnet und weiter vorzugsweise ist dieses zweite Kodierungselement an einer zweiten Werkzeugmaschine angeordnet. Vorzugsweise sind diese Kodierungseinrichtungen und diese Kodierungselemente so gestaltet, dass das erste Kodierungselement mit der ersten und der zweiten Kodierungseinrichtung zusammenwirken kann. Bevorzugt ist das zweite Kodierungselement so ausgestaltet, dass dieses nur mit der zweiten Kodierungseinrichtung, nicht aber mit der ersten Kodierungseinrichtung, zusammenwirken kann. Insbesondere durch diese Ausgestaltung der Kodierungseinrichtungen ist es ermöglicht, bestimmte Werkzeuge bestimmten Werkzeugmaschinen vorzubehalten. Dabei kann einerseits erreicht werden, dass insbesondere eine Werkzeugeinrichtung, welche einen Anschlussbereich aufweist, welcher für kleine Antriebskräfte vorgesehen ist, nicht an einer Werkzeugmaschine aufgenommen wird, welche Antriebskräfte bereitstellt, die diesen Anschlussbereich der Werkzeugeinrichtung beschädigen können. Andererseits kann erreicht werden, dass Werkzeugeinrichtungen welche hohe Antriebskräfte erfordern oder ein hohes Trägheitsmoment aufweisen nicht an einer Werkzeugmaschine aufgenommen werden können, welche hierfür nicht eingerichtet ist. Somit kann einer Beschädigung der Werkzeugmaschine vorgebeugt werden.

In einer bevorzugten Ausführungsform der Baureihe von wenigstens zwei Werkzeugeinrichtungen ist die Form einer Grundfläche wenigstens einer, vorzugsweise aller, Kodierungseinrichtungen aus einer Gruppe von Formen ausgewählt. Bevorzugt weist diese Gruppe wenigstens eines der folgenden Elemente auf:
- ein Polygon mit einer Vielzahl von Ecken, vorzugsweise 3, 4, 5, 6, 7, 8 oder mehr,
- einen Kreis,
- eine Ellipse,
- einen Bogen mit variablem oder konstantem Radius oder
- eine Kombination aus mehreren der genannten Formen.

Insbesondere durch die Gestaltung der Kodierungseinrichtung kann diese auf die jeweiligen Erfordernisse an der Werkzeugeinrichtung angepasst werden und damit ist eine verbesserte Baureihe von Werkzeugeinrichtungen erreichbar.

In einer bevorzugten Ausführungsform weist eine Baureihe von wenigstens zwei Werkzeugeinrichtungen wenigstens zwei Werkzeugeinrichtungen mit jeweils einer dieser Kodierungseinrichtungen auf, wobei diese Kodierungseinrichtungen die gleiche geometrische Form, aber eine unterschiedliche Größe aufweisen. Bevorzugt weisen alle Werkzeugeinrichtungen eine Kodierungseinrichtung mit der gleichen geometrischen Form, aber wenigstens teilweise unterschiedlichen Größen auf.

In einer bevorzugten Ausführungsform weist eine Baureihe von wenigstens zwei Werkzeugeinrichtungen wenigstens eine Werkzeugeinrichtung auf, bei welcher die Kodierungseinrichtung als gegenüber einer Kodierungsbezugsfläche erhabener Bereich ausgeführt ist. Vorzugsweise ist als eine Kodierungsbezugsfläche eine senkrechte Ebene zur Werkzeugdrehachse zu verstehen. Weiter vorzugsweise ist diese Kodierungsbezugsfläche im Wesentlichen im Bereich des Deckflächenabschnitts angeordnet oder fällt mit diesem zusammen. Weiter vorzugsweise weist diese Baureihe eine zweite Werkzeugeinrichtung mit einem zweiten erhabenen Kodierungsbereich auf. Bevorzugt ist wenigstens eine erste Erstreckung der einen Kodierungseinrichtung größer als die vergleichbare Erstreckung der zweiten Kodierungseinrichtung. Vorzugsweise ist die erste Werkzeugeinrichtung für Werkzeugmaschinen mit hoher Antriebsleistung vorgesehen und weiter vorzugsweise ist die zweite Werkzeugeinrichtung für Werkzeugmaschinen mit niedriger Antriebsleistung vorgesehen. Dabei ist unter hoher Antriebsleistung der ersten Werkzeugmaschine zu verstehen, dass diese Antriebsleistung größer ist als die Antriebsleistung der zweiten Werkzeugmaschine. Vorzugsweise ist die vergleichbare erste Erstreckung an der ersten Werkzeugeinrichtung größer als die gleiche Erstreckung der Kodierungseinrichtung an der zweiten Werkzeugeinrichtung. Damit können insbesondere Hochleistungswerkzeuge Maschinen vorbehalten werden, die für den professionellen Einsatz in Industrie- und Handwerksbetrieben vorgesehen sind (Profi-Maschinen) und Werkzeugeinrichtungen für geringere Leistungsanforderungen können sowohl an Profi-Maschinen wie auch an DIY-(Do-it-yourself-)Maschinen verwendet werden, die für den Gebrauch im privaten Bereich vorgesehen sind. Dadurch ist es insbesondere ermöglicht, die Werkzeugeinrichtungen auf die jeweilige Antriebsleistung abzustimmen, damit ist eine verbesserte Werkzeugeinrichtung erreichbar.

In einer bevorzugten Ausführungsform einer Baureihe von wenigstens zwei Werkzeugeinrichtungen ist wenigstens eine dieser Kodierungseinrichtungen als Ausnehmung ausgeführt. Vorzugsweise sind alle diese Kodierungseinrichtungen in dieser Baureihe als Ausnehmungen ausgeführt. Weiter vorzugsweise sind diese Kodierungseinrichtungen im Bereich einer Kodierungsbezugsfläche angeordnet. Bevorzugt ist wenigstens eine Erstreckung der einen Kodierungseinrichtung größer als die vergleichbare Erstreckung der anderen Kodierungseinrichtung. Insbesondere weist eine Werkzeugeinrichtung, welche für eine Profi-Maschine mit hoher Antriebsleistung vorgesehen ist, eine kleine Kodierungseinrichtung auf. Eine zweite Werkzeugeinrichtung der gleichen Baureihe, welche insbesondere für eine DIY-Maschine vorgesehen ist, weist eine gegenüber der ersten Kodierungseinrichtung große Kodierungseinrichtung auf. Dabei gilt insbesondere, dass eine Profi-Maschine gegenüber einer DIY-Maschine höhere Antriebsleistung aufweist. Das für die DIY-Maschine vorgesehene Werkzeug passt somit sowohl auf die Profi-Maschine als auch auf die DIY-Maschine, während das Profi-Werkzeug nicht auf eine DIY-Maschine montierbar ist. Dadurch wird verhindert, dass DIY-Maschinen durch Werkzeugeinrichtungen, die für höhere Antriebsleistungen vorgesehen sind, beschädigt werden. Insbesondere dadurch, dass die Kodierungseinrichtung (Ausnehmung) für die Profi-Maschine kleiner ist als die Kodierungseinrichtung für DIY-Maschine, ist für eine große Antriebsleistung eine besonders stabile Werkzeugeinrichtung erreichbar.

In einer bevorzugten Ausführungsform weist eine Baureihe von wenigstens zwei Werkzeugeinrichtungen Kodierungsbereiche auf, welche im Bereich dieses Deckflächenabschnitts angeordnet sind. Insbesondere, wenn diese Deckflächenabschnitte im Bereich einer oberen Begrenzungsebene angeordnet sind, sind die Kodierungsbereiche besonders leicht zugänglich und damit ist eine verbesserte Werkzeugeinrichtung erreichbar.

Ein Verfahren zur Herstellung einer erfindungsgemäßen Werkzeugeinrichtung weist zur Herstellung wenigstens eines Antriebsflächenbereichs einen urformenden, umformenden oder generativen Verfahrensschritt auf. Vorzugsweise weist das Verfahren zur Herstellung wenigstens eines Antriebsflächenbereichs eine Kombination aus mehreren der zuvor genannten Verfahrensschritte auf. Dabei sind die Verfahren zur Herstellung wenigstens eines Antriebsflächenbereichs aus einer Gruppe von Herstellungsverfahren ausgewählt, welche wenigstens folgende Herstellungsverfahren umfasst:
Schmieden, Eindrücken, Walzen, Strangpressen, Falten, Tiefziehen, Sicken, Bördeln, Richten, Biegen, Recken, Stauchen, Sintern, Gießen, schichtweises Auftragen oder dergleichen.

Bevorzugt weist ein Herstellungsverfahren zur Herstellung einer Werkzeugkontur dieser Werkzeugeinrichtung einen trennenden Verfahrensschritt auf. Bevorzugt einen thermisch trennenden, besonders bevorzugt einen mechanisch trennenden Verfahrensschritt oder eine Kombination aus mehreren solcher Verfahrensschritte. Weiter vorzugsweise sind die Verfahrensschritte zur Herstellung der Werkzeugkontur aus einer Gruppe ausgewählt, welche wenigstens folgende Verfahren umfasst:
Sägen, Schleifen, Fräsen, Stanzen, Scheren, Partikelstrahl-Schneiden, Elektronenstrahl-Schneiden, Laserstrahl-Schneiden, Plasma-Schneiden, Brenn-Schneiden, funkenerosives Schneiden.

Vorzugsweise wird die Werkzeugeinrichtung, wenigstens aber deren äußere Form, vollständig oder weit überwiegend mittels eines generativen Fertigungsverfahrens erzeugt.

Insbesondere durch die genannten Fertigungsverfahren ist es ermöglicht, einen besonders genauen Antriebsflächenbereich herzustellen und somit eine gleichmäßige Einleitung der Antriebskräfte in die Werkzeugeinrichtung sicherzustellen.

Die nachfolgenden Figuren zeigen verschiedene Merkmale und Ausführungsformen der Erfindung und sind teilweise schematisiert, wobei auch eine Kombination einzelner Merkmale und Ausführungsformen über die Figuren hinaus möglich ist.

In einer bevorzugten Ausführungsform wir die Werkzeugeinrichtung so an einer Abtriebsspindel der Werkzeugmaschine aufgenommen, dass sich zwischen einer Stirnfläche dieser Abtriebsspindel und einer dieser gegenüberliegenden Oberfläche an der Werkzeugeinrichtung ein geringer Abstand ϑ ergibt, wenn die Werkzeugeinrichtung in der Werkzeugmaschine aufgenommen ist. Vorzugsweise ist dieser Abstand an wenigstens zwei, symmetrisch zur Werkzeugdrehachse liegenden, Punkten im Wesentlichen gleich, bevorzugt an mehreren Punkten. Vorzugsweise ist unter einem geringen Abstand in diesem Zusammenhang ein Abstand ϑ zu verstehen, welcher in einem Bereich liegt der vorzugsweise kleiner ist als 5 mm, bevorzugt kleiner als 2,5 mm und besonders bevorzugt kleiner als 1,5 mm und ganz besonders bevorzugt kleiner als 0,8 mm und weiter vorzugsweise größer als 0,0 mm, vorzugsweise größer als 0,25 mm und besonders bevorzugt größer als 0,5 mm. Durch einen geringen Abstand ϑ kann vorteilhaft erreicht werden, dass sich die Werkzeugeinrichtung insbesondere bei einer Überlastung an der Abtriebsspindel abstützt und ein Verkippen der Werkzeugeinrichtung vermieden oder verringert wird, weiter vorzugsweise kann erreicht werden, dass die Werkzeugeinrichtung beim Einführen in die Werkzeugmaschine insbesondere nicht in einer erheblichen Schrägstellung aufgenommen werden kann.

In einer bevorzugten Ausführungsform weist die Werkzeugeinrichtung abgesetzte Antriebsflächenbereiche auf, wobei diese abgesetzten Antriebsflächenbereiche sinngemäß wie Antriebsflächen- oder Werkzeug-Antriebsflächenbereiche zu verstehen sind und die Ausführungen zu diesen auf die abgesetzten Antriebsflächenbereiche übertragbar sind. Unter abgesetzt ist im Sinne der Erfindung vorzugsweise zu verstehen, dass diese Antriebsflächenbereiche gegenüber der Seitenwandung der Werkzeugeinrichtung abgesetzt sind. Im Gegensatz zu den nicht abgesetzten Antriebsflächenbereichen sind die Antriebsflächenbereiche vorzugsweise nicht an oder in der Seitenwandung der Werkzeugeinrichtung angeordnet, sondern bevorzugt gegenüber dieser abgesetzt, vorzugsweise radial abgesetzt, insbesondere radial von dieser beabstandet.

Eine erfindungsgemäße Verbindungseinrichtung ist zur Verbindung einer Werkzeugeinrichtung mit einer, insbesondere handgeführten, Werkzeugmaschine eingerichtet. Vorzugsweise treibt eine Antriebseinrichtung der Werkzeugmaschine die Antriebsachse, insbesondere dreh-oszillierend, an. Die Verbindungseinrichtung weist einen ersten Verbindungsbereich und einen zweiten Verbindungsbereich auf. Der erste Verbindungsbereich ist zur Verbindung der Verbindungseinrichtung mit der Werkzeugmaschine eingerichtet, wobei die Verbindungseinrichtung so mit der Werkzeugmaschine verbindbar ist, dass die Antriebsachse und eine Verbindungs-Drehachse im Wesentlichen zusammenfallen. Der zweite Verbindungsbereich ist zur Verbindung der Verbindungseinrichtung mit der Werkzeugeinrichtung eingerichtet. Dabei weist wenigstens einer dieser Verbindungsbereiche eine Anschlusseinrichtung auf, wobei die Anschlusseinrichtung wenigstens zwei Antriebsflächenbereiche aufweist.

Ferner sind wenigstens zwei im Abstand zu dieser Verbindungs-Drehachse angeordnete Antriebsflächenbereiche vorgesehen, die jeweils eine Vielzahl von Flächenpunkten aufweisen. Der Begriff "Antriebsfläche" bezeichnet eine Fläche, die zumindest teilweise mittelbar oder unmittelbar in Kontakt mit der Abtriebseinrichtung der Werkzeugmaschine stehen kann, um ein Drehmoment von der Werkzeugmaschine aufzunehmen. Der Begriff "Flächenpunkt" meint dabei Punkte auf der Oberseite dieser Antriebsflächen im Sinne der eingangs gegebenen Definition.

Für die Tangentialebenen an diesen Flächenpunkten gelten besondere geometrische Bedingungen. Tangentialebenen sind, wie in der Geometrie allgemein üblich, die Ebenen, die senkrecht zu den Normalvektoren der Flächenpunkte ausgebildet sind und die Oberfläche im Flächenpunkt berühren. Dabei meint der Begriff "Normalvektor" einen Vektor, der in diesem Flächenpunkt exakt senkrecht zur Fläche ausgerichtet ist.

Die Tangentialebenen in diesen Flächenpunkten sind in zwei Richtungen geneigt. Zum einen sind die Tangentialebenen gegenüber einer Axialebene geneigt, welche die Werkzeugdrehachse einschließt. Ferner sind diese Tangentialebenen gegenüber einer Radialebene, welche sich senkrecht zur Werkzeugdrehachse erstreckt, geneigt.

Die Anschlusseinrichtung der Verbindungseinrichtung und damit die Antriebsflächen oder Antriebsflächenbereiche dieser entsprechen damit sinngemäß vorzugsweise den Antriebsflächenbereichen der Werkzeugeinrichtung.

In einer bevorzugten Ausführungsform weist die Verbindungseinrichtung einen ersten Verbindungsbereich auf, welcher rotationssymmetrisch zur Verbindungs-Drehachse angeordnet ist. Dabei ist vorzugsweise unter der Verbindungs-Drehachse, im Sinn der Werkzeugeinrichtung, die Werkzeugdrehachse zu verstehen. Vorzugsweise wird die Verbindungseinrichtung mit ihrer Anschlusseinrichtung so an der Werkzeugmaschine aufgenommen, dass die Verbindungseinrichtung, vorzugsweise dreh-oszillierend oder rotierend, um die Verbindungs-Drehachse antreibbar ist. Weiter vorzugsweise fallen die Verbindungsdrehachse und eine erste Halteachse zusammen, sind parallel zueinander oder schief zueinander angeordnet. Durch eine derartige Anordnung des Verbindungsbereichs ist eine Verbindungseinrichtung insbesondere mit geringen Unwuchten darstellbar.

In einer bevorzugten Ausführungsform ist der zweite Verbindungsbereich rotationsunsymmetrisch zur Verbindungs-Drehachse angeordnet. Durch eine derartige Anordnung kann der Verbindungsbereich, insbesondere bei geringer Baugröße, in einem Bereich geringer Beanspruchung angeordnet werden.

In einer bevorzugten Ausführungsform ist der zweite Verbindungsbereich rotationssymmetrisch zur Verbindungsdrehachse angeordnet. Durch eine derartige Anordnung ist eine Werkzeugeinrichtung an der Verbindungseinrichtung derart aufnehmbar, dass die Rotationsachse dieser Werkzeugeinrichtung und die Verbindungs-Drehachse im Wesentlichen miteinander zusammenfallen und so geringe Unwuchten entstehen.

In einer bevorzugten Ausführungsform weist die Verbindungseinrichtung eine erste Halteeinrichtung auf. Vorzugsweise ist diese erste Halteeinrichtung zum Zusammenwirken mit wenigstens diesem ersten Verbindungsbereich und der Werkzeugmaschine eingerichtet. Vorzugsweise weist eine Halteinrichtung eine Schraubeneinrichtung, weiter bevorzugt eine Haken-, Schnapphaken oder besonders bevorzugt eine Rasteinrichtung auf.

Insbesondere mittels einer Halteeinrichtung mit Schraubeinrichtung ist eine besonders einfache Aufnahme der Verbindungseinrichtung an der Werkzeugmaschine erreichbar.

In einer bevorzugten Ausführungsform weist die Verbindungseinrichtung wenigstens eine zweite Halteeinrichtung auf. Vorzugsweise ist diese zweite Halteeinrichtung zum Zusammenwirken mit diesem zweiten Verbindungsbereich und einer Werkzeugeinrichtung eingerichtet. Vorzugsweise wird diese Werkzeugeinrichtung stoffschlüssig, bevorzugt formschlüssig und besonders bevorzugt kraftschlüssig oder in einer Kombination aus den genannten Arten an der Verbindungseinrichtung aufgenommen. Vorzugsweise weist die zweite Halteeinrichtung eine Schraubeinrichtung, weiter bevorzugt eine Haken- oder Schnapphakeneinrichtung und besonders bevorzugt eine Rasteinrichtung auf.

In einer bevorzugten Ausführungsform weist die erste Halteeinrichtung eine erste Halteachse auf. Dabei ist im Sinn der Erfindung unter der ersten Halteachse die Achse zu verstehen, entlang welcher die Wirkrichtung einer Haltekraft verläuft, welche durch diese Halteeinrichtung aufbringbar ist. Vorzugsweise ist bei einer Schraubeinrichtung deren Symmetrielinie als Halteachse zu verstehen. Weiter weist die zweite Halteeinrichtung eine zweite Halteachse auf, wobei vorzugsweise die zweite Halteachse sinngemäß der ersten Halteachse entspricht. Vorzugsweise sind diese erste und diese zweite Halteachse im Wesentlichen parallel, insbesondere kongruent, zueinander angeordnet. Vorzugsweise fällt die Verbindungs-Drehachse mit der ersten Halteachse zusammen. Dabei kann im Sinn der Erfindung kongruent als koaxial aufgefasst werden. Durch eine derartige Anordnung der Halteeinrichtung ist es insbesondere erreichbar, dass die Verbindungseinrichtung an der Werkzeugmaschine und die Werkzeugeinrichtung an der Verbindungseinrichtung besonders einfach, insbesondere in einem Arbeitsgang, aufgenommen werden können.

In einer bevorzugten Ausführungsform weist die erste Halteeinrichtung eine erste Halteachse auf und die zweite Halteeinrichtung eine zweite Halteachse. Vorzugsweise sind die erste und die zweite Halteachse schief, insbesondere windschief, zueinander angeordnet sind. Dabei kann im Sinne der Erfindung unter windschief verstanden werden, dass die beiden Halteachsen einerseits nicht parallel zueinander sind und sich andererseits im Raum nicht schneiden. Durch eine derartige Anordnung ist eine besonders belastungsgerechte Gestaltung der Verbindungseinrichtung erreichbar.

**Dabei zeigt**
- Fig. 1: eine Seitenansicht (Fig. 1a) und eine Draufsicht (Fig. 1b) einer Werkzeugeinrichtung mit zwei Antriebsflächenbereichen,
- Fig. 2: eine Seitenansicht mehrerer Antriebsflächenbereiche, welche sich jeweils zwischen einer oberen und einer unteren Begrenzungsebene erstrecken,
- Fig. 3: eine Seitenansicht mehrerer Antriebsflächenbereiche, welche sich zwischen einer gemeinsamen oberen und einer gemeinsamen unteren Begrenzungsebene erstrecken,
- Fig. 4: eine Schnittdarstellung eines Ausschnitts der Werkzeugeinrichtung,
- Fig. 5: eine Draufsicht (Fig. 5a) und eine Seitenansicht (Fig. 5b) zweier aneinanderstoßend angeordnete Antriebsflächenbereiche,
- Fig. 6: eine Draufsicht (Fig. 6a) und eine Seitenansicht (Fig. 6b) mehrere aneinanderstoßend angeordnete Antriebsflächenbereiche, wobei diese geschlossen umlaufend um die Werkzeugdrehachse angeordnet sind,
- Fig. 7: eine Schnittdarstellung eines Ausschnitts einer Werkzeugeinrichtung mit Deckflächenabschnitt,
- Fig. 8: eine Draufsicht (Fig. 8a) und eine Seitenansicht (Fig. 8b) einer Werkzeugeinrichtung mit Arbeitsbereich, Verbindungsbereich und Anschlussbereich,
- Fig. 9: eine Schnittdarstellung der Werkzeugeinrichtung mit einer Tangentialebene an einen Flächenpunkt des Antriebsbereichs mit dem Neigungswinkel α,
- Fig.10: eine Draufsicht auf einen Teilbereich der Werkzeugeinrichtung mit einer Tangentialebene an einen Flächenpunkt des Antriebsbereichs und den Neigungswinkel β,
- Fig. 11: eine Schnittdarstellung (Fig. 11a) und eine Draufsicht (Fig. 11b) einer Werkzeugeinrichtung mit einer Bezugsebene und einer Kodierungseinrichtung,
- Fig. 12: eine Schnittdarstellung (Fig. 12a) und eine Draufsicht (Fig. 12b) einer Werkzeugeinrichtung der gleichen Baureihe, wie in Fig.11 dargestellt, jedoch mit anderer Kodierungseinrichtung,
- Fig.13: zwei Schnittdarstellungen von unterschiedlichen Arten von Kodierungseinrichtungen der Werkzeugeinrichtung,
- Fig.14: perspektivische Ansichten von unterschiedlich gekrümmten Antriebsflächenbereichen,
- Fig.15: eine Seitenansicht einer Werkzeugmaschine mit Werkzeugeinrichtung,
- Fig.16: eine Draufsicht eines Bereichs der Werkzeugeinrichtung,
- Fig.17: eine Schnittdarstellung eines Bereichs der Werkzeugeinrichtung,
- Fig.18: eine Schnittdarstellung eines Bereichs der Abtriebsspindel und der Werkzeugeinrichtung, welche in einer Werkzeugmaschine aufgenommen ist,
- Fig.19: jeweils eine Schnittdarstellung (Fig. 19 a/b) und eine Draufsichten (Fig. 19 c/d) von zwei Ausführungsformen von Werkzeugeinrichtungen, mit einem abgesetzten Antriebsflächenbereich,
- Fig.20: eine Schnittdarstellung (Fig. 20a) und eine Draufsicht (Fig. 20b) einer weiteren Werkzeugeinrichtung mit abgesetztem Antriebsflächenbereich,
- Fig.21: eine Schnittdarstellung (Fig. 21a) und eine Draufsicht (Fig. 21b) einer Werkzeugeinrichtung mit erhabenem Antriebsflächenbereich,
- Fig.22: eine Schnittdarstellung einer Werkzeugeinrichtung, der Abtriebsspindel und einer Verbindungseinrichtung mit einem ersten und einem zweiten Verbindungsbereich,
- Fig.23: eine Schnittdarstellung einer Werkzeugeinrichtung, der Abtriebsspindel und einer weiteren Ausführungsform einer Verbindungseinrichtung,
- Fig.24: eine Schnittdarstellung einer weiteren Ausführungsform einer Verbindungseinrichtung, hier mit reibschlüssiger Drehmomentübertragung von der Verbindungseirichtung auf die Werkzeugeinrichtung,
- Fig.25: zwei Schnittdarstellungen von weiteren Ausführungsformen der Verbindungseinrichtung mit formschlüssiger Drehmomentübertragung (Fig. 25a, Hohlkörper; Fig. 25b, Vollkörper).

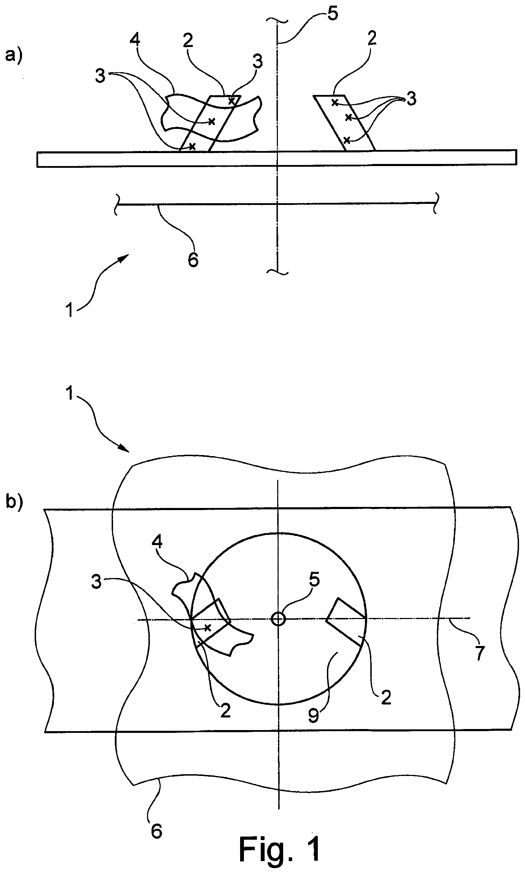

Figur 1 zeigt zwei Ansichten (Fig.1a Vorderansicht, Fig.1b Draufsicht) einer Werkzeugeinrichtung 1. Diese weist zwei Antriebsflächenbereichen 2 auf. Dabei weist ein Antriebsflächenbereich 2 mehrere Flächenpunkte 3 auf. Jedem dieser Flächenpunkte 3 in den Antriebsflächenbereichen 2 ist eine Tangentialebene 4 zuordenbar. Diese Tangentialebenen 4 sind gegenüber einer Radialebene 6 und gegengenüber einer Axialebene 7 geneigt. Dabei ist eine Radialebene 6 orthogonal zu einer Werkzeugdrehachse 5 angeordnet und eine Axialebene 7 schließt diese Werkzeugdrehachse 5 ein. Die Werkzeugeinrichtung 1 ist für einen Dreh-Oszillationsantrieb an einer handgeführten Werkzeugmaschine (nicht dargestellt) vorgesehen. Wird die Werkzeugeinrichtung 1 durch eine entsprechende Werkzeugmaschine angetrieben, so wird die Werkzeugeinrichtung 1 in eine drehoszillierende Bewegung um die Werkzeugdrehachse 5 herum versetzt. Durch die zweifache Neigung der Antriebsflächenbereiche 2 kann eine spielfreie Aufnahme der Werkzeugeinrichtung 1 in der Werkzeugmaschine erreicht werden. Dies ist besonders vorteilhaft für Säge- und Schleifarbeiten oder dergleichen, da hier wechselnde Beanspruchungen auf die Werkzeugeinrichtung 1, in Bezug auf die Werkzeugdrehachse 5, einwirken und eine spielbehaftete Verbindung zwischen der Werkzeugmaschine und der Werkzeugeinrichtung 1 zum Ausschlagen der Verbindung, insbesondere also zu einer Beschädigung der Werkzeugeinrichtung 1, führen kann.

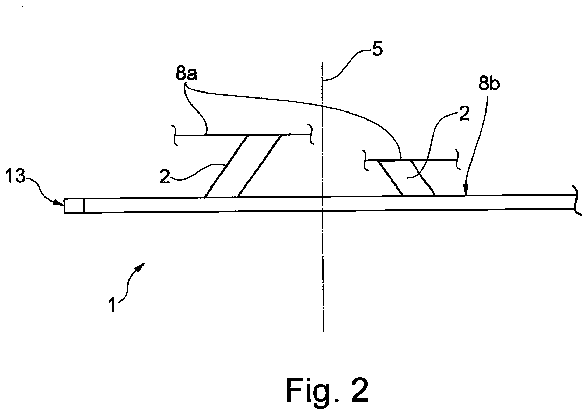

Figur 2 zeigt eine Ansicht einer Werkzeugeinrichtung 1, in welcher erkennbar ist, dass sich ein Antriebsflächenbereich 2 zwischen jeweils einer oberen und einer unteren Begrenzungsebenen 8a/8b erstreckt. Diese Begrenzungsebenen 8 sind vorzugsweise orthogonal zur Werkzeugdrehachse 5 angeordnet. Dabei erstreckt sich jeweils ein Antriebsflächenbereich 2 ausgehend von einer oberen Begrenzungsebene 8a zu einer unteren Begrenzungsebene 8b oder umgekehrt. Vorzugsweise ist hier die untere auf Höhe eines Arbeitsbereichs 13 angeordnet. Dabei ist unter einem Arbeitsbereich beispielhaft eine Sägeverzahnung eines Sägeblattes oder dergleichen zu verstehen. Dadurch, dass die untere Begrenzungsebenen 8b im Wesentlichen auf Höhe des Arbeitsbereichs 13 angeordnet ist, ist eine besonders deformationsarme Übertragung der Antriebskräfte von den Antriebsflächenbereichen 2 auf den Arbeitsbereich 13 möglich. Durch unterschiedliche Begrenzungsebenen 8 und damit unterschiedliche Erstreckungen der Antriebsflächenbereiche 2 ist eine besonders gute Anpassbarkeit an die Anforderungen der Werkzeugeinrichtung, insbesondere in Bezug auf Raumbedarf, Spielfreiheit und Drehmomentübertragung, gegeben. Vorliegend fallen die unteren Begrenzungsebenen 8b zu einer gemeinsamen unteren Begrenzungsebene 8b zusammen. Die oberen Begrenzungsebenen 8a fallen in dieser Ausführungsform nicht zusammen, es ergeben sich Antriebsflächenbereiche 2 mit unterschiedlicher Höhe.

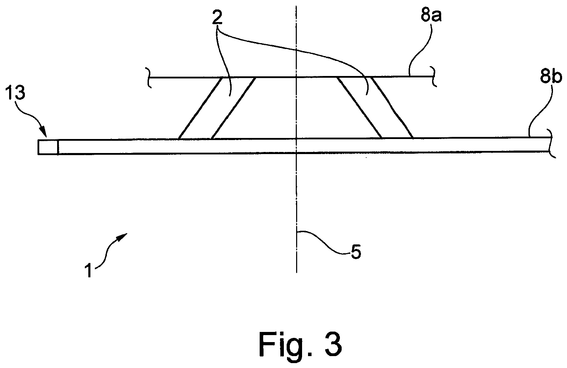

Figur 3 zeigt eine Ansicht einer Werkzeugeinrichtung 1, in welcher sämtliche Antriebsflächenbereiche 2 von einer einzigen unteren Begrenzungsebene 8b und einer einzigen oberen Begrenzungsebene 8a begrenzt sind. Diese Begrenzungsebenen 8 sind orthogonal zur (fiktiven, geometrischen) Werkzeugdrehachse 5 angeordnet. Die untere Begrenzungsebene 8b ist im Wesentlichen auf Höhe des Arbeitsbereichs 13 angeordnet. Die obere Begrenzungsebene 8a ist in Richtung der Werkzeugdrehachse 5 von der unteren Begrenzungsebene 8b beabstandet. Erstrecken sich sämtliche Antriebsflächenbereiche 2 zwischen einer einzigen oberen Begrenzungsebene 8a und einer einzigen unteren Begrenzungsebene 8b, so ist eine besonders einfache Herstellung der Werkzeugeinrichtung ermöglicht und weiter eine besonders gleichmäßige Übertragung der Antriebskräfte von der Werkzeugmaschine (nicht dargestellt) auf die Werkzeugeinrichtung 1.

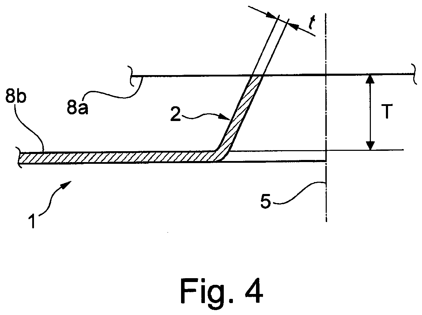

Figur 4 zeigt einen Teil einer Werkzeugeinrichtung 1 in Schnittdarstellung. Die Werkzeugeinrichtung weist eine (fiktive, geometrische) Werkzeugdrehachse 5 auf. Um diese ist die Werkzeugeinrichtung 1 dreh-oszillierend antreibbar. Der Antriebsflächenbereich 2 ist zur Werkzeugdrehachse 5 beabstandet angeordnet und erstreckt sich in Richtung der Werkzeugdrehachse 5 zwischen einer unteren 8b und einer oberen 8a Begrenzungsebene. Diese obere 8a und diese untere 8b Begrenzungsebene sind um den Abstand T voneinander beabstandet. Dabei ist der Abstand T von der Dicke t der Wandung, welche auch die Antriebsflächenbereiche 2 aufweist, abhängig. Durch diese Abhängigkeit wird eine besonders günstige Abhängigkeit zwischen der Steifigkeit der Antriebsflächenbereiche und deren Baugröße erreicht.

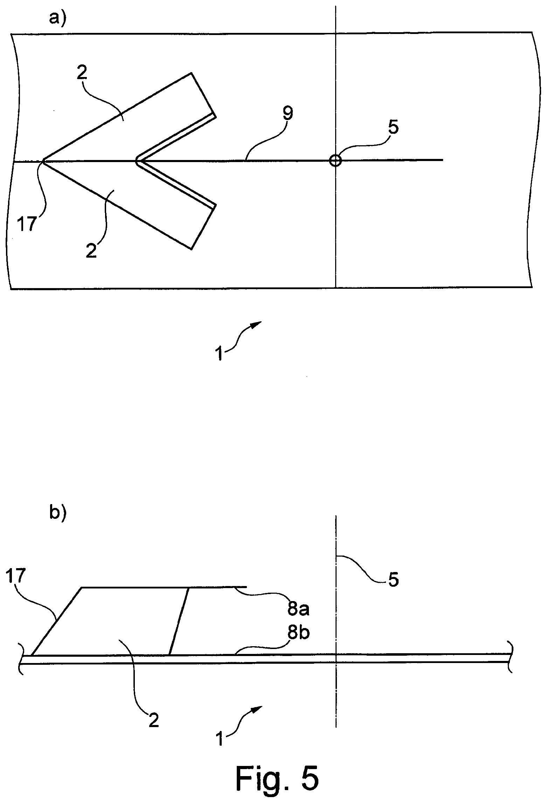

Figur 5 zeigt unterschiedliche Teilansichten (Fig. 5a, Draufsicht; Fig. 5b Vorderansicht) einer Werkzeugeinrichtung 1. Die Werkzeugeinrichtung 1 weist eine Werkzeugdrehachse 5 auf. Die Antriebsflächenbereiche 2 sind symmetrisch zu einer Symmetrieebene 9 angeordnet, dabei beinhaltet die Symmetrieebene 9 die Werkzeugdrehachse 5. Die Antriebsflächenbereiche 2 sind aneinanderstoßend angeordnet und treffen sich in einem Übergangsbereich 17. Dieser Übergangsbereich 17 ist abhängig vom Fertigungsverfahren oder von der Beanspruchung bei der Kraftübertragung auf die Werkzeugeinrichtung 1 gestaltet und kann einen Radius aufweisen. Die Antriebsflächenbereiche 2 erstrecken sich zwischen einer unteren 8b und einer oberen 8a Begrenzungsebene und sind von der Werkzeugdrehachse 5 beabstandet. Eine symmetrische und insbesondere aneinanderstoßende Anordnung von Antriebsflächenbereichen 2 ermöglicht die Gestaltung einer besonders stabilen Werkzeugeinrichtung 1, da sich die Antriebsflächenbereiche 2 gegeneinander abstützten können.

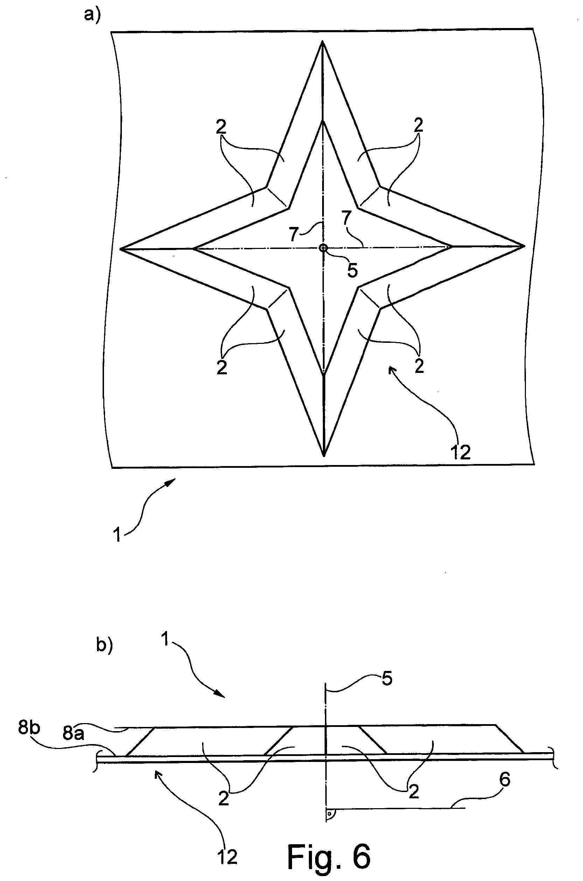

Figur 6 zeigt mehrere Teilansichten (Fig. 6a, Draufsicht; Fig. 6b Vorderansicht) einer Werkzeugeinrichtung 1. Die Werkzeugeinrichtung 1 weist eine Werkzeugdrehachse 5, sowie mehrere Antriebsflächenbereiche 2 auf, diese erstrecken sich zwischen einer oberen 8a und einer unteren 8b Begrenzungsebene. Die Antriebsflächenbereiche 2 sind jeweils aneinander anschließend angeordnet und bilden eine radial geschlossen um die Werkzeugdrehachse 5 umlaufende Seitenwandung. Die Antriebsflächenbereiche 2 sind jeweils gegenüber einer Radialebene 6 und den zugeordneten Axialebenen 7 geneigt. Mittels einer solche geschlossen umlaufenden Seitenwandung ist einerseits eine besonders stabile Werkzeugeinrichtung und andererseits eine besonders gleichmäßige Antriebskrafteinleitung von der Werkzeugmaschine (nicht dargestellt) auf die Werkzeugeinrichtung 1 erreichbar.

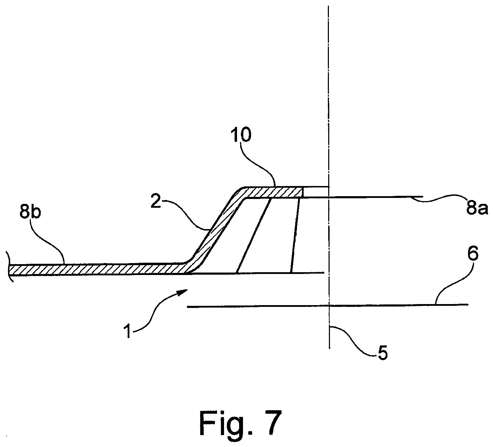

Figur 7 zeigt einen Ausschnitt einer Werkzeugeinrichtung 1 in Schnittdarstellung. Die Werkzeugeinrichtung 1 weist eine Werkzeugdrehachse 5, einen Antriebsflächenbereich 2 sowie einen Deckflächenabschnitt 10 auf. Die Werkzeugeinrichtung 1 ist um die Werkzeugdrehachse dreh-oszillierend antreibbar. Figur 7 ist entnehmbar, dass dieser Antriebsflächenbereich 2 gegenüber der Radialebene 6 geneigt ist. Der Antriebsflächenbereich 2 erstreckt sich zwischen einer unteren 8b und einer oberen Begrenzungsebene 8a. An den Antriebsflächenbereich 2 schließt sich, im Wesentlichen unmittelbar, der Deckflächenabschnitt 10 im Bereich der oberen Begrenzungsebene 8a an. Mittels eines derart angeordneten Deckflächenabschnitts 10 kann eine weitere Stabilisierung der Antriebsflächenbereiche 2 erreicht werden und es können bei gleicher Größe dieser Antriebsflächenbereiche 2 größere Antriebskräfte übertragen werden als ohne diesen Deckflächenabschnitt 10.

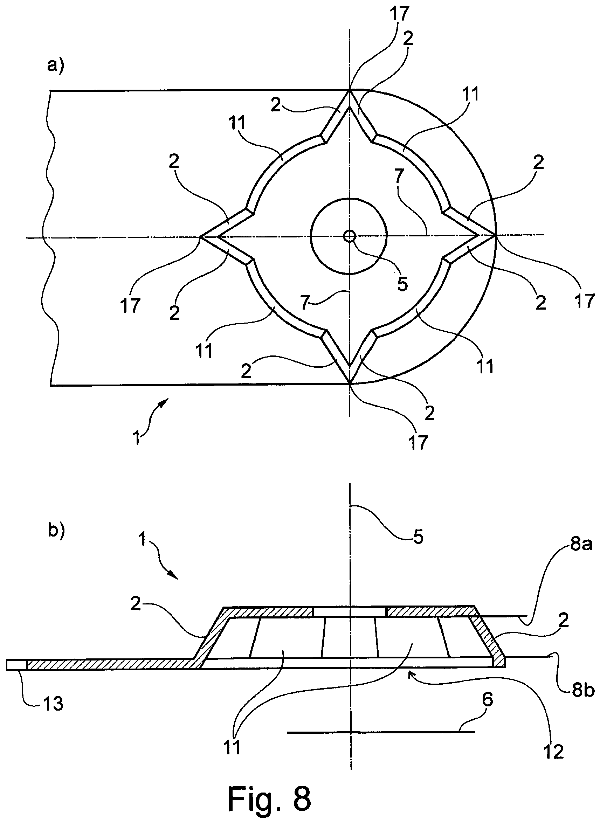

Figur 8 zeigt mehrere Teilansichten (Fig. 8a Draufsicht; Fig. 8b Vorderansicht) einer Werkzeugeinrichtung 1. Diese Werkzeugeinrichtung 1 weist eine (fiktive, geometrische) Werkzeugdrehachse 5, mehrere Antriebsflächenbereiche 2, sowie einen Deckflächenabschnitt 10 auf. Ein Arbeitsbereich 13 der Werkzeugeinrichtung 1 ist dazu vorgesehen auf ein Werkstück oder auf eine Werkstückanordnung (nicht dargestellt) einzuwirken. Dabei sind jeweils zwei Antriebsflächenbereiche 2 aneinanderstoßend angeordnet und mittels eines Verbindungsbereichs 11 mit einem weiteren Paar von Antriebsflächenbereichen 2 verbunden. Die Antriebsflächenbereiche 2 sind rotationssymmetrisch angeordnet und erstrecken sich in Richtung der Werkzeugdrehachse 5 zwischen einer oberen Begrenzungsebene 8a und einer unteren Begrenzungsebene 8b. Die Antriebsflächenbereiche 2 sind gegenüber einer Radialebene 6 und jeweils gegenüber den zugeordneten Axialebenen 7 geneigt. Mit den Verbindungsbereichen 11 bilden die Antriebsflächenbereiche 2 eine um die Werkzeugdrehachse 5 geschlossen umlaufende Seitenwandung. Mittels der dargestellten rotationssymmetrischen Anordnung der Antriebsflächenbereiche 2 kann die Werkzeugeinrichtung 1 in der Werkzeugmaschine (nicht dargestellt), eine entsprechende Gestaltung dieser vorausgesetzt, versetzt werden, damit können mit der Werkzeugeinrichtung auch schwer zugängliche Werkstücke oder Werkstückanordnungen (nicht dargestellt) bearbeitete werden.

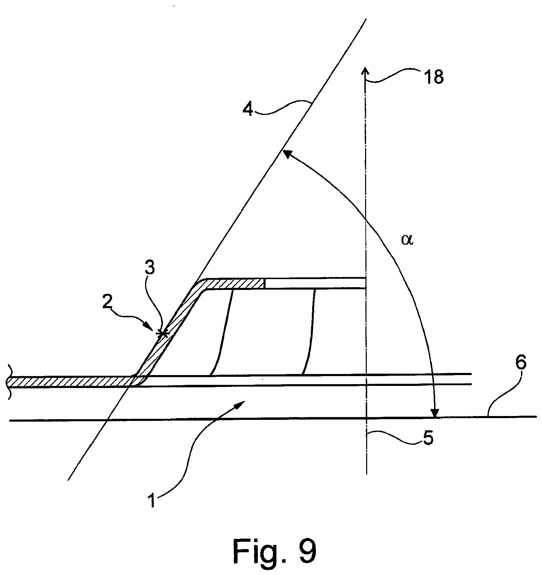

Figur 9 zeigt einen Ausschnitt einer Werkzeugeinrichtung 1 in Schnittdarstellung. Die Werkzeugeinrichtung 1 weist eine Werkzeugdrehachse 5 sowie einen Antriebsflächenbereich 2 auf. Dieser Antriebsflächenbereich 2 weist mehre Flächenpunkte 3 auf. Diesen Flächenpunkten 3, kann jeweils eine Tangentialebene 4 zugeordnet werden. Orthogonal zu der Werkzeugdrehachse 5 ist eine Radialebene 6 angeordnet. Die Radialebene 6 schließt mit der Tangentialebene 4 einen spitzen Winkel α ein. Durch diesen Winkel α und damit die Neigung der Tangentialebene 4 gegen die Radialebene 6 ist es besonders einfach ermöglicht, die Werkzeugeinrichtung 1 spielfrei an einer Werkzeugmaschine aufzunehmen, insbesondere dann, wenn die Werkzeugeinrichtung 1 mit einer Spannkraft 18 in Richtung der Werkzeugdrehachse an der Werkzeugmaschine (nicht dargestellt) gehalten wird.

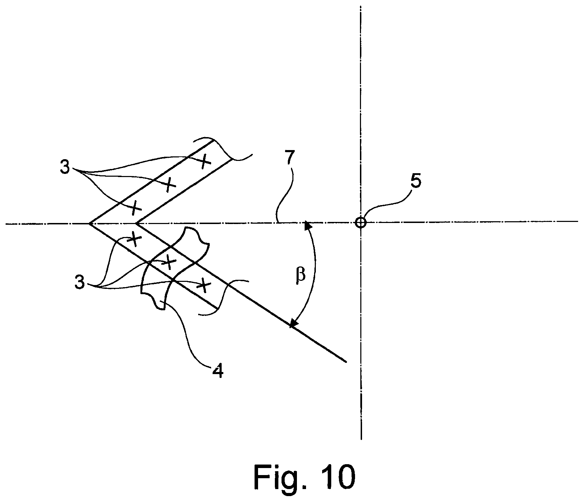

Figur 10 zeigt einen Ausschnitt einer Werkzeugeinrichtung 1 in der Draufsicht, dadurch ist die Werkzeugdrehachse 5 lediglich als Punkt erkennbar. Die Axialebene 7 beinhaltet die Werkzeugdrehachse 5 und ist in Figur 10 als Gerade erkennbar. Einem Flächenpunkt 3 eines Antriebsflächenbereichs 2 ist eine Tangentialebene 4 zuordenbar. Die Antriebsflächenbereiche 2 sind aneinanderstoßend angeordnet und von der Werkzeugdrehachse 5 radial beabstandet. Die Tangentialebene 4 schließt mit der Axialebene 7 einen spitzen Winkel β ein. Durch den Winkel β in Verbindung mit dem Winkel α ist es ermöglicht, dass sich die Werkzeugeinrichtung 1 gegenüber der Werkzeugmaschine (nicht dargestellt) zentriert, wenn diese an der Werkzeugmaschine aufgenommen wird.

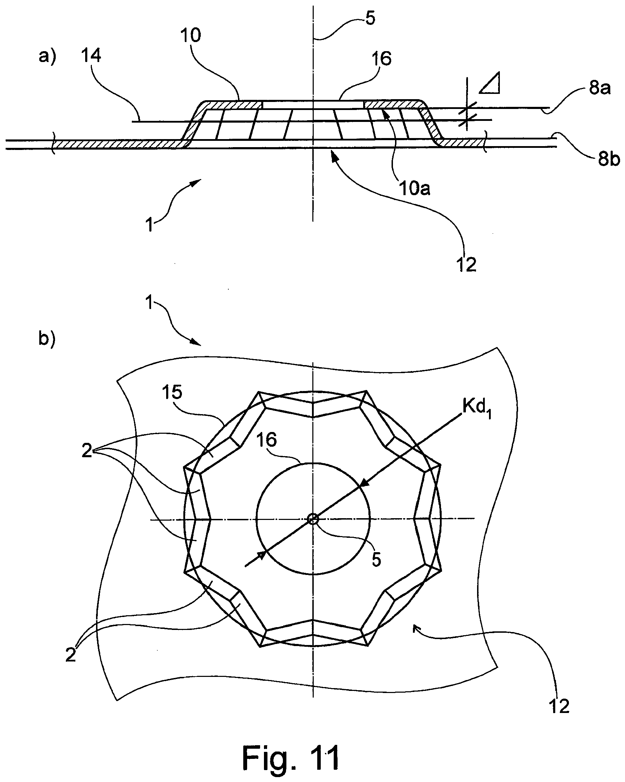

Figur 11 zeigt mehrere Ansichten (Fig. 11a, Schnittdarstellung; Fig. 11b Draufsicht) einer Werkzeugeinrichtung 1. Die Werkzeugeinrichtung 1 weist eine Werkzeugdrehachse 5 und mehrere Antriebsflächenbereiche 2, welche radial beabstandet zu dieser angeordnet sind auf. Die Antriebsflächenbereiche 2 sind im Wesentlichen eben. Weiter sind diese aneinanderstoßend angeordnet und bilden eine geschlossen um die Werkzeugdrehachse umlaufende Seitenwandung. Die Antriebsflächenbereiche 2 erstrecken sich in Richtung der Werkzeugdrehachse 5 zwischen einer oberen 8a und einer unteren 8b Begrenzungsebene. Im Bereich der oberen Begrenzungsebene 8a ist ein Deckflächenabschnitt 10 angeordnet. Der Deckflächenabschnitt 10 weist vorzugsweise eine Kodierungseinrichtung 16 auf. Die Kodierungseinrichtung 16 ist vorzugsweise als kreisrunde Ausnehmung im Bereich der Werkzeugdrehachse angeordnet. Diese kreisrunde Ausnehmung weist einen ersten Kodierungsdurchmesser Kd_1 auf. Weitere Werkzeugeinrichtungen (nicht dargestellt) der gleichen Baureihe, welcher allerdings für andere Antriebsleistungen vorgesehen sind, können weitere Kodierungsdurchmesser (Kd_2, usw.) aufweisen, die von Kd_1 unterschiedlich sind. Kd_1 kennzeichnet zum Beispiel Werkzeugeinrichtungen 1 für den professionellen Einsatz, Kd_2 (nicht dargestellt) kennzeichnet Werkzeugeinrichtungen für den Do-it-yourself (DIY) Einsatz. Weiter weist ein unterer Abschnitt des Deckflächenabschnitts 10a einen Abstand Δ zu einer Bezugsebene 14 auf. Dabei ist die Lage der Bezugsebene 14 so definiert, dass diese einen bestimmten Referenzdurchmesser 15 enthält (nomineller Außen-, Mitten-, Innendurchmesser oder dergleichen). Bei unterschiedlichen Werkzeugeinrichtungen einer Baureihe werden sich insbesondere bei unterschiedlichen Wandstärken t oder auch aufgrund unvermeidbarer Toleranzen bei der Fertigung der Werkzeugeinrichtungen unterschiedlichen Lagen, bezogen auf die Lage in Richtung der Werkzeugdrehachse 5, für nominell gleiche Referenzdurchmesser 15 ergeben. Ausgehend von dieser Lage der Bezugsebene 14 in Richtung der Werkzeugdrehachse 5 weisen die Werkzeugeinrichtungen einen weitgehend konstanten Abstand Δ des unteren Deckflächenabschnitts 10a, zu dieser Bezugsebene 14 auf. Dadurch, dass mehrere Werkzeugeinrichtungen einer Baureihe einen im Wesentlichen konstanten Abstand Δ zwischen dem unteren Deckflächenabschnitt 10a und der Bezugsebene 14 aufweisen, ist ein besonders einfaches und sicheres Aufnehmen unterschiedlicher Werkzeugeinrichtungen 1 an einer Werkzeugmaschine (nicht dargestellt) ermöglicht.

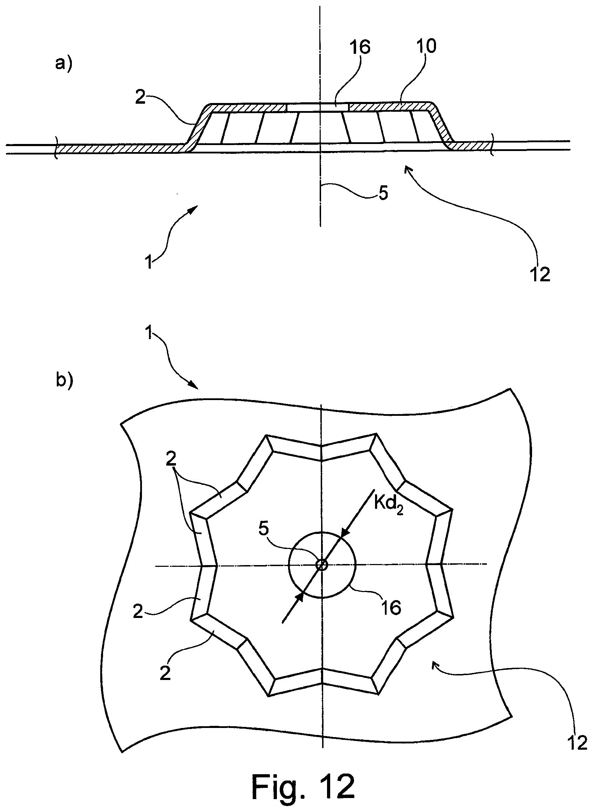

Figur 12 zeigt die gleichen Darstellungen einer Werkzeugeinrichtung 1 wie auch Figur 11. Jedoch ist in Figur 12 eine andere Werkzeugeinrichtung 1 dergleichen Baureihe der in Figur 11 dargestellten Werkzeugeinrichtung 1 dargestellt. Es wird daher nachfolgend vorwiegend auf Unterschiede zwischen der in Figur 11 und Figur 12 dargestellten Werkzeugeinrichtung 1 eingegangen. Im Deckflächenabschnitt 10 ist im Bereich der Werkzeugdrehachse 5 eine Kodierungseinrichtung 16 als eine Ausnehmung angeordnet. Diese Kodierungseinrichtung 16 weist einen Kodierungsdurchmesser Kd_2 auf, dabei ist der Kodierungsdurchmesser Kd_2 kleiner als der Kodierungsdurchmesser Kd_1 (Fig.11). Die Kodierungseinrichtung 16 ist dazu eingerichtet mit einem zweiten Kodierungselement (nicht dargestellt) zusammenzuwirken, welches an der Werkzeugmaschine angeordnet ist (nicht dargestellt). Durch eine solche Gestaltung der Kodierungseinrichtungen 16 in einer Baureihe von Werkzeugeinrichtungen ist es ermöglicht, bestimmte Werkzeugeinrichtungen 1, bestimmten Werkzeugmaschinen vorzubehalten und damit einen sicheren Betrieb dieser zu ermöglichen.

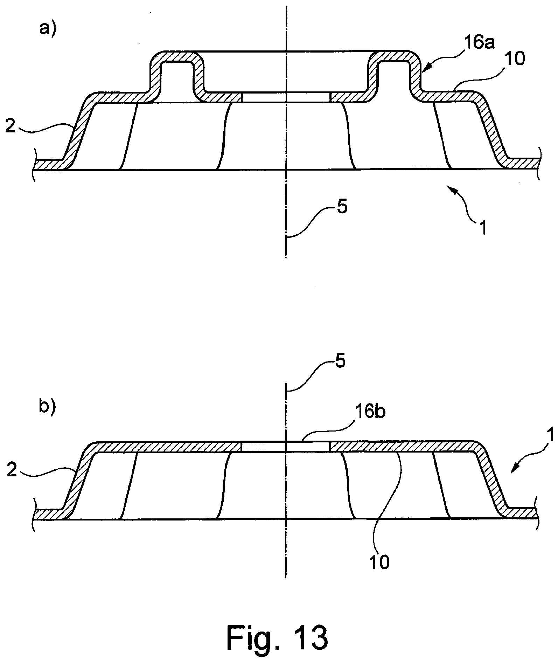

Figur 13 zeigt verschiedene Darstellungen von unterschiedlichen Werkzeugeinrichtungen 1, insbesondere in Bezug auf die Kodierungseinrichtung 16. Figur 13a zeigt einen Ausschnitt einer Werkzeugeinrichtung 1 mit einer erhabenen Kodierungseinrichtung 16a. Figur 13b zeigt eine Werkzeugeinrichtung 1 mit einer Kodierungseinrichtung 16b welche als Ausnehmung ausgeführt ist. Beiden Kodierungseinrichtungen 16a/b ist es gemein, dass diese im Bereich des Deckflächenabschnitts 10 der Werkzeugeinrichtung 1 angeordnet sind. Die Werkzeugeinrichtung 1 weist eine Vielzahl von Antriebsflächenbereiche 2 auf, diese sind zur Werkzeugdrehachse 5 beabstandet angeordnet.

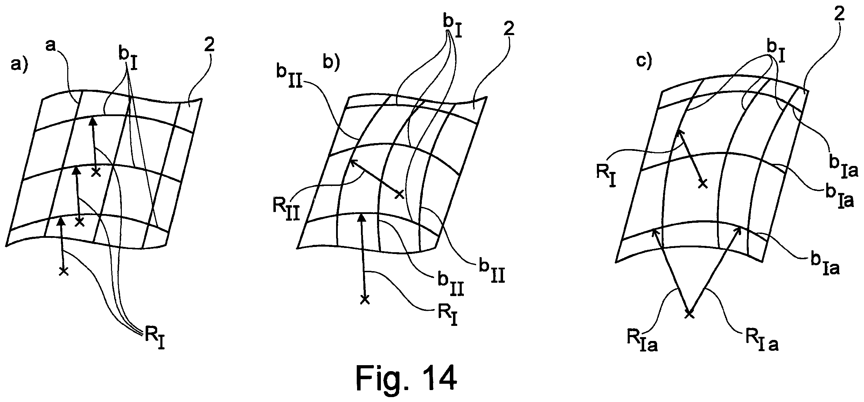

Figur 14 zeigt unterschiedliche Ausschnitte eines Antriebsflächenbereichs 2 einer Werkzeugeinrichtung. Nicht dargestellt ist ein ebener Antriebsflächenbereich, ein solcher ist auch bevorzugt möglich. Fig.14a zeigt einen einsinnig gekrümmten Abschnitt eines Antriebsflächenbereichs 2. Dieser Abschnitt des Antriebsflächenbereichs 2 ist mittels gerader Gitternetzlinien a und gekrümmter Gitternetzlinien b_{I} beschreibbar. Die gekrümmten Gitternetzlinien b_{I} weisen einen konstanten Krümmungsradius R_{I} auf. Ein derartiger Antriebsflächenbereich 2 entspricht abschnittsweise einer Zylindermantelfläche, soweit mehrere unterschiedliche Krümmungsradien R_{I} vorgesehen sind entspricht er einer Kegelmantelfläche (nicht dargestellt). Dabei kann die Größe des Krümmungsradius R_{I} so gewählt sein, dass sich der Antriebsflächenbereich 2 bei der Übertragung von Antriebskräften abschnittsweise zu einer Ebene verändert oder an die Gegenfläche (nicht dargestellt) mit welcher dieser zum Übertragen der Antriebskräfte zusammenwirkt, anpasst. Fig.14b zeigt einen Abschnitt eins Antriebsflächenbereichs 2 mit zweisinniger Krümmung. Dieser Abschnitt des Antriebsflächenbereichs 2 ist mittels gekrümmter Gitternetzlinien b_{I} und gekrümmter Gitternetzlinien b_{II} beschreibbar. Die Gitternetzlinien b_{I} weisen einen konstanten Krümmungsradius R_{I} und die Gitternetzlinien b_{II} weisen einen konstanten Krümmungsradius R_{II} auf. Ein derartiger Antriebsflächenbereich 2 entspricht, für den Sonderfall, dass der erste R_{I} und der zweite R_{II} Krümmungsradius gleich groß sind, einer Kugeloberfläche. In Fig.14b ist eine Antriebsflächenbereich 2 mit unterschiedlichen Krümmungsradien R_{I} und R_{II} dargestellt. Dabei kann die Größe der Krümmungsradien R_{I} und R_{II} so gewählt sein, dass sich der Antriebsflächenbereich 2 bei der Übertragung von Antriebskräften wenigstens abschnittsweise zu einer Ebene verändert oder an die Gegenfläche (nicht dargestellt) mit welcher dieser zum Übertragen der Antriebskräfte zusammenwirkt, anpasst. Fig.14c zeigt einen Abschnitt eins Antriebsflächenbereichs 2 mit zweisinniger Krümmung. Dieser Abschnitt des Antriebsflächenbereichs 2 ist mittels Gitternetzlinien b_{I} mit konstantem Krümmungsradius R, und Gitternetzlinien b_{Ia} mit variablem Krümmungsradius R_{Ia} beschreibbar. Bei einem derartigen Antriebsflächenbereich 2 können auch sämtliche Gitternetzlinien einen variablen Krümmungsradius aufweisen (nicht dargestellt). Die Größe der Krümmungsradien R_{Ia} und R_{II} kann so gewählt sein, dass sich der Antriebsflächenbereich 2 bei der Übertragung von Antriebskräften abschnittsweise zu einer Ebene verändert oder an die Gegenfläche (nicht dargestellt) mit welcher dieser zum Übertragen der Antriebskräfte zusammenwirkt, anpasst. In Figur 14 sind konkav gekrümmte Antriebsflächenbereiche 2 dargestellt, die dargelegten Überlegungen sind auf konvex gekrümmte Antriebsflächenbereiche entsprechend übertragbar.

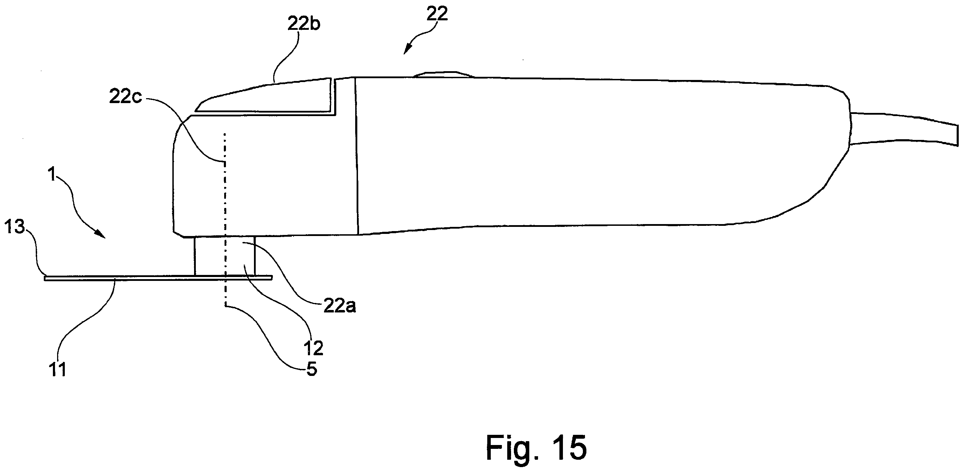

Figur 15 zeigt eine Werkzeugeinrichtung 1 welche in einer Werkzeugmaschine 22 aufgenommen ist. Die Werkzeugeinrichtung 1 weist einen Anschlusseinrichtung 12 auf, mit dieser wird es mit der Werkzeugmaschine 22 verbunden. Die Werkzeugmaschine 22 weist eine Abtriebsspindel 22a auf, diese leitet die Antriebskräfte an die Werkzeugeinrichtung 1, insbesondere deren Anschlusseinrichtung 12. Die Abtriebsspindel 22a bewegt sich um die Werkzeugmaschinen-Drehachse 22c, insbesondere dreh-oszillierend, dabei wird auch die Werkzeugeinrichtung 1 in eine ebensolche Bewegung versetzt. Die Werkzeugeinrichtung 1 weist einen Arbeitsbereich 13 auf, dieser ist dazu eingerichtet auf ein Werkstück oder eine Werkstückanordnung (nicht dargestellt) einzuwirken. Die Antriebskräfte der Werkzeugmaschine 22 werden mittels des Werkzeug-Verbindungsbereichs 11 von der Anschlusseinrichtung 12 auf den Arbeitsbereich 13 übertragen. Die Werkzeugmaschine 22 weist einen Betätigungshebel 22b auf, dieser ist dazu eingerichtet einen Wechsel der Werkzeugeinrichtung 1 zu ermöglichen.

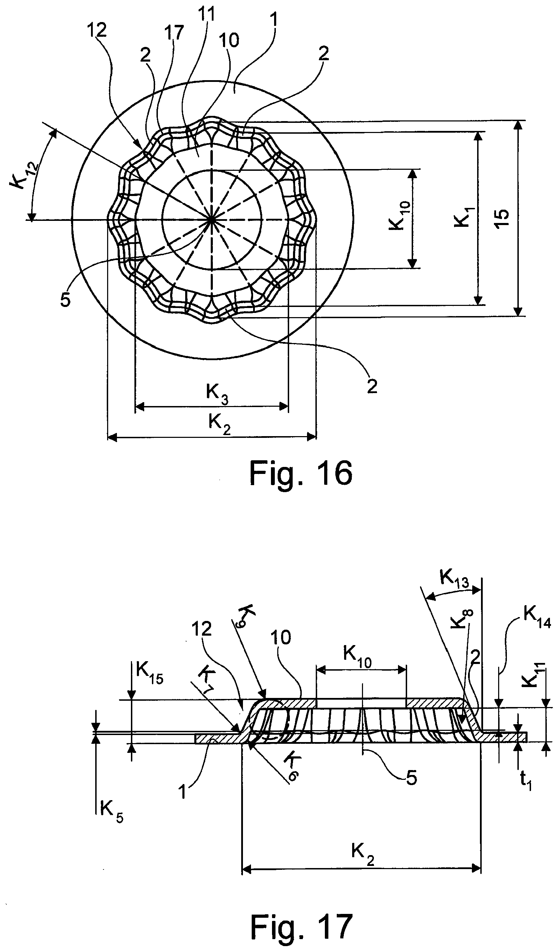

Figur 16 und Figur 17 zeigen eine Werkzeugeinrichtung 1 in unterschiedlichen Ansichten. Figur 16 zeigt eine Draufsicht und Figur 17 zeigt eine Schnittdarstellung der Seitenansicht der Werkzeugeinrichtung 1. Die dargestellte Anschlusseinrichtung 12 der Werkzeugeinrichtung 1 ist in den Figuren 16 und 17 als sternförmiges Polygon mit abgerundeten Ecken (Verbindungsbereiche 11) dargestellt, dabei lassen sich die nachfolgend dargelegten Zusammenhänge wenigstens sinngemäß auch auf andere Formen einer solchen Anschlusseinrichtung 12 übertragen.

In der Draufsicht, Figur 16, sind die abgerundeten Ecken (Verbindungsbereiche 11) des Polygons erkennbar. Ein sogenannter Arm des Polygons wird dabei durch zwei Antriebsflächenbereiche 2 und einen Verbindungsbereich 11 gebildet. Die einzelnen Arme sind jeweils um einen äquidistanten Winkel k12 gegeneinander versetzt. Vorzugsweise ergibt sich dieser, vorzugsweise äquidistante, Winkel k12 aus dem Zusammenhang: Vollkreis / (Anzahl der Arme) = k12; vorliegend 360°/12 = 30°. Vorzugsweise durch den äquidistanten Winkel k12 ist es ermöglicht, die Werkzeugeinrichtung 1 in unterschiedlichen Drehstellungen in der Werkzeugmaschine aufzunehmen, vorliegend lässt sich die Werkzeugeinrichtung in diskreten Schritten von 30° gegenüber der Werkzeugmaschine (nicht dargestellt) versetzten.

Die Werkzeugeinrichtung 1 weist in ihrem Deckflächenabschnitt 10 eine, vorzugsweise kreisrunde, Ausnehmung mit dem Durchmesser k10 auf, weiter vorzugsweise sind auch von der kreisrunden Form abweichende Formen für diese Ausnehmung möglich.

Vorzugsweise weist diese Ausnehmung im Wesentlichen eine kreisrunde Form auf und kann zusätzlich, vorzugsweise polygonartige oder bevorzugt splineartige, Ausnehmungen welche sich ausgehend von der kreisrunden Ausnehmung, vorzugsweise nach radial außen erstrecken, aufweisen. Vorzugsweise ergibt sich durch diese Ausnehmungen ein sternartiges Polygon mit vorzugsweise kreisrunden Abschnitten. Besonders vorteilhaft können derartige Ausnehmungen für Werkzeugeinrichtungen, welche insbesondere für hohe Beanspruchungen vorgesehen sind verwendet werden, insbesondere bei Tauchsägeblättern oder dergleichen.

Weiter vorzugsweise entspricht der Durchmesser k10 einem der Durchmesser kd_1 oder kd_2, für Werkzeugeinrichtungen einer Baureihe von wenigstens zwei Werkzeugen. Diese Ausnehmung im Deckflächenabschnitt 10 ist vorzugsweise dazu eingerichtet, dass die Werkzeugeinrichtung 1 an der Werkzeugmaschine gehalten wird, vorzugsweise ist diese Ausnehmung als eine Durchgangsausnehmung/-loch einer Halteeinrichtung (nicht dargestellt), insbesondere einer Schraubeinrichtung, zu verstehen. Dabei kann die Wahl des Durchmessers k10 von verschiedenen Parametern abhängen, vorzugsweise von der Dimension der Halteeinrichtung (nicht dargestellt) der Werkzeugmaschine. Diese Halteeinrichtung ist insbesondere so dimensioniert, dass die Werkzeugeinrichtung 1 sicher an der Werkzeugmaschine gehalten wird.

Die Durchmesser k2 und k3 beschreiben Außendurchmesser der Anschlusseinrichtung. In einer bevorzugten Ausführungsform ist der Außendurchmesser k2 vorzugsweise aus einem Bereich zwischen 30 mm und 36 mm gewählt, bevorzugt von 32 mm bis 34 mm, besonders bevorzugt ist der Außendurchmesser k2 im Wesentlichen 33,35 mm (+/- 0,1 mm).

In einer bevorzugten Ausführungsform ist der Außendurchmesser k3 vorzugsweise aus einem Bereich zwischen 22 mm und 27 mm gewählt, bevorzugt von 24 mm bis 26 mm, besonders bevorzugt ist der Außendurchmesser k3 im Wesentlichen 25 mm (+/-0,1 mm).

Der Abstand k1 definiert den Abstand von zwei Antriebsflächenbereichen 2, welche sich in dieser Ansicht parallel gegenüber liegen (in einer räumlichen Betrachtung sind die Antriebsflächenbereiche 2 noch zueinander geneigt). Verglichen mit einem Schraubenkopf (beispielsweise einem Sechs- oder Vierkant) entspricht der Abstand k1 einer Schlüsselweite.

In einer bevorzugten Ausführungsform ist diese Schlüsselweite k1 vorzugsweise aus einem Bereich zwischen 26 mm und 30 mm ausgewählt, bevorzugt aus einem Bereich zwischen 27 mm und 29 mm, besonders bevorzugt ist die Schlüsselweite im Wesentlichen 28,4 mm (+/- 0,1 mm).

Der Durchmesser 15 gibt einen Referenzdurchmesser für die Anschlusseinrichtung 12 der Werkzeugeinrichtung 1 an. In einer bevorzugten Ausführungsform ist der Referenzdurchmesser 15 vorzugsweise aus einem Bereich zwischen 31 mm und 33 mm gewählt, bevorzugt aus einem Bereich zwischen 31,5 mm und 32,5 mm und besonders bevorzugt ist der Referenzdurchmesser 15 im Wesentlichen 32 mm (+/- 0,1 mm). Dabei ist der Referenzdurchmesser 15 weiter vorzugsweise dadurch gekennzeichnet, dass dieser bei wenigstens zwei unterschiedlichen Werkzeugeinrichtungen einer Baureihe von Werkzeugen - betrachtet in Richtung der Werkzeugdrehachse 5 - im Wesentlichen auf der gleichen Höhe liegt (+/- 0,1 mm).

In der Schnittdarstellung (Figur 17) ist insbesondere die Querschnittfläche der Anschlusseinrichtung 12 besonders gut erkennbar. Die Werkzeugeinrichtung 1 weist im Bereich ihrer Anschlusseinrichtung 12 in einer bevorzugt Ausführungsform eine, vorzugsweise im Wesentlichen konstante, Wandstärke t1 auf. Weiter vorzugsweise ist diese Wandstärke t1 aus einem Bereich zwischen 0,75 mm und 1,75 mm gewählt, bevorzugt aus einem Bereich von 1 mm bis 1,5 mm und besonders bevorzugt entspricht die Wandstärke t1 im Wesentlichen 1,25 mm (+/- 0,1 mm).

Es hat sich gezeigt, dass insbesondere dann eine lange Lebensdauer für die Werkzeugeinrichtung 1 erreichbar sind, wenn bestimmte Übergänge an der Anschlusseinrichtung 12 der Werkzeugeinrichtung 1 abgerundet sind (vorzugsweise Radien: k6, k7, k8, k9).

In einer bevorzugten Ausführungsform ist wenigstens einer der Radien k6, k7, k8 und k9, bevorzugt mehrere, besonders bevorzugt alle, an der Wandstärke t1 orientiert. Dabei folgt vorzugsweise aus einer größeren Wandstärke t1 eine Vergrößerung dieser Radien, vorzugsweise wenigstens der Radien k7 und k9.

In einer bevorzugten Ausführungsform (Wandstärke t1 = 1,25 mm) ist der Radius k6 vorzugsweise aus einem Bereich zwischen 1 mm und 2,5 mm, vorzugsweise aus einem Bereich zwischen 1,5 mm und 2,1 mm ausgewählt, besonders bevorzugt ist der Radius k6 im Wesentlichen 1,8 mm (+/- 0,1 mm).

In einer bevorzugten Ausführungsform (t1 = 1,25 mm) ist der Radius k7 aus einem Bereich zwischen 0,5 mm und 1,5 mm ausgewählt, vorzugsweise aus einem Bereich zwischen 0,8 mm und 1,2 mm, besonders bevorzugt ist der Radius k7 im Wesentlichen 1 mm (+/- 0,1 mm).

In einer bevorzugten Ausführungsform (t1 = 1,25 mm) ist der Radius k8 aus einem Bereich zwischen 0,2 mm und 0,6 mm ausgewählt, vorzugsweise aus einem Bereich zwischen 0,3 mm und 1,5 mm, besonders bevorzugt ist der Radius k8 im Wesentlichen 0,4 mm (+/- 0,05 mm).

In einer bevorzugten Ausführungsform (t1 = 1,25 mm) ist der Radius k9 aus einem Bereich zwischen 2 mm und 3,5 mm ausgewählt, vorzugsweise aus einem Bereich zwischen 2,4 mm und 3 mm, besonders bevorzugt ist der Radius k9 im Wesentlichen 2,7 mm (+/- 0,1 mm).

Die Antriebsflächenbereiche 2 sind in der Darstellung der Figur 17 um den Winkel k13 gegenüber einer gedachten Senkrechten (parallel zur Werkzeugdrehachse 5) geneigt. In einer bevorzugten Ausführungsform ist dieser Winkel aus einem Bereich zwischen 10° und 30° ausgewählt, vorzugsweise aus einem Bereich zwischen 17,5° und 22,5° und besonders bevorzugt ist der Winkel k13 im Wesentlichen 20° (+/- 0,5°).

Weiter Vorzugsweise hängen von der Wandstärke t1 andere Maße der Werkzeugeinrichtung ab, weiter vorzugsweise wenigstens die Radien k6, k7, k8 und k9, wobei tendenziell eine größere Wandstärke t1 größere Radien k6, k7, k8 und k9 zur Folge hat, bevorzugt wenigstens größere Radien k9 und k6.

Der Durchmesser k2 kennzeichnet vorzugsweise den Bereich der Antriebsflächenbereiche 2, ab welchem diese geradlinig verlaufen. Nach diesem geradlinigen Verlauf, gehen die Antriebsflächenbereiche, vorzugsweise in den Radius k9 und danach in den Deckflächenabschnitt 10 über.

Vorzugsweise sind das Maß k5 und der Radius k7 voneinander abhängig. Weiter vorzugsweise ist das Maß k5 aus einem Bereich zwischen 0,1 mm und 1 mm ausgewählt, bevorzugt aus einem Bereich zwischen 0,3 mm und 0,7 mm und besonders bevorzugt ist das Maß k5 im Wesentlichen 0,5 mm (+/- 0,1 mm).

Der Radius k6 liegt vorzugsweise dem Radius k7 gegenüber und ist größer als dieser. Auch der Radius k9 und k8 liegen sich vorzugsweise gegenüber, weiter vorzugsweise ist der Radius k8 kleiner als der Radius k9.

In einer bevorzugten Ausführungsform verlaufen die Antriebsflächenbereiche 2 auf einer Höhe (Richtung parallel zur Werkzeugdrehachse) wenigstens für das Maß k14 im Wesentlichen geradlinig, dabei ist unter geradlinig im Sinne der Erfindung zu verstehen, dass diese keine wesentliche Krümmung aufweisen, vorzugsweise im unbelastetem Zustand, weiter vorzugsweise in einem belasteten Zustand. Vorzugsweise ist das Maß k14 aus einem Bereich zwischen 1 mm und 3,5 mm ausgewählt, bevorzugt aus einem Bereich zwischen 1,5 mm und 2,5 mm besonders bevorzugt ist das Maß k14 im Wesentlichen 2 mm (+/- 0,25 mm). Vorzugsweise ist unter dem Maß k14 der kürzeste geradlinige Verlauf eines der Antriebsflächenbereiche 2 zu verstehen.

Die Ausnehmung im Deckflächenabschnitt, welche vorzugsweise dazu eingerichtet ist mit der Halteeinrichtung (nicht dargestellt) der Werkzeugmaschine (nicht dargestellt) zusammenzuwirken, weist den Durchmesser k10 auf. Die Ausnehmung mit dem Durchmesser k10 ist nicht notwendigerweise eine kreisrunde Ausnehmung wie in Figur 16 und 17 dargestellt, vielmehr kann diese Ausnehmung, unabhängig vom restlichen Aussehen der Werkzeugeinrichtung 1 auch eine andere Form (Polygon oder dergleichen) aufweisen.

In einer bevorzugten Ausführungsform weist der Anschlussbereich 12 eine Tiefe k11 auf, weiter vorzugsweise ist die Tiefe k11 aus einem Bereich zwischen 3,5 mm und 6 mm ausgewählt, bevorzugt aus einem Bereich zwischen 4,5 mm und 5 mm und besonders bevorzugt ist die Tiefe k11 im Wesentlichen 4,7 mm (+ 0,15 mm).

In einer bevorzugten Ausführungsform weist der Anschlussbereich 12 eine Höhe k15 auf, weiter vorzugsweise ist die Höhe k15 aus einem Bereich zwischen 4,5 mm und 7,5 mm ausgewählt, bevorzugt aus einem Bereich zwischen 5,5 mm und 6,5 mm und besonders bevorzugt ist die Höhe k15 im Wesentlichen 6 mm (+/- 0,2 mm).

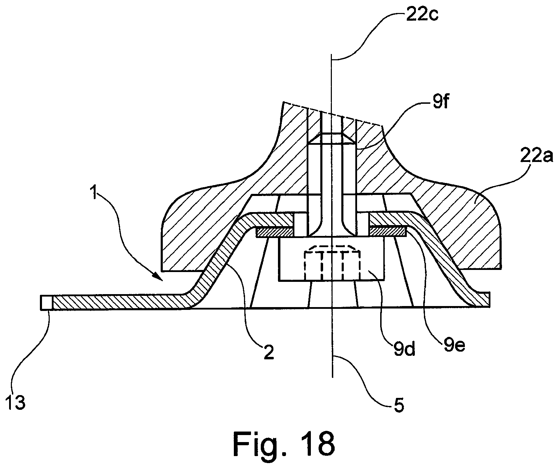

Figur 18 zeigt eine Werkzeugeinrichtung 1 welche mittels einer Schraubeinrichtung (Befestigungsschraube 9d, Unterlegscheibe 9e, Mutternteil 9f) an der Abtriebsspindel 22a der Werkzeugmaschine befestigt ist. Die Werkzeugeinrichtung 1 weist einen Arbeitsbereich 13 auf, um auf ein Werkstück oder eine Werkstückanordnung einzuwirken. Vom Werkzeug-Antriebsflächenbereich 2 werden die Antriebskräfte auf den Arbeitsbereich 13 übertragen. Die Werkzeugeinrichtung 1 wird dabei mittels der Befestigungsschraube 9d, diese übt ihre Kraftwirkung mittels der Unterlegscheibe 9e auf die Werkzeugeinrichtung 1 aus, an der Werkzeugmaschine gehalten. Die Übertragung der Antriebskräfte von der Werkzeugmaschine auf die Werkzeugeinrichtung 1 wird im Wesentlichen durch das formschlüssige Ineinandergreifen der Antriebflächenbereiche 2 in Gegenflächen in der Abtriebsspindel 22a erreicht. Die Abtriebsspindel 22a wird dreh-oszillierend um die Werkzeugmaschinen-Drehachse 22c angetrieben und überträgt diese Bewegung auf die Werkzeugeinrichtung 1, so dass diese sich dreh-oszillierend um die Werkzeugdrehachse 5 bewegt. Die Werkzeugeinrichtung 1 wird so an der Werkzeugmaschine gehalten, dass die Werkzeugdrehachse 5 und die Werkzeugmaschinen-Drehachse 22c im Wesentlichen zusammenfallen.

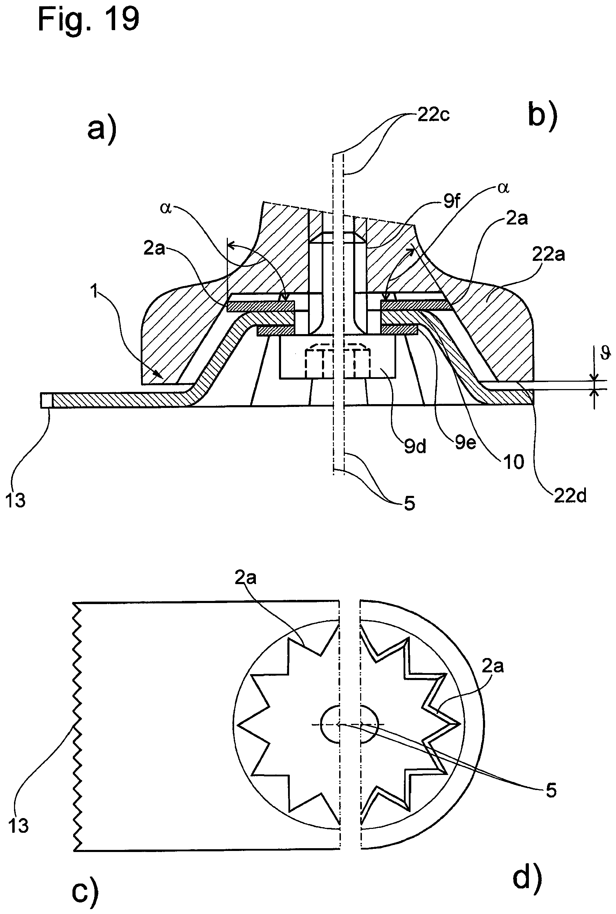

Figur 19 zeigt zwei Varianten einer Werkzeugeinrichtung 1 mit abgesetzten Werkzeug-Antriebsflächenbereichen 2a. Diese Antriebsflächenbereiche 2a sind oberhalb des Deckflächenabschnitts 10 angeordnet und vorzugsweise drehfest mit diesem verbunden, bevorzugt form- oder stoffschlüssig, besonders bevorzugt verschweißt, vernietet, verschraubt oder dergleichen. Dabei zeigt die Figur 19 a) und b) jeweils eine Schnittdarstellung, die Figuren 19 c) und d) zeigen jeweils eine Draufsicht von oben auf eine derartige Werkzeugeinrichtung 1. Die Darstellung der Werkzeugeinrichtung 1 in der Figur 19 ist im Wesentlichen an die Darstellung von Figur 18 angelehnt, jedoch nicht auf diese beschränkt, nachfolgend wird daher im Wesentlichen auf die Unterschiede zwischen diesen eingegangen.

Bei einer Werkzeugeinrichtung 1, wie diese in den Figuren 19 a) und c) dargestellt ist, ist der Winkel α im Wesentlichen gleich 90°, hierdurch ist vorteilhaft eine einfach Herstellung der Werkzeugeinrichtung ermöglicht. Bei einer Werkzeugeinrichtung 1, wie diese in den Figuren 19 b) und d) dargestellt ist, ist der Winkel α im Wesentlichen kleiner als 90°, hierdurch ist vorteilhaft eine größere Übertragungsfläche zur Drehmomentübertragung erreichbar.

Weiter zeigt Figur 19 wie die Werkzeugeinrichtung 1, vorzugsweise mittels einer Schraubeinrichtung (Befestigungsschraube 9d, Unterlegscheibe 9e, Mutternteil 9f), an der Abtriebsspindel 22a der Werkzeugmaschine befestigt ist. Die Werkzeugeinrichtung 1 weist dabei einen Arbeitsbereich 13 auf um auf ein Werkstück oder eine Werkstückanordnung einzuwirken. Mittels der Befestigungseinrichtung zwischen der Werkzeugeinrichtung 1 und der Abtriebsspindel 22a, hier vorzugsweise als Schraubeinrichtung (Befestigungsschraube 9d, Unterlegscheibe 9e, Mutternteil 9f) ausgestaltet, wird die Werkzeugeinrichtung 1 an der Werkzeugmaschine aufgenommen und eine Kraft in Richtung der Werkzeugdrehachse 5 ausgeübt.

Zwischen einer der Abtriebsspindel 22a zugewandten Oberfläche der Werkzeugeinrichtung 1 und einer Stirnfläche 22d der Abtriebsspindel 22a ergibt sich, wenn die Werkzeugeinrichtung planmäßig an der Werkzeugmaschine aufgenommen ist, ein geringer Abstand ϑ. Vorzugsweise ist unter einem geringen Abstand ein Abstand ϑ zu verstehen, welcher in einem Bereich liegt, vorzugsweise kleiner ist als 5 mm, bevorzugt kleiner als 2,5 mm und besonders bevorzugt kleiner als 1,5 mm und ganz besonders bevorzugt kleiner als 0,8 mm und weiter vorzugsweise ist dieser Bereich größer als 0,0 mm, vorzugsweise größer als 0,25 mm und besonders bevorzugt größer als 0,5 mm.

Von den abgesetzten Antriebsflächenbereichen 2a werden die Antriebskräfte auf den Arbeitsbereich 13 übertragen. Die Werkzeugeinrichtung 1 wird dabei mittels der Befestigungsschraube 9d, diese übt eine Kraftwirkung mittels der Unterlegscheibe 9e auf die Werkzeugeinrichtung 1 aus, an der Werkzeugmaschine gehalten. Die Übertragung der Antriebskräfte von der Werkzeugmaschine auf die Werkzeugeinrichtung 1 wird im Wesentlichen durch das formschlüssige Ineinandergreifen (formschlüssige Verbindung) der abgesetzten Antriebflächenbereiche 2a in Gegenflächen in der Abtriebsspindel 22a erreicht. Die Abtriebsspindel 22a wird dreh-oszillierend um die Werkzeugmaschinen-Drehachse 22c angetrieben und überträgt diese Bewegung auf die Werkzeugeinrichtung 1, so dass diese sich dreh-oszillierend um die Werkzeugdrehachse 5 bewegt. Die Werkzeugeinrichtung 1 wird so an der Werkzeugmaschine gehalten, dass die Werkzeugdrehachse 5 und die Werkzeugmaschinen-Drehachse 22c im Wesentlichen zusammenfallen.

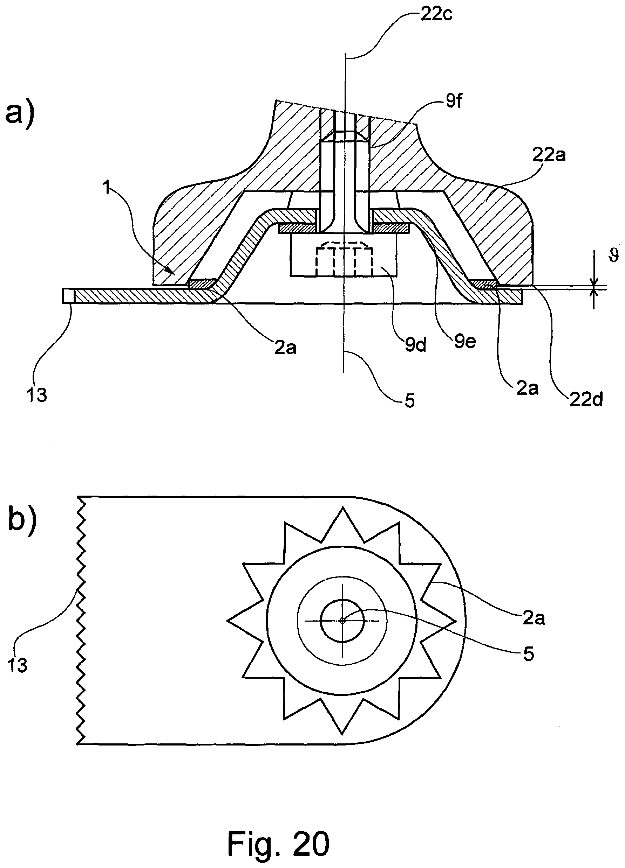

Figur 20 zeigt eine weitere Variante einer Werkzeugeinrichtung 1 mit abgesetzten Werkzeug-Antriebsflächenbereichen 2a. Diese Antriebsflächenbereiche 2a sind vorzugsweise im Wesentlichen oberhalb, vorzugsweise unmittelbar oberhalb, des Arbeitsbereichs 13, in Richtung zur Abtriebsspindel 22a, beziehungsweise vorzugsweise auf einer Oberfläche der Werkzeugeinrichtung 1 angeordnet. Weiter vorzugsweise ist diese Oberfläche der Werkzeugeinrichtung dazu eingerichtet der Stirnfläche 22d der Abtriebsspindel 22a gegenüber zu liegen, wenn die Werkzeugeinrichtung in der Werkzeugmaschine aufgenommen ist. Die Antriebsflächenbereiche 2a sind vorzugsweise drehfest mit der Werkzeugeinrichtung 1 verbunden, bevorzugt form- oder stoffschlüssig, besonders bevorzugt verschweißt, vernietet, verschraubt oder dergleichen oder besonders bevorzugt einstückig. Dabei zeigt die Figur 20 a) eine Schnittdarstellung, die Figur 20 b) eine Draufsicht von oben auf eine derartige Werkzeugeinrichtung 1. Dabei ist in der Draufsicht (Figur 20b erkennbar, dass die abgesetzten Antriebsflächenbereiche 2a sternförmig um die Werkzeugdrehachse verteilt sind. Die Darstellung der Werkzeugeinrichtung 1 in der Figur 20 ist im Wesentlichen an die Darstellung von Figur 18 und Figur 19 angelehnt, jedoch nicht auf diese beschränkt, es wird nachfolgend daher im Wesentlichen auf Unterschiede zwischen diesen eingegangen.

Weiter zeigt Figur 20 wie die Werkzeugeinrichtung 1, vorzugsweise mittels einer Schraubeinrichtung (Befestigungsschraube 9d, Unterlegscheibe 9e, Mutternteil 9f), an der Abtriebsspindel 22a der Werkzeugmaschine befestigt ist. Die Werkzeugeinrichtung 1 weist dabei einen Arbeitsbereich 13 auf, um auf ein Werkstück oder eine Werkstückanordnung einzuwirken. Mittels der Befestigungseinrichtung, hier vorzugsweise als Schraubeinrichtung (Befestigungsschraube 9d, Unterlegscheibe 9e, Mutternteil 9f) ausgestaltet, zwischen der Werkzeugeinrichtung 1 und der Abtriebsspindel 22a, wird die Werkzeugeinrichtung 1 an der Werkzeugmaschine aufgenommen und eine Kraft in Richtung der Werkzeugdrehachse 5 ausgeübt.

Zwischen einer der Abtriebsspindel 22a zugewandten Oberfläche der Werkzeugeinrichtung 1 und der Stirnfläche 22d der Abtriebsspindel 22a ergibt sich, wenn die Werkzeugeinrichtung planmäßig an der Werkzeugmaschine aufgenommen ist, ein geringer Abstand ϑ. Dabei liegt der Abstand 9 vorzugsweise in dem Bereich wie dieser beim Ausführungsbeispiel von Figur 19 vorgeschlagen ist.

Das Halten der Werkzeugeinrichtung, sowie die Übertragung der Antriebskräfte auf die Werkzeugeinrichtung geschehen in der gleichen Weise, wie bei dem in Figur 19 gezeigten Ausführungsbeispiel.

In einer weiteren Ausführungsform kann wenigstens ein abgesetzter Antriebsflächenbereich 2a unterhalb des Deckflächenabschnitts (Figur 19) und oberhalb Werkzeugoberfläche (Figur 20), welche der Werkzeugmaschine im Bereich der Abtriebsspindel 22c zugewandt ist, angeordnet sein, vorzugsweise ist der abgesetzte Drehmomentübertragungsbereich 2a sowohl von dem Deckenflächenabschnitt nach unten und von dem zuvor angesprochenen Bereich der Werkzeugoberfläche nach oben hin beabstandet angeordnet. Diese Ausführungsform kann bildlich als eine Zwischenvariante gegenüber den in Figur 19 und Figur 20 dargestellten Ausführungsformen aufgefasst werden. Weiter vorzugsweise kann der abgesetzte Antriebsflächenbereich 2a einstückig mit wenigstens einem Teil der Werkzeugeinrichtung 1 ausgebildet sein oder bevorzugt als eigenes Bauteil, wie dies auch in Figur 19 und Figur 20 gezeigt ist, mit der Werkzeugeinrichtung 1 verbunden sein. Der abgesetzte Drehmomentübertragungsbereich und die Werkzeugeinrichtung sind bei einer solchen Verbindung vorzugsweise stoffschlüssig, kraftschlüssig oder formschlüssig, bevorzugt verschweißt, verlötet, vernietet, verschraubt oder verklebt.

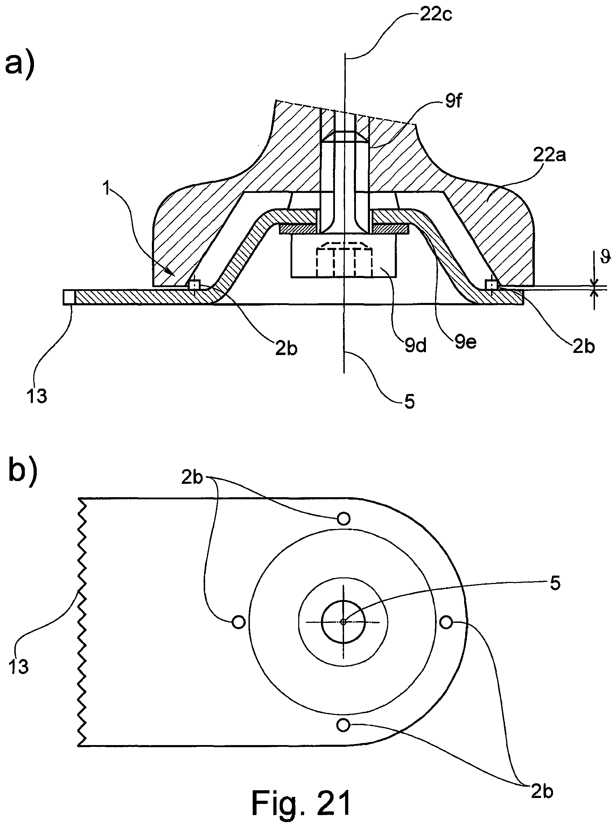

Figur 21 zeigt eine Ausführungsform einer Werkzeugeinrichtung 1 mit erhabenen Antriebsflächenbereichen 2b. Figur 21 a) zeigt eine Schnittdarstellung einer solchen Werkzeugeinrichtung, Figur 21 b) die korrespondierende Ansicht von oben auf die Werkzeugeinrichtung1. Diese erhabenen Antriebsflächenbereiche 2b können vorzugsweise zylinderförmige Abschnitte aufweisen, wie in Figur 21 dargestellt. Weiter vorzugsweise können diese alternativ als Kegelstümpfe oder bevorzugt auch als Abschnitte mit polygonförmigem Querschnitt ausgeführt sein. Dabei ist die Form der erhabenen Antriebsflächenbereiche 2b vorzugsweise unabhängig von der restlichen Gestaltung der Werkzeugeinrichtung.

Diese Antriebsflächenbereiche 2b sind vorzugsweise im Wesentlichen oberhalb des Arbeitsbereichs 13, in Richtung zur Abtriebsspindel 22a, beziehungsweise auf einer Oberfläche der Werkzeugeinrichtung 1 angeordnet. Weiter vorzugsweise ist diese Oberfläche der Werkzeugeinrichtung dazu eingerichtet der Stirnfläche 22d der Abtriebsspindel 22a gegenüber zu liegen, wenn die Werkzeugeinrichtung 1 in der Werkzeugmaschine aufgenommen ist. Die Antriebsflächenbereiche 2b sind vorzugsweise drehfest mit der Werkzeugeinrichtung 1 verbunden, bevorzugt form- oder stoffschlüssig, besonders bevorzugt verschweißt, vernietet, verschraubt oder dergleichen oder besonders bevorzugt einstückig. Dabei ist in der Draufsicht (Figur 21b) erkennbar, dass die erhabenen Antriebsflächenbereiche 2b vorzugsweise rotationssymmetrisch, weiter vorzugsweise um einen äquidistanten Abstand oder ein ganzzahliges Vielfaches eines äquidistanten Abstandes, um die Werkzeugdrehachse verteilt sind. Die Darstellung der Werkzeugeinrichtung 1 in der Figur 21 ist im Wesentlichen an die Darstellung von Figur 18 bis Figur 20 angelehnt, jedoch nicht auf diese beschränkt.

Weiter zeigt Figur 21 wie die Werkzeugeinrichtung 1, vorzugsweise mittels einer Schraubeinrichtung (Befestigungsschraube 9d, Unterlegscheibe 9e, Mutternteil 9f), an der Abtriebsspindel 22a der Werkzeugmaschine befestigt ist. Die Werkzeugeinrichtung 1 weist dabei einen Arbeitsbereich 13 auf, um auf ein Werkstück oder eine Werkstückanordnung einzuwirken. Mittels der Befestigungseinrichtung, hier vorzugsweise als Schraubeinrichtung (Befestigungsschraube 9d, Unterlegscheibe 9e, Mutternteil 9f) ausgestaltet, zwischen der Werkzeugeinrichtung 1 und der Abtriebsspindel 22a, wird die Werkzeugeinrichtung 1 an der Werkzeugmaschine aufgenommen und eine Kraft in Richtung der Werkzeugdrehachse 5 ausgeübt.

Zwischen einer der Abtriebsspindel 22a zugewandten Oberfläche der Werkzeugeinrichtung 1 und der Stirnfläche 22d der Abtriebsspindel 22a ergibt sich, wenn die Werkzeugeinrichtung planmäßig an der Werkzeugmaschine aufgenommen ist, ein geringer Abstand ϑ. Dabei liegt der Abstand ϑ vorzugsweise in dem Bereich wie dieser beim Ausführungsbeispiel von Figur 19 vorgeschlagen ist.

Das Halten der Werkzeugeinrichtung, geschieht in der gleichen Weise wie bei dem in Figur 19 gezeigten Ausführungsbeispiel. Bei dem Ausführungsbeispiel (Figur 21) mit erhabenen Antriebsflächenbereichen 2b greifen diese in entsprechende Gegenflächen an der Werkzeugmaschine ein und die Übertragung der Antriebskräfte auf die Werkzeugeinrichtung geschieht formschlüssig.

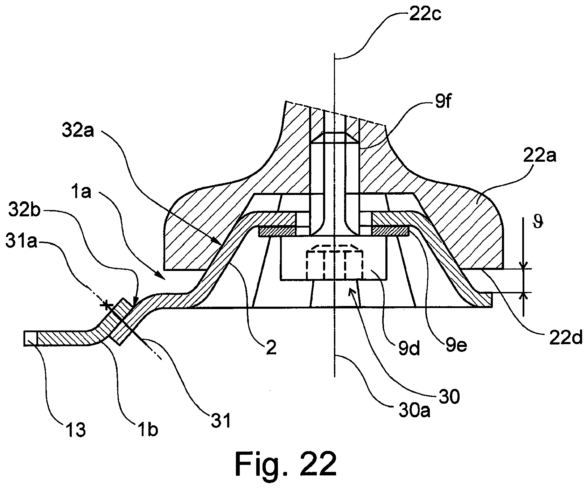

Figur 22 zeigt eine Schnittdarstellung einer Verbindungseinrichtung 1a zum Verbinden einer dritten Werkzeugeinrichtung 1b mit einer Abtriebsspindel 22a einer Werkzeugmaschine. Dabei wird die Verbindungseinrichtung 1a mittels einer ersten Halteeinrichtung 30 an der Abtriebsspindel 22a und damit an der Werkzeugmaschine gehalten. Die Halteeinrichtung 30 weist vorzugsweise eine Befestigungsschraube 9d eine Unterlegscheibe 9e auf, in der Abtriebsspindel 22a ist ein Mutternteil 9f angeordnet. Die Verbindungseinrichtung 1a wird so an der Abtriebsspindel 22a aufgenommen, dass sich zwischen einer Stirnfläche 22d der Abtriebsspindel 22a und einer der Werkzeugmaschine zugewandten Oberfläche der Verbindungseinrichtung, vorzugsweise der der Stirnfläche 22d gegenüberliegenden Oberfläche, ein geringer Abstand ϑ ergibt. Durch den geringen Abstand ϑ ist eine sichere Aufnahme der Verbindungseinrichtung 1a an der Abtriebsspindel 22a erreichbar. An der Verbindungseinrichtung 1a ist mittels einer zweiten Halteeinrichtung 31 eine dritte Werkzeugeinrichtung 1b anbringbar. Die zweite Halteeinrichtung 31 weist eine zweite Halteachse 31a auf, die erste Halteeinrichtung 30a weist eine erste Halteachse 30a auf. Die erste Halteachse 30a fällt im Wesentlichen mit der Verbindungs-Drehachse zusammen. Die erste Halteachse 30a und die zweite Halteachse 31a sind schief zu einander angeordnet. Die dritte Werkzeugeinrichtung 1b weist einen Arbeitsbereich 13 auf, dieser Arbeitsbereich 13 ist dazu eingerichtet auf eine Werkstückanordnung einzuwirken.

Zur formschlüssigen Drehmomentübertragung weist die Verbindungseinrichtung 1a eine Anschlusseinrichtung mit Antriebsflächenbereichen 2 auf. Diese Antriebsflächenbereiche 2 greifen in Gegenflächen in der Abtriebsspindel 22a ein. Durch diesen Formschluss werden die Antriebskräfte von der, um die Werkzeugmaschinen-Drehachse 22c drehoszillierend angetriebene Abtriebsspindel 22a sicher auf die Verbindungseinrichtung 1a und damit auf die zweite Werkzeugeinrichtung übertragen.

Die Verbindungseinrichtung 1a ist in einem ersten Verbindungsbereich 32a mit der Werkzeugmaschine verbunden, dabei wird vorzugsweise in Richtung der ersten Halteachse 30a eine Haltekraftwirkung auf die Verbindungseinrichtung 1a ausgeübt, beziehungsweise eine Bewegung der Verbindungseinrichtung 1a in Richtung der ersten Halteachse wenigstens teilweise verhindert. Weiter ist die dritte Werkzeugeinrichtung 1b in einem zweiten Verbindungsbereich 32b mit der Verbindungseinrichtung 1a verbindbar. Dabei kann diese Verbindung vorzugsweise formschlüssig, bevorzugt stoffschlüssig oder besonders bevorzugt kraftschlüssig sein. Vorzugsweise wird in Richtung der zweiten Halteachse 31a eine Haltekraftwirkung auf die Werkzeugeinrichtung 1b beziehungsweise auf die Verbindungseinrichtung 1a ausgeübt. Vorzugsweise weist die zweite Halteeinrichtung 31 eine Schraubeneinrichtung auf, weiter vorzugsweise zum Aufbringen dieser Haltekraftwirkung.

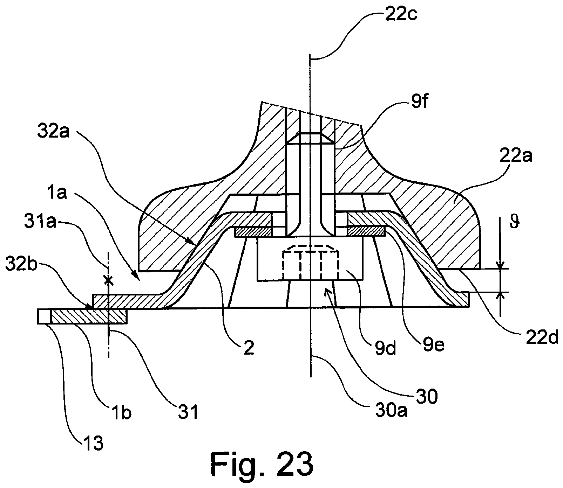

Figur 23 zeigt eine Schnittdarstellung einer Verbindungseinrichtung 1a, welche der in Figur 22 dargestellten Verbindungseinrichtung ähnlich ist, so dass nachfolgend vorwiegend auf die Unterschiede zwischen diesen beiden Verbindungseinrichtungen eingegangen wird.

Die dritte Werkzeugeinrichtung 1b ist mittels der zweiten Halteeinrichtung 31 an der Verbindungseinrichtung 1a gehalten. Dabei übt die zweite Halteeinrichtung 31 in Richtung der zweiten Halteachse 31a eine Haltekraftwirkung auf die dritte Werkzeugeinrichtung 1b und vorzugsweise auch auf die Verbindungseinrichtung 1a aus. Die Werkzeugeinrichtung 1b wir über den zweiten Verbindungsbereich 32b mit der Verbindungseinrichtung 1a verbunden. Dabei kann diese Verbindung vorzugsweise formschlüssig, bevorzugt stoffschlüssig oder besonders bevorzugt kraftschlüssig sein. Die zweite Halteachse 31a ist im Wesentlichen parallel zu der ersten Halteachse 30a ausgerichtet, weiter vorzugsweise sind die erste und die zweite Halteachse voneinander beabstandet angeordnet.

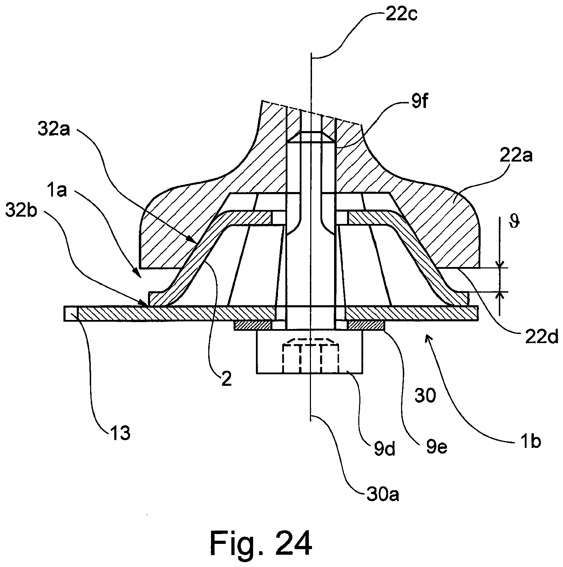

Figur 24 zeigt eine Schnittdarstellung einer Verbindungseinrichtung, welche im Wesentlichen der in Figur 22 und auch der in Figur 23 dargestellten Verbindungseinrichtung entspricht. Nachfolgend wird daher auf die Unterschiede zwischen den genannten Ausführungsformen eingegangen.

Die dritte Werkzeugeinrichtung 1b ist mittels der ersten Halteeinrichtung 30 und dem zweiten Verbindungsbereich 32b an der Verbindungseinrichtung 1a gehalten. Dabei übt die erste Halteeinrichtung 30 in Richtung der ersten Halteachse 30a eine Haltekraftwirkung auf die dritte Werkzeugeinrichtung 1b und vorzugsweise auch auf die Verbindungseinrichtung 1a aus. Die Verbindung zwischen der Werkzeugeinrichtung 1b und der Verbindungseinrichtung kann vorzugsweise formschlüssig, bevorzugt stoffschlüssig oder besonders bevorzugt kraftschlüssig sein. Weiter vorzugsweise weist die dritte Werkzeugeinrichtung Ausnehmungen und die Verbindungseinrichtung erhabene Abschnitte auf, vorzugsweise sind diese erhabenen Abschnitte in Verbindung mit diesen Ausnehmungen zur formschlüssigen Drehmomentübertragung von der Verbindungseinrichtung 1a auf die dritte Werkzeugeinrichtung 1b eingerichtet.

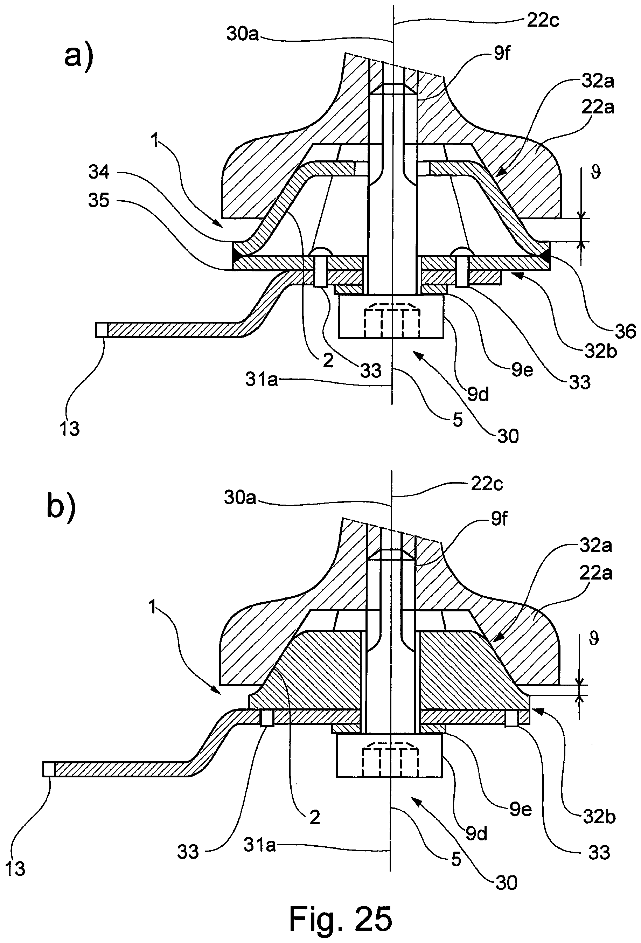

Figur 25a zeigt eine Schnittdarstellung einer Verbindungseinrichtung mit formschlüssiger Drehmomentübertragung von der Verbindungseinrichtung auf die Werkzeugeinrichtung. Die Verbindungseinrichtung ist wenigstens abschnittsweise als Hohlkörper ausgebildet und weist insbesondere dadurch ein geringes Trägheitsmoment auf. Sowohl die in Figur 25a und in Figur 25b dargestellte Ausführungsform sind ähnlich zu den zuvor beschriebenen Ausführungsformen von Verbindungseinrichtungen, so dass hier im Wesentlichen auf die Unterschiede zu diesen eingegangen wird.

Die Werkzeugeinrichtung 1 wird mittels einer ersten Halteeinrichtung 30, diese weist insbesondere eine Befestigungsschraube 9d, eine Unterlegscheibe 9e und einen Mutternteil 9f auf, an der Abtriebsspindel 22a der Werkzeugmaschine gehalten. Die Drehmomentübertragung von der Verbindungseinrichtung auf die Werkzeugeinrichtung 1 wird wenigstens teilweise mittels der Formschlusselemente 33 erreicht. Die Formschlusselemente 33 können vorzugsweise einstückig mit der Verbindungseinrichtung ausgebildet sein oder bevorzugt als eigene Bauteile in diese eingesetzt sein, beziehungsweise an dieser befestigt, sein.

Die Verbindungseinrichtung ist in axialer Richtung, also in Richtung der Werkzeugmaschinen-Drehachse 22c, so aufgenommen, dass sich ein kleiner Abstand ϑ ergibt, dadurch ist erreichbar, dass sich die Verbindungseinrichtung an der Werkzeugmaschine abstützen kann, soweit die Werkzeugeinrichtung stark beansprucht wird, insbesondere durch Biegemomente senkrecht zur Werkzeugdrehachse. Insbesondere durch dieses Abstützten kann einem Verkippen der Werkzeugeinrichtung entgegengewirkt werden und die Verbindungseinrichtung und mit dieser die Werkzeugeinrichtung ist besonders sicher an der Werkzeugmaschine aufnehmbar.

Die Verbindungseinrichtung kann vorzugsweise aus mehreren Teilen zusammengesetzt sein, besonders bevorzugt ist deren Grundkörper aus zwei Teilen 34, 35 zusammengesetzt. Dadurch ist erreichbar, dass die Verbindungseinrichtung einerseits ein geringes Gewicht aufweist (Hohlkörper) und andererseits aus relativ einfach zu fertigenden Teilen besteht.

Weiter vorzugsweise können diese mehren Teile stoffschlüssig an einer oder mehreren Verbindungsstellen 36 miteinander verbunden sein. Durch eine derartige Gestaltung der Verbindungseinrichtung ist eine besonders leichte Verbindungseinrichtung darstellbar, welche insbesondere aufgrund geringer Massenkräfte nur geringe Beanspruchung hervorruft.

Weiter ist mittels der Verbindungseinrichtung die Werkzeugeinrichtung 1 so an der Abtriebsspindel 22a aufnehmbar, dass die Werkzeugdrehachse 5 und die Werkzeugmaschinen-Drehachse 22c im Wesentlichen zusammenfallen. Die Verbindungseinrichtung ist in einem ersten Verbindungsbereich 32a mit der Abtriebsspindel 22a der Werkzeugmaschine verbunden, weiter ist die Werkzeugeinrichtung 1 in einem zweiten Verbindungsbereich 32b mit der Verbindungseinrichtung verbunden. Dabei wird das Antriebsdrehmoment von der Werkzeugmaschine mittels der Antriebsflächenbereiche 2 formschlüssig auf die Verbindungseinrichtung übertragen (erster Verbindungsbereich 32a).

Die Formschlusselemente 33 (Figur 25a/b) sind vorzugsweise zur Werkzeug-Drehachse 5 beabstandet angeordnet. Weiter sind diese vorzugsweise sind um einen äquidistanten Winkel oder bevorzugt um ein ganzzahliges Vielfaches eines solchen Winkels, um die Werkzeugdrehachse versetzt. Weiter vorzugsweise sind die Formschlusselemente 33 oder mehrere Gruppen von Formschlusselementen rotationssymmetrisch um die Werkzeugdrehachse angeordnet.

Die Werkzeugeinrichtung 1 weist einen Arbeitsbereich 13 auf, welcher dazu eingerichtet ist, auf ein Werkstück oder eine Werkstückanordnung (nicht dargestellt) einzuwirken.

Figur 25b zeigt eine Schnittdarstellung einer Verbindungseinrichtung mit formschlüssiger Drehmomentübertragung von der Verbindungseinrichtung auf die Werkzeugeinrichtung 1 (zweiter Verbindungsbereich 32b), dabei ist die Verbindungseinrichtung, im Gegensatz zu der in Figur 25a dargestellten Ausführungsform, im Wesentlichen als Vollkörper ausbildet und weist insbesondere dadurch eine hohe Formstabilität auf und ist insbesondere einfach herstellbar. Die in Figur 25b dargestellte Ausführungsform, entspricht in wesentlichen Punkten der in Figur 25a dargestellten Ausführungsform, so dass nachfolgend vorwiegend auf die Unterschiede zwischen diesen Ausführungsformen eingegangen wird.

Die Werkzeugeinrichtung 1 wird mittels einer ersten Halteeinrichtung 30, diese weist insbesondere eine Befestigungsschraube 9d, eine Unterlegscheibe 9e und einen Mutternteil 9f auf, an der Abtriebsspindel 22a der Werkzeugmaschine gehalten. Die Drehmomentübertragung von der Verbindungseinrichtung auf die Werkzeugeinrichtung 1 wird wenigstens teilweise mittels der Formschlusselemente 33 erreicht.

Die Verbindungseinrichtung ist in axialer Richtung, also in Richtung der Werkzeugmaschinen-Drehachse 22c, so aufgenommen, dass sich ein kleiner Abstand ϑ ergibt, wodurch eine besonders sichere Aufnahme der Werkzeugeinrichtung an der Werkzeugmaschine darstellbar ist.

Die Verbindungseinrichtung, insbesondere deren Grundkörper, kann vorzugsweise einstückig ausgebildet sein, bevorzugt ist wenigstens der Grundkörper der Verbindungseinrichtung mittels eines urformenden Fertigungsverfahrens oder mittels eines umformenden Fertigungsverfahrens hergestellt, wie diese auch zur Fertigung der Werkzeugeinrichtung bereits beschrieben sind, vorzugsweise schmieden, sintern, generative Fertigungsverfahren und dergleichen.

Mittels der Verbindungseinrichtung wird die Werkzeugeinrichtung 1 so an der Abtriebsspindel 22a aufgenommen, dass die Werkzeugdrehachse und die Werkzeugmaschinen-Drehachse im Wesentlichen zusammenfallen. Die Verbindungseinrichtung ist in einem ersten Verbindungsbereich 32a mit der Abtriebsspindel 22a verbunden, weiter ist die Werkzeugeinrichtung 1 in einem zweiten Verbindungsbereich 32b mit der Verbindungseinrichtung verbunden. Dabei wird auch das Antriebsdrehmoment von der Werkzeugmaschine mittels der Antriebsflächenbereiche 2 formschlüssig auf die Verbindungseinrichtung übertragen.

Die Werkzeugeinrichtung 1 weist einen Arbeitsbereich 13 auf, welcher dazu eingerichtet ist auf ein Werkstück oder eine Werkstückanordnung (nicht dargestellt) einzuwirken.

**Bezugszeichenliste:**

| | |
|---|---|
| 1 | Werkzeugeinrichtung |
| 1a | Verbindungseinrichtung |
| 1b | zweite Werkzeugeinrichtung |
| 2 | Antriebsflächenbereich / Werkzeug-Antriebsflächenbereich |
| 2a | abgesetzter Antriebsflächenbereich |
| 2b | erhabener Antriebsflächenbereich |
| 3 | Flächenpunkt |
| 4 | Tangentialebene |
| 5 | Werkzeugdrehachse |
| 6 | Radialebene |
| 7 | Axialebene |
| 8 | Begrenzungsebene |
| 8a | obere Begrenzungsebene |
| 8b | Untere Begrenzungsebene |
| 9 | Symmetrieebene |
| 9d | Befestigungsschraube |
| 9e | Unterlegscheibe |
| 9f | Mutternteil |
| 9g | Zugankereinrichtung |
| 10 | Deckflächenabschnitt |
| 10a | unterer Abschnitt des Deckflächenabschnitts |
| 11 | Verbindungsbereich |
| 12 | Anschlusseinrichtung |
| 13 | Arbeitsbereich |
| 14 | Bezugsebene |
| 15 | Referenzdurchmesser |
| 16 | Kodierungseinrichtung |
| 16a | Erhabene Kodierungseinrichtung |
| 16b | Kodierungseinrichtung mit einer Ausnehmung |
| 17 | Übergangsbereich |
| 22 | Werkzeugmaschine |
| 22a | Abtriebsspindel |
| 22b | Betätigungshebel |
| 22c | Werkzeugmaschinen-Drehachse |
| 22d | Stirnfläche der Abtriebsspindel |
| 30 | Erste Halteeinrichtung |
| 30a | Erste Halteachse |
| 31 | Zweite Halteeinrichtung |
| 31a | Zweite Halteachse |
| 32a | Erster Verbindungsbereich |
| 32b | Zweiter Verbindungsbereich |
| 33 | Formschlusselement |
| 34 | Erstes Teilelement der Verbindungseinrichtung |
| 35 | Zweites Teilelement der Verbindungseinrichtung |
| 36 | Verbindungsbereich zwischen 34 und 35 |
| α | Erster Neigungswinkel |
| β | Zweiter Neigungswinkel |
| t | Dicke der Seitenwandung |
| T | Erstreckung eines Antriebsflächenbereichs |
| R_{I} | erster Krümmungsradius eines Antriebsflächenbereichs |
| R_{Ia} | Variabler Krümmungsradius eines Antriebsflächenbereichs |
| R_{II} | Zweiter Krümmungsradius eines Antriebsflächenbereichs |
| a | Gerade verlaufende Gitternetzlinie eines Antriebsflächenbereichs |
| b_{I} | Erste gekrümmte Gitternetzlinie eines Antriebsflächenbereichs |
| b_{II} | Zweite gekrümmte Gitternetzlinie eines Antriebsflächenbereichs |
| b_{Ia} | Dritte Gitternetzlinie mit variabler Krümmung eines Antriebsflächenbereichs |
| Δ | Abstand zu 14 |
| ϑ | Abstand Werkzeugeinrichtung Abtriebsspindel in Richtung von 5 |
| k1 | Schlüsselweite, Abstand paralleler Antriebsflächenbereiche |
| k2 | erster Außendurchmesser Anschlusseinrichtung |
| k3 | zweiter Außendurchmesser Anschlusseinrichtung |
| k4 | Referenzdurchmesser |
| k5 | Abrundungsbereich |
| k6 | Erster Abrundungsradius |
| k7 | Zweiter Abrundungsradius |
| k8 | Dritter Abrundungsradius |
| k9 | Vierter Abrundungsradius |
| k10 | Durchmesser Ausnehmung |
| k11 | Tiefe Anschlusseinrichtung |
| k12 | Polygonwinkel |
| k13 | Neigungswinkel |

## Patentansprüche

1. Werkzeugeinrichtung **(1, 1b)**, welche zur Verwendung mit einer, insbesondere handgeführten, Werkzeugmaschine **(22)** geeignet ist, die eine sich um eine Antriebsachse, insbesondere oszillierend, bewegende Antriebseinrichtung aufweist, und welche eine Anschlusseinrichtung **(12)** aufweist, mit der sie an einer Werkzeugmaschine **(22)** derart befestigbar ist, dass deren Antriebsachse und eine Werkzeugdrehachse **(5)** im Wesentlichen zusammenfallen,
wobei diese Anschlusseinrichtung **(12)** zur Aufnahme einer Antriebskraft wenigstens zwei im Abstand zu dieser Werkzeugdrehachse **(5)** angeordnete Antriebsflächenbereiche **(2, 2a, 2b)** mit je einer Vielzahl von Flächenpunkten **(3)** aufweist, **dadurch gekennzeichnet, dass** Tangentialebenen **(4)** an diesen Flächenpunkten **(3)** gegenüber einer Axialebene **(7),** welche diese Werkzeugdrehachse **(5)** einschließt, geneigt sind,
wobei diese Tangentialebenen **(4)** gegenüber einer Radialebene **(6),** welche sich senkrecht zu der Werkzeugdrehachse **(5)** erstreckt, geneigt sind,
wobei die Anschlusseinrichtung (12) eine Seitenwandung aufweist,
wobei diese Seitenwandung radial beabstandet von der Werkzeugdrehachse **(5)** verläuft,
wobei sich diese Seitenwandung zwischen einer ersten, oberen Begrenzungsebene **(8a)** und einer zweiten, unteren Begrenzungsebene **(8b)** erstreckt und,
wobei diese Seitenwandung die Antriebsflächenbereiche **(2, 2a, 2b)** aufweist, wobei durch die Seitenwandung ein im Wesentlichen hohlkegeliger Abschnitt im Bereich der Anschlusseinrichtung entsteht, der einen Querschnitt mit variablem Abstand der Seitenwandung zur Werkzeugdrehachse in einer zu dieser Werkzeugdrehachse orthogonalen Ebene aufweist.

2. Werkzeugeinrichtung gemäß Anspruch 1, **dadurch gekennzeichnet,**
**dass** wenigstens einer, bevorzugt eine Vielzahl und besonderes bevorzugt alle dieser Antriebsflächenbereiche **(2, 2a, 2b)** wenigstens abschnittsweise im Wesentlichen eben oder wenigstens abschnittsweise gekrümmt sind.

3. Werkzeugeinrichtung gemäß einem der vorhergehenden Ansprüche, **dadurch gekennzeichnet,**
**dass** diese Begrenzungsebenen **(8, 8a, 8b)** im Wesentlichen senkrecht zu dieser Werkzeugdrehachse **(5)** angeordnet sind,
**dass** diese Begrenzungsebenen **(8, 8a, 8b)** voneinander beabstandet sind;
**dass** jeder dieser Antriebsflächenbereiche **(2, 2a, 2b)** zwischen einer dieser ersten, oberen Begrenzungsebenen **(8a)** und einer dieser zweiten, unteren Begrenzungsebenen **(8b)** angeordnet ist,
und vorzugsweise dass sich eine Vielzahl, vorzugsweise alle, dieser Antriebsflächenbereiche zwischen einer einzigen ersten, oberen Begrenzungsebene **(8a)** und einer einzigen zweiten, unteren Begrenzungsebene **(8b)** erstrecken.

4. Werkzeugeinrichtung gemäß einem der vorhergehenden Ansprüche, **dadurch gekennzeichnet,**
**dass** diese Werkzeugeinrichtung **(1, 1b),** insbesondere im Bereich der Anschlusseinrichtung **(12),** im Wesentlichen eine Wandstärke t aufweist,
**dass** wenigstens eine erste Begrenzungsebene **(8a)** und eine zweite Begrenzungsebene **(8b)** um einen Abstand T voneinander beabstandet sind; und
**dass** dieser Abstand T vorzugsweise größer ist als 1 mal t, bevorzugt größer als 2 mal t und besonders bevorzugt größer oder gleich 3 mal t, und weiter vorzugsweise kleiner als 20 mal t, bevorzugt kleiner als 10 mal t und besonders bevorzugt kleiner oder gleich 5 mal t, und weiter bevorzugt entspricht T im Wesentlichen 3,5 mal t +/-0,75 mal t.

5. Werkzeugeinrichtung gemäß einem der vorhergehenden Ansprüche, **dadurch gekennzeichnet, dass** diese eine Vielzahl von Antriebsflächenbereichen **(2, 2a, 2b)** aufweist, welche vorzugsweise rotationssymmetrisch um die Werkzeugdrehachse **(5)** angeordnet sind.

6. Werkzeugeinrichtung gemäß einem der vorhergehenden Ansprüche, **dadurch gekennzeichnet,**
**dass** wenigstens jeweils zwei, vorzugsweise mehrere, dieser Antriebsflächenbereiche **(2, 2a, 2b)** symmetrisch zu einer Symmetrieebene **(9)** angeordnet sind,
**dass** in dieser Symmetrieebene **(9)** die Werkzeugdrehachse **(5)** liegt; und
**dass** weiter vorzugsweise diese Antriebsflächenbereiche **(2, 2a, 2b)** im Wesentlichen aneinanderstoßend angeordnet sind.

7. Werkzeugeinrichtung gemäß einem der vorhergehenden Ansprüche, **dadurch gekennzeichnet, dass** diese Seitenwandung im Wesentlichen eine mittlere Wandstärke (t₁) aufweist, welche vorzugsweise größer oder gleich 0,2 mm, bevorzugt größer als 0,5 mm und besonders bevorzugt größer 0,8 mm, weiter vorzugsweise kleiner oder gleich 4 mm, bevorzugt kleiner als 2 mm und besonders bevorzugt kleiner als 1,5 mm, außerdem besonders bevorzugt im Wesentlichen 1 mm oder 1,5 mm oder bevorzugt zwischen 1 mm und 1,5 mm beträgt; und/oder dass die Seitenwandung im Wesentlichen radial geschlossen um die Werkzeugdrehachse **(5)** umläuft.

8. Werkzeugeinrichtung gemäß einem der vorhergehenden Ansprüche, **dadurch gekennzeichnet,**
**dass** die Anschlusseinrichtung **(12)** einen Deckflächenabschnitt **(10, 10a)** aufweist,
**dass** sich dieser mittelbar oder unmittelbar an wenigstens einen dieser Antriebsflächenbereiche **(2, 2a, 2b)** anschließt,
**dass** dessen Erstreckung wenigstens eine Komponente senkrecht zur Werkzeugdrehachse **(5)** aufweist, und
**dass** dieser Deckflächenabschnitt **(10, 10a)** im Wesentlichen im Bereich einer dieser ersten, oberen Begrenzungsebenen **(8a)** angeordnet ist
und vorzugsweise dass sich der Deckflächenabschnitt **(10, 10a)** radial in Richtung zur Werkzeugdrehachse **(5)** hin erstreckt; und
**dass** dieser Deckflächenabschnitt **(10, 10a)** wenigstens eine Ausnehmung aufweist,
wobei diese Ausnehmung oder mehrere dieser Ausnehmungen bevorzugt im Wesentlichen im Bereich der Werkzeugdrehachse **(5)** angeordnet sind,
wobei weiter bevorzugt eine oder mehrere dieser Ausnehmungen rotationssymmetrisch zu dieser Werkzeugdrehachse **(5)** angeordnet sind.

9. Werkzeugeinrichtung gemäß einem der vorhergehenden Ansprüche, **dadurch gekennzeichnet,**
**dass** ein Normalvektor auf eine dieser Tangentialebenen **(4)** in radialer Richtung von der Werkzeugdrehachse **(5)** weg orientiert ist, insbesondere alle Normalvektoren dieser Tangentialebenen **(4)** in radialer Richtung von der Werkzeugdrehachse **(5)** weg orientiert sind; oder
**dass** ein Normalvektor auf eine dieser Tangentialebenen **(4)** in radialer Richtung zu der Werkzeugdrehachse **(5)** hin orientiert ist, insbesondere alle Normalvektoren dieser Tangentialebenen **(4)** in radialer Richtung zu der Werkzeugdrehachse **(5)** hin orientiert sind.

10. Werkzeugeinrichtung gemäß einem der vorhergehenden Ansprüche, **dadurch gekennzeichnet,**
**dass** diese Werkzeugeinrichtung **(1, 1b)** wenigstens einen Arbeitsbereich **(13),** wenigstens eine Anschlusseinrichtung **(12)** und wenigstens einen Verbindungsbereich **(11, 32a, 32b)** aufweist;
**dass** dieser Arbeitsbereich **(13)** dazu eingerichtet ist, auf eine Werkstückanordnung oder ein Werkstück einzuwirken; und
**dass** zwischen dieser Anschlusseinrichtung **(12)** und jedem dieser Arbeitsbereiche **(13)** ein Verbindungsbereich **(11, 32a, 32b)** angeordnet ist; und
insbesondere **dadurch gekennzeichnet, dass** dieser wenigstens eine Verbindungsbereich **(11, 32a, 32b),** vorzugsweise alle Verbindungsbereiche **(11, 32a, 32b),** im Wesentlichen im Bereich einer dieser zweiten, unteren Begrenzungsebenen **(8b)** angeordnet sind und vorzugsweise mit dieser im Wesentlichen zusammenfallen.

11. Werkzeugeinrichtung gemäß einem der vorhergehenden Ansprüche, **dadurch gekennzeichnet,**
**dass** zwischen einer dieser Tangentialebenen **(4)** und dieser Radialebene **(6),** wobei diese Radialebene **(6)** senkrecht zur Werkzeugdrehachse **(5)** angeordnet ist, der Winkel α eingeschlossen ist,
wobei der Winkel α kleiner als 90°, bevorzugt kleiner als 80° und besonders bevorzugt kleiner als 75° ist, weiter vorzugsweise ist der Winkel α größer als 0°, bevorzugt größer als 45° und besonders bevorzugt größer als 60°, weiter vorzugsweise liegt der Winkel α in einem Bereich von 62,5° bis 72,5°.

12. Werkzeugeinrichtung gemäß einem der vorhergehenden Ansprüche, **dadurch gekennzeichnet,**
**dass** zwischen einer dieser Tangentialebenen **(4)** und dieser Axialebene **(7),** wobei in dieser Axialebene **(7)** die Werkzeugdrehachse **(5)** liegt, der Winkel β eingeschlossen ist,
wobei der Winkel β kleiner als 90°, bevorzugt kleiner als 70° und besonders bevorzugt kleiner als 65° ist und weiter vorzugsweise ist der Winkel β größer als 0°, bevorzugt größer als 15° und besonders bevorzugt größer als 30°, weiter vorzugsweise ist der Winkel β im Wesentlichen 30°, 45° oder 60°.

13. Werkzeugeinrichtung gemäß einem der vorhergehenden Ansprüche, **dadurch gekennzeichnet, dass** die Anschlusseinrichtung (12) eine gerade Anzahl von Antriebsflächenbereichen **(2, 2a, 2b)** aufweist, vorzugsweise 4 oder mehr, bevorzugt 8 oder mehr und besonders bevorzugt 16 oder mehr, und weiter vorzugsweise 64 oder weniger, bevorzugt 48 oder weniger und besonders bevorzugt 32 oder weniger, ganz besonders bevorzugt 24,
wobei diese Antriebsflächenbereiche **(2, 2a, 2b)** insbesondere im Wesentlichen sternartig, vorzugsweise in Form eines sternförmigen Polygons, vorzugsweise mit Abrundungen an den Übergangsbereichen zwischen den einzelnen Antriebsflächenbereichen, ausgebildet sind.

14. Werkzeugeinrichtung gemäß einem der vorhergehenden Ansprüche, **dadurch gekennzeichnet, dass** diese Tangentialebenen **(4)** gegenüber einer Geraden, die parallel zur Werkzeugdrehachse **(5)** verläuft, geneigt sind.

15. Verbindungseinrichtung **(1a),** welche zur Verbindung einer Werkzeugeinrichtung **(1, 1b)** mit einer, insbesondere handgeführten, Werkzeugmaschine **(22)** geeignet ist, die eine sich um eine Antriebsachse, insbesondere oszillierend, bewegende Antriebseinrichtung aufweist,
wobei die Verbindungseinrichtung **(1a)** einen ersten Verbindungsbereich **(32a)** und einen zweiten Verbindungsbereich **(32b)** aufweist,
wobei der erste Verbindungsbereich **(32a)** zur Verbindung der Verbindungseinrichtung **(1a)** mit der Werkzeugmaschine **(22)** eingerichtet ist, wobei die Verbindungseinrichtung **(1a)** so mit der Werkzeugmaschine **(22)** verbindbar ist, dass die Antriebsachse und eine Verbindungs-Drehachse im Wesentlichen zusammenfallen,
wobei der zweite Verbindungsbereich **(32b)** zur Verbindung der Verbindungseinrichtung **(1a)** mit der Werkzeugeinrichtung **(1, 1b)** eingerichtet ist,
**dadurch gekennzeichnet, dass**
wenigstens einer dieser Verbindungsbereiche **(32a, 32b)** eine Anschlusseinrichtung **(12)** aufweist, wobei diese Anschlusseinrichtung **(12)** zur Aufnahme einer Antriebskraft wenigstens zwei im Abstand zu dieser Verbindungs-Drehachse angeordnete Antriebsflächenbereiche **(2, 2a, 2b)** mit je einer Vielzahl von Flächenpunkten **(3)** aufweist, wobei Tangentialebenen **(4)** an diesen Flächenpunkten **(3)** gegenüber einer Axialebene **(7),** welche diese Verbindungs-Drehachse einschließt, geneigt sind, wobei diese Tangentialebenen **(4)** gegenüber einer Radialebene **(6),** welche sich senkrecht zu der Verbindungs-Drehachse erstreckt, geneigt sind, wobei die Anschlusseinrichtung (12) eine Seitenwandung aufweist, wobei diese Seitenwandung radial beabstandet von der Verbindungs-Drehachse verläuft, wobei sich diese Seitenwandung zwischen einer ersten, oberen Begrenzungsebene **(8a)** und einer zweiten, unteren Begrenzungsebene **(8b)** erstreckt und, wobei diese Seitenwandung die Antriebsflächenbereiche **(2, 2a, 2b)** aufweist, wobei durch die Seitenwandung ein im Wesentlichen hohlkegeliger Abschnitt im Bereich der Anschlusseinrichtung entsteht, der einen Querschnitt mit variablem Abstand der Seitenwandung zur Verbindungs-Drehachse in einer zu dieser Verbindungs-Drehachse orthogonalen Ebene aufweist.

16. Verbindungseinrichtung gemäß Anspruch 15, **dadurch gekennzeichnet, dass**
der erste Verbindungsbereich **(32a)** rotationssymmetrisch zur Verbindungs-Drehachse angeordnet ist und/oder dass der zweite Verbindungsbereich **(32b)** rotationssymmetrisch oder rotationsunsymmetrisch zur Verbindungs-Drehachse angeordnet ist.

17. Verbindungseinrichtung gemäß einem der Ansprüche 15 oder 16, **dadurch gekennzeichnet,**
**dass** die Verbindungseinrichtung **(1a)** eine erste Halteeinrichtung **(30)** aufweist; und dass diese erste Halteeinrichtung **(30)** zum Zusammenwirken mit wenigstens diesem ersten Verbindungsbereich **(32a)** und der Werkzeugmaschine **(22)** eingerichtet ist;
und/oder
**dadurch gekennzeichnet,**
**dass** die Verbindungseinrichtung **(1a)** wenigstens eine zweite Halteeinrichtung **(31)** aufweist; und
**dass** diese zweite Halteeinrichtung **(31)** zum Zusammenwirken mit diesem zweiten Verbindungsbereich **(32b)** und einer Werkzeugeinrichtung **(1, 1b)** eingerichtet ist.

18. Verbindungseinrichtung gemäß einem der Ansprüche 15 bis 17, **dadurch gekennzeichnet,**
**dass** die erste Halteeinrichtung **(30)** eine erste Halteachse **(30a)** aufweist,
**dass** die zweite Halteeinrichtung **(31)** eine zweite Halteachse **(31a)** aufweist; und
**dass** die erste und die zweite Halteachse **(30a, 31a)** im Wesentlichen parallel, insbesondere kongruent, oder schief, insbesondere windschief, zueinander angeordnet sind.

19. Baureihe von wenigstens zwei Werkzeugeinrichtungen **(1, 1b)** gemäß einem der Ansprüche 1 bis 14, **dadurch gekennzeichnet,**
**dass** jede Werkzeugeinrichtung **(1, 1b)** der Baureihe eine Bezugsebene **(14)** aufweist,
**dass** diese Bezugsebene **(14)** senkrecht zur Werkzeugdrehachse **(5)** angeordnet ist,
**dass** diese Bezugsebene **(14)** einen Referenzdurchmesser **(15, k4)** dieser Antriebsflächenbereiche **(2, 2a, 2b)** beinhaltet; und
**dass** ein Abstand Δ einer ersten Oberfläche dieses Deckflächenabschnitts **(10, 10a)** zu dieser Bezugsebene **(14)** für unterschiedliche Werkzeugeinrichtungen **(1, 1b)** einer Baureihe zwischen einem ersten unteren Grenzmaß und einem zweiten oberen Grenzmaß liegt, wobei das erste untere Grenzmaß größer als 0,01 mm, vorzugsweise größer als 0,05 mm, und das zweite obere Grenzmaß kleiner als 0,5 mm, vorzugsweise kleiner als 0,1 mm ist,
wobei der Abstand Δ für unterschiedliche Werkzeugeinrichtungen **(1, 1b)** dieser Baureihe bevorzugt im Wesentlichen konstant ist.

20. Baureihe gemäß Anspruch 19, **dadurch gekennzeichnet, dass** unterschiedliche Werkzeugeinrichtungen einer Baureihe unterschiedliche Wandstärken t aufweisen.

21. Baureihe gemäß einem der Ansprüche 19 oder 20, **dadurch gekennzeichnet,**
**dass** jede Werkzeugeinrichtung **(1, 1b)** einen bezüglich seiner Position zur Werkzeugdrehachse **(5)** und zu diesen Antriebsflächenbereichen **(2, 2a, 2b)** im Wesentlichen gleich angeordneten Kodierungsbereich aufweist,
**dass** jede Werkzeugeinrichtung **(1, 1b)** durch wenigstens einen Anwendungsparameter, wie insbesondere eine bevorzugte Antriebsleistung, gekennzeichnet ist; und dass dieser Kodierungsbereich wenigstens eine Kodierungseinrichtung **(16, 16a, 16b)** aufweist, welche für diesen wenigstens einen Anwendungsparameter charakteristisch ist, wobei die Baureihe von wenigstens zwei Werkzeugeinrichtungen **(1, 1b)** bevorzugt **dadurch gekennzeichnet ist,**
**dass** wenigstens eine erste Werkzeugeinrichtung **(1)** eine erste Kodierungseinrichtung **(16, 16a, 16b)** aufweist, welche dafür vorgesehen ist, mit einem ersten Kodierungselement, welches vorzugsweise an einer Werkzeugmaschine **(22)** angeordnet ist, zusammenzuwirken,
**dass** wenigstens eine zweite Werkzeugeinrichtung **(1b)** eine zweite Kodierungseinrichtung aufweist, welches dafür vorgesehen ist, mit einem zweiten Kodierungselement, welches vorzugsweise an einer Werkzeugmaschine **(22)** angeordnet ist, zusammenzuwirken,
**dass** diese Kodierungseinrichtungen **(16, 16a, 16b)** und diese Kodierungselemente so gestaltet sind, dass das erste Kodierungselement mit der ersten und der zweiten Kodierungseinrichtung **(16, 16a, 16b)** zusammenwirken kann; und
**dass** das zweite Kodierungselement nur mit der zweiten Kodierungseinrichtung **(16, 16a, 16b),** nicht aber mit der ersten Kodierungseinrichtung **(16, 16a, 16b),** zusammenwirken kann.

22. Baureihe gemäß Anspruch 21, **dadurch gekennzeichnet, dass** die Form einer Grundfläche wenigstens einer, vorzugsweise aller, Kodierungseinrichtungen **(16, 16a, 16b)** aus einer Gruppe von Formen ausgewählt ist, welche wenigstens eine oder mehrere der folgenden Formen aufweist:
- ein Polygon mit einer Vielzahl von Ecken, vorzugsweise 3, 4, 5, 6, 7, 8 oder mehr, die vorzugsweise abgerundet sind,
- einen Kreis,
- eine Ellipse,
- einen Bogen mit variablem oder konstantem Radius oder
- eine Kombination aus mehreren der genannten Formen.

23. Baureihe gemäß einem der Ansprüche 21 oder 22, **dadurch gekennzeichnet, dass** wenigstens zwei dieser Kodierungseinrichtungen **(16, 16a, 16b)** die gleiche geometrische Form, aber eine unterschiedliche Größe aufweisen.

24. Baureihe gemäß einem der Ansprüche 21 bis 23, **dadurch gekennzeichnet,**
**dass** wenigstens eine, vorzugsweise alle, dieser Kodierungseinrichtungen **(16, 16a, 16b)** als gegenüber einer Kodierungsbezugsfläche erhabene Bereiche ausgeführt sind; und,
**dass** wenigstens eine Erstreckung der einen Kodierungseinrichtung **(16, 16a, 16b)** größer ist, als die vergleichbare Erstreckung der anderen Kodierungseinrichtung **(16, 16a, 16b)** oder
**dass** wenigstens eine, vorzugsweise alle, dieser Kodierungseinrichtungen **(16, 16a, 16b)** als Ausnehmungen **(16b)** ausgeführt sind; und
**dass** wenigstens eine Erstreckung der einen Kodierungseinrichtung **(16b)** größer ist als die vergleichbare Erstreckung der anderen Kodierungseinrichtung **(16, 16a, 16b).**

25. Baureihe gemäß einem der Ansprüche 21 bis 24, **dadurch gekennzeichnet, dass** die Kodierungsbereiche **(16, 16a, 16b)** im Bereich dieses Deckflächenabschnitts **(10, 10a)** angeordnet sind.

26. Verfahren zur Herstellung einer Werkzeugeinrichtung gemäß einem der Ansprüche 1 bis 14, **dadurch gekennzeichnet, dass** dieses Verfahren
zur Herstellung eines Antriebsflächenbereichs **(2, 2a, 2b)** einen urformenden, umformenden oder generativen Verfahrensschritt oder eine Kombination aus mehreren solcher Verfahrensschritte aufweist, welche aus einer Gruppe ausgewählt sind, welche insbesondere Schmieden, Eindrücken, Walzen, Strangpressen, Falten, Tiefziehen, Sicken, Bördeln, Richten, Biegen, Recken, Stauchen, Sintern, Gießen, schichtweises Auftragen umfasst; und
zur Herstellung einer Werkzeugkontur einen , vorzugsweise thermisch und/oder mechanisch trennenden Verfahrensschritt oder eine Kombination aus mehreren solcher Verfahrensschritte aufweist, welche aus einer Gruppe ausgewählt sind, welche insbesondere Sägen, Schleifen, Fräsen, Stanzen, Scheren, Partikelstrahlschneiden, Elektronenstrahlschneiden, Laserstrahlschneiden, Plasmaschneiden, Brennschneiden, funkenerosives Schneiden umfasst.

## Claims

1. A tool device (1, 1b) which is suitable for use with a machine tool (22), and in particular suitable for use with a hand guided machine tool, which has a driving device moving around a driving axis, and in particular oscillating around the driving axis,
and which has an attachment device (12) by means of which it can be fastened to a machine tool (22) in such a manner that the driving axis and a tool axis of rotation (5) are substantially coincident,
wherein, for receiving a driving force, the attachment device (12) comprises at least two driving area regions (2, 2a, 2b) each having a plurality of surface points (3) and which are spaced from this tool axis of rotation (5),
**characterized in that** tangent planes (4) at these surface points (3) are inclined relative to an axial plane (7), which includes the tool axis of rotation (5),
wherein the tangent planes (4) are inclined relative to a radial plane (6), which extends perpendicular to the tool axis of rotation (5),
wherein the attachment device (12) comprises a side wall,
wherein the side wall extends spaced radially from the tool axis of rotation (5),
wherein the side wall extends between a first, upper boundary plane (8a) and a second, lower boundary plane (8b), and
wherein the side wall comprises the driving area regions (2, 2a, 2b),
wherein a substantially hollow conical section is formed in the region of the attachment device by means of the side wall, which section has a cross section with a variable spacing of the side wall to the tool axis of rotation in a plane orthogonal to the tool axis of rotation.

2. The tool device according to claim 1, **characterized in that** at least one of the, preferably a plurality of the, and particularly preferably all of the driving area regions (2, 2a, 2b) are, at least in sections, substantially planar or, at least in sections, curved.

3. The tool device according to any one of the preceding claims, **characterized in**
**that** these boundary planes (8, 8a, 8b) are disposed substantially perpendicular to said tool axis of rotation (5),
**that** these boundary planes (8, 8a, 8b) are spaced apart from each other;
**that** each of these driving area regions (2, 2a, 2b) is arranged between one of the first, upper boundary planes (8a) and one of the second, lower boundary planes (8b),
**that** preferably a plurality of the, preferably all of the driving areas regions extend between a single one first upper boundary plane (8a) and a single one second lower boundary plane (8b).

4. The tool device according to any one of the preceding claims, **characterized in**
**that** this tool device (1, 1b), in particular in the region of the attachment device (12), substantially has a wall thickness t,
**that** at least a first boundary plane (8a) and a second boundary plane (8b) are spaced apart by a distance T from each other; and
**that** this distance T is preferably greater than 1 times t, preferably that it is greater than 2 times t, and particularly preferably that it is greater than or equal to 3 times t, and further preferably that it is smaller than 20 times t, preferably that it is smaller than 10 times t, and particularly preferably that it is smaller than or equal to 5 times t, and more preferably that T essentially corresponds to 3.5 times t +/- 0.75 times t.

5. The tool device according to any one of the preceding claims, **characterized in**
**that** it has a plurality of driving area regions (2, 2a, 2b), which are preferably arranged rotationally symmetrically around the tool axis of rotation (5).

6. The tool device according to any one of the preceding claims, **characterized in**
**that** at least two of the, preferably several of these driving area regions (2, 2a, 2b) are arranged symmetrically with respect to a plane of symmetry (9),
**that** the tool axis of rotation (5) is located in this plane of symmetry (9); and more preferably, that these driving area regions (2, 2a, 2b) are arranged substantially contiguously.

7. The tool device according to any one of the preceding claims, **characterized in that** this side wall essentially has an average wall thickness (t₁), which is preferably greater than or equal to 0.2 mm, preferably greater than 0.5 mm, and particularly preferably greater than 0.8 mm, and further preferably that it is less than or equal to 4 mm, preferably less than 2 mm and particularly preferably less than 1.5 mm, further particularly preferably it is substantially 1 mm or 1.5 mm, or preferably between 1 mm and 1.5 mm; and / or that the side wall extends substantially radially closed around the tool axis of rotation (5).

8. The tool device according to any one of the preceding claims, **characterized in**
**that** the attachment device (12) comprises a cover area section (10, 10a),
**that** this cover area section is directly or indirectly connected to at least one of these driving area regions (2, 2a, 2b),
**that** its extent has at least one component perpendicular to the tool axis of rotation (5), and
**that** the cover area section (10, 10a) is disposed substantially in the region of one of these first, upper boundary planes (8a)
and preferably that the cover area section (10, 10a) extends radially towards the tool axis of rotation (5); and
**that** the cover area section (10, 10a) has at least one recess,
wherein this recess or several of these recesses are preferably arranged substantially in the region of the tool axis of rotation (5),
wherein further preferably one of these or several of these recesses are arranged rotationally symmetrically with respect to the tool axis of rotation (5).

9. The tool device according to any one of the preceding claims, **characterized in that** a normal vector on one of these tangent planes (4) is oriented away from the tool axis of rotation (5) in the radial direction, and in particular that all of the normal vectors of these tangent planes (4) are oriented away from the tool axis of rotation (5) in the radial direction; or
that a normal vector on one of these tangent planes (4) is oriented in the radial direction towards the tool axis of rotation (5), and in particular that all of the normal vectors of these tangential planes (4) are oriented in the radial direction towards the tool axis of rotation (5).

10. The tool device according to any one of the preceding claims, **characterized in**
**that** this tool device (1, 1b) comprises at least one operating region (13), at least one attachment device (12) and at least one connection region (11, 32a, 32b);
**that** this operating region (13) is arranged to act on a work piece arrangement or on a work piece; and
**that** a connection region (11, 32a, 32b) is arranged between this attachment device (12) and each of these operating regions (13); and
in particular **characterized in that** the at least one of the connection regions (11, 32a, 32b), and preferably all of the connection regions (11, 32a, 32b) are arranged substantially in the region of one of these second, lower boundary planes (8b), and preferably that they substantially coincide.

11. The tool device according to any one of the preceding claims, **characterized in**
**that** the angle α is enclosed between one of these tangent planes (4) and the radial plane (6), wherein the radial plane (6) is arranged perpendicular to the tool axis of rotation (5),
**that** the angle α is smaller than 90 degrees, preferably that it is smaller than 80 degrees, and particularly preferably that it is smaller than 75 degrees, and
further preferably that the angle α is larger than 0 degrees, preferably that it is larger than 45 degrees, and particularly preferably that it is larger than 60 degrees, and
further preferably that the angle α lies in a range from 62.5 degrees to 72.5 degrees.

12. The tool device according to any one of the preceding claims, **characterized in**
**that** the angle β is enclosed between one of these tangent planes (4) and this axial plane (7), wherein the tool axis of rotation (5) is arranged in this axial plane (7), that the angle β is smaller than 90 degrees, preferably that it is smaller than 70 degrees, and particularly preferably that it is smaller than 65 degrees, and
further preferably that the angle β is larger than 0 degrees, preferably that it is larger than 15 degrees, and particularly preferably that it is larger than 30 degrees, and
further preferably that the angle β is substantially 30 degrees, 45 degrees or 60 degrees.

13. The tool device according to any one of the preceding claims, **characterized in**
**that** the attachment device (12) comprises an even number of driving area regions (2, 2a, 2b), preferably 4 or more, preferably 8 or more, and particularly preferably 16 or more, and further preferably 64 or less, preferably 48 or less, and particularly preferably 32 or less, most preferably 24,
wherein these driving area regions (2, 2a, 2b) are in particular arranged substantially star-shaped, preferably arranged substantially in the form of a star-shaped polygon, preferably rounded at the transition regions between the individual driving area regions.

14. The tool device according to any one of the preceding claims, **characterized in that** the tangent planes (4) are inclined relative to a straight line which extends parallel to the tool axis of rotation (5).

15. A connection device (1a) which is suitable for connecting a tool device (1, 1b) with a machine tool (22), in particular with a hand guided machine tool (22), which has a driving device moving around a driving axis, and in particular oscillating around the driving axis,
wherein the connection device (1a) comprises a first connection region (32a) and a second connection region (32b),
wherein the first connection region (32a) is arranged for connecting the connection device (1a) with the machine tool (22), wherein the connection device (1a) can be connected to the machine tool (22) in such a way that the driving axis and a connection axis of rotation substantially coincide,
wherein the second connection region (32b) is arranged for connecting the connection device (1a) with the tool device (1, 1b),
**characterized in that**
at least one of said connection regions (32a, 32b) comprises an attachment device (12), wherein, for receiving a driving force, the attachment device (12) comprises at least two driving area regions (2, 2a, 2b) each having a plurality of surface points (3) and which are spaced from this connection axis of rotation, wherein tangent planes (4) at these surface points (3) are inclined relative to an axial plane (7), which includes the connection axis of rotation,
wherein the tangent planes (4) are inclined relative to a radial plane (6), which extends perpendicular to the connection axis of rotation,
wherein the attachment device (12) comprises a side wall,
wherein the side wall extends spaced radially from the connection axis of rotation,
wherein the side wall extends between a first, upper boundary plane (8a) and a second, lower boundary plane (8b), and
wherein the side wall comprises the driving area regions (2, 2a, 2b),
wherein a substantially hollow conical section is formed in the region of the attachment device by means of the side wall, which section has a cross section with a variable spacing of the side wall to the connection axis of rotation in a plane orthogonal to the connection axis of rotation.

16. The connection device according to claim 15, **characterized in that** the first connection region (32a) is arranged rotationally symmetrical to the connection axis of rotation and / or that the second connection region (32b) is arranged rotationally symmetrical or asymmetrical to the connection axis of rotation.

17. The connection device according to any one of the claims 15 to 16, **characterized in**
**that** the connection device (1a) comprises a first holding device (30); and
**that** the first holding device (30) is adapted to cooperate with at least said first connection region (32a) and the machine tool (22); and / or
**characterized in that** the connection device (1a) comprises at least a second holding device (31); and
that the second holding device (31) is arranged to cooperate with the second connection region (32b) and a tool device (1, 1b).

18. The connection device according to any one of claims 15 to 17, **characterized in**
**that** the first holding device (30) has a first holding axis (30a),
**that** the second holding device (31) has a second holding axis (31a); and
**that** the first holding axis and the second holding axis (30a, 31a) are arranged substantially parallel, in particular congruent, or askew, in particular skewed, relative to each other.

19. A series of at least two tool devices (1, 1b) in accordance with any one of claims 1 to 14, **characterized in**
**that** each tool device (1, 1b) of the series has a reference plane (14),
**that** the reference plane (14) is arranged perpendicular to the tool axis of rotation (5),
**that** this reference plane (14) has a reference diameter (15, k4) of the driving area regions (2, 2a, 2b); and
**that**, for different types of the tool devices (1, 1b) of a series, a distance Δ of a first surface of said cover area section (10, 10a) to this reference plane (14) is between a first, lower limit and a second, upper limit, wherein the first, lower limit is larger than 0.01 mm, preferably larger than 0.05 mm, and the second, upper limit is smaller than 0.5 mm, preferably smaller than 0.1 mm,
wherein preferably the distance Δ is substantially constant for different tool devices (1, 1b) of the series.

20. The series in accordance with claim 19, **characterized in that** different types of the tool devices of the series have different wall thicknesses t.

21. The series in accordance with any one of the claims 19 or 20, **characterized in**
**that** each tool device (1, 1b) has an encoding region which is arranged in substantially the same manner as regards its position relative to the tool axis of rotation (5) and to the driving area regions (2, 2a, 2b),
**that** each tool device (1, 1b) is **characterized by** at least one application parameter, such as in particular a preferred driving power; and
that this encoding region comprises at least one encoding device (16, 16a, 16b) which is characteristic for said at least one application parameter, wherein the series of at least two tool devices (1, 1b) is preferably **characterized in**
**that** at least a first tool device (1) has a first encoding device (16, 16a, 16b) which is provided to cooperate with a first encoding element, which is preferably arranged on a machine tool (22),
**that** at least a second tool device (1b) has a second encoding coding device which is provided to cooperate with a second encoding element, which is preferably arranged on a machine tool (22),
**that** these encoding devices (16, 16a, 16b) and these encoding elements are designed in such a way that the first encoding element can cooperate with the first encoding device and the second encoding device (16, 16a, 16b); and
**that** the second encoding element can cooperate only with the second encoding device (16, 16a, 16b) but that it can not cooperate with the first encoding device (16, 16a, 16b).

22. The series in accordance with claim 21, **characterized in that** the shape of a base area of at least one, preferably of all encoding devices (16, 16a, 16b) is selected from a group of shapes comprising at least one or more of the following shapes:
- a polygon having a plurality of corners, preferably 3, 4, 5, 6, 7, 8 or more corners, which are preferably rounded,
- a circle,
- an ellipse,
- an arc with a variable radius or a constant radius or
- a combination of several of the shapes mentioned.

23. The series in accordance with any one of the claims 21 or 22, **characterized in that** at least two of these encoding devices (16, 16a, 16b) have the same geometric shape, but a different size.

24. The series in accordance with any one of the claims 21 to 23, **characterized in**
**that** at least one of, and preferably all of the encoding devices (16, 16a, 16b) are formed as raised regions relative to an encoding reference plane; and
**that** at least one extent of the one encoding device (16, 16a, 16b) is larger than the respective extent of the other encoding device (16, 16a, 16b) or
**that** at least one of the, preferably all of the encoding devices (16, 16a, 16b) are formed as recesses (16b); and
**that** at least one extent of the one encoding device (16b) is larger than the respective extension of the other encoding device (16, 16a, 16b).

25. The series in accordance with any one of the claims 21 to 24, **characterized in that** the encoding regions (16, 16a, 16b) are arranged in the region of this cover area section (10, 10a).

26. A method of manufacturing a tool device according to any one of the claims 1 to 14, **characterized in**
**that** this process, in order to manufacture a driving area region (2, 2a, 2b) comprises a primary shaping process step, or a reshaping process step, or a generative process step or a combination of several of these process steps, which are selected from a group comprising in particular a forging, a pressing, a rolling, an extruding, a folding, a deep drawing, a beading, a flanging, a straightening, a bending, a stretching, a compressing, a sintering, a casting, and a layer by layer coating step; and
**that** this process, in order to manufacture a tool contour, comprises a separating process step, preferably a thermally separating process step and / or a mechanically separating process step or a combination of several of such process steps, which are selected from a group comprising in particular a sawing, a grinding, a milling, a punching, a shearing, a particle beam cutting, an electron beam cutting, a laser cutting, a plasma cutting, a flame cutting, and a spark erosion cutting step.

## Revendications

1. Dispositif formant outil (1, 1b), qui est adapté pour être utilisé avec une machine-outil (22) en particulier à guidage manuel, qui présente un dispositif d'entraînement se déplaçant autour d'un axe d'entraînement, en particulier par oscillations, et qui présente un dispositif de raccordement (12), avec lequel il peut être fixé au niveau d'une machine-outil (22) de telle manière que son axe d'entraînement et un axe de rotation d'outil (5) coïncident sensiblement,
dans lequel ledit dispositif de raccordement (12) présente, afin de recevoir une force d'entraînement, au moins deux zones de surface d'entraînement (2, 2a, 2b) disposées à distance par rapport audit axe de rotation d'outil (5), pourvues respectivement d'une pluralité de points de surface (3),
**caractérisé en ce que**
des plans tangentiels (4) sont inclinés au niveau desdits points de surface (3) par rapport à un plan axial (7), qui renferme ledit axe de rotation d'outil (5),
dans lequel lesdits plans tangentiels (4) sont inclinés par rapport à un plan radial (6), qui s'étend de manière perpendiculaire par rapport à l'axe de rotation d'outil (5),
dans lequel le dispositif de raccordement (12) présente une paroi latérale,
dans lequel ladite paroi latérale s'étend de manière espacée radialement de l'axe de rotation d'outil (5), dans lequel ladite paroi latérale s'étend entre un premier plan de délimitation supérieur (8a) et un deuxième plan de délimitation inférieur (8b), et
dans lequel ladite paroi latérale présente les zones de surface d'entraînement (2, 2a, 2b),
dans lequel la paroi latérale permet de former une section sensiblement en forme de cône creux dans la zone du dispositif de raccordement, qui présente une section transversale présentant une distance variable de la paroi latérale par rapport à l'axe de rotation d'outil dans un plan orthogonal par rapport audit axe de rotation d'outil.

2. Dispositif formant outil selon la revendication 1, **caractérisé en ce**
**qu'**au moins une zone de surface d'entraînement, de manière préférée une pluralité et de manière particulièrement préférée toutes les zones de surface d'entraînement (2, 2a, 2b) sont sensiblement planes au moins par endroits ou sont au moins par endroits incurvées.

3. Dispositif formant outil selon l'une quelconque des revendications précédentes, **caractérisé en ce que** lesdits plans de délimitation (8, 8a, 8b) sont disposés sensiblement de manière perpendiculaire par rapport audit axe de rotation d'outil (5),
que lesdits plans de délimitation (8, 8a, 8b) sont espacés les uns des autres ;
que chacune desdites zones de surface d'entraînement (2, 2a, 2b) est disposée entre un desdits premiers plans de délimitation supérieurs (8a) et un desdits deuxièmes plans de délimitation (8b) inférieurs, et de préférence qu'une pluralité, de préférence toutes les zones de surface d'entraînement s'étendent entre un unique premier plan de délimitation supérieur (8a) et un unique deuxième plan de délimitation (8b) inférieur.

4. Dispositif formant outil selon l'une quelconque des revendications précédentes, **caractérisé en ce**
**que** ledit dispositif formant outil (1, 1b) présente sensiblement une épaisseur de paroi t en particulier dans la zone du dispositif de raccordement (12),
**qu'**au moins un premier plan de délimitation (8a) et un deuxième plan de délimitation (8b) sont espacés l'un de l'autre d'une distance T ; et
**que** ladite distance T est de préférence 1 fois plus grande que t, de manière préférée 2 fois plus grande que t et de manière particulièrement préférée 3 fois plus grande que t ou égale à trois fois t et par ailleurs de préférence est 20 fois plus petite que t, de manière préférée 10 fois plus petite que t et de manière particulièrement préférée 5 fois plus petite ou 5 fois égale à t, de du reste de manière préférée correspond sensiblement à 3,5 fois à t +/- 0,75 fois à t.

5. Dispositif formant outil selon l'une quelconque des revendications précédentes, **caractérisé en ce que** ce dernier présente une pluralité de zones de surface d'entraînement (2, 2a, 2b), qui sont disposées de préférence de manière symétrique en rotation autour de l'axe de rotation d'outil (5).

6. Dispositif formant outil selon l'une quelconque des revendications précédentes, **caractérisé en ce**
**qu'**au moins respectivement deux, de préférence plusieurs, desdites zones de surface d'entraînement (2, 2a, 2b) sont disposées de manière symétrique par rapport à un plan de symétrie (9),
**que** l'axe de rotation d'outil (5) se trouve dans ledit plan de symétrie (9) ; et
**que** du reste de préférence lesdites zones de surface d'entraînement (2, 2a, 2b) sont disposées sensiblement bout à bout.

7. Dispositif formant outil selon l'une quelconque des revendications précédentes, **caractérisé en ce que** ladite paroi latérale présente sensiblement une épaisseur de paroi (t₁) moyenne, qui présente une valeur de préférence supérieure ou égale à 0,2 mm, de manière préférée une valeur supérieure à 0,5 mm et de manière particulièrement préférée supérieure à 0,8 mm, du reste de préférence une valeur inférieure ou égale à 4 mm, de manière préférée une valeur inférieure à 2 mm et de manière particulièrement préférée une valeur inférieure à 1,5 mm, par ailleurs de manière préférée une valeur sensiblement de 1 mm ou de 1,5 mm ou de manière préférée une valeur comprise entre 1 mm et 1,5 mm ; et/ou que la paroi latérale s'étend sensiblement de manière radialement fermée tout autour de l'axe de rotation d'outil (5).

8. Dispositif formant outil selon l'une quelconque des revendications précédentes, **caractérisé en ce**
**que** le dispositif de raccordement (12) présente une section de surface de recouvrement (10, 10a),
**que** ce dernier se raccorde indirectement ou directement à au moins une desdites zones de surface d'entraînement (2, 2a, 2b),
**que** son extension présente au moins un composant de manière perpendiculaire par rapport à l'axe de rotation d'outil (5), et
**que** ladite section de surface de recouvrement (10, 10a) est disposée sensiblement dans la zone d'un desdits premiers plans de délimitation supérieurs (8a),
et de préférence que la section de surface de recouvrement (10, 10a) s'étend de manière radiale en direction de l'axe de rotation d'outil (5), et
**que** ladite section de surface de recouvrement (10, 10a) présente au moins un évidement,
dans lequel ledit évidement ou plusieurs desdits évidements sont disposés de manière préférée sensiblement dans la zone de l'axe de rotation d'outil (5),
dans lequel du reste de manière préférée un ou plusieurs desdits évidements sont disposés de manière symétrique en rotation par rapport audit axe de rotation d'outil (5).

9. Dispositif formant outil selon l'une quelconque des revendications précédentes, **caractérisé en ce**
**qu'**un vecteur normal est orienté sur un desdits plans tangentiels (4) dans une direction radiale de manière à s'éloigner de l'axe de rotation d'outil (5), en particulier tous les vecteurs normaux desdits plans tangentiels (4) sont orientés dans une direction radiale de manière à s'éloigner de l'axe de rotation d'outil (5) ; ou
**qu'**un vecteur normal est orienté sur un desdits plans tangentiels (4) dans une direction radiale vers l'axe de rotation d'outil (5), en particulier tous les vecteurs normaux desdits plans tangentiels (4) sont orientés dans une direction radiale vers l'axe de rotation d'outil (5).

10. Dispositif formant outil selon l'une quelconque des revendications précédentes, **caractérisé en ce**
**que** ledit dispositif formant outil (1, 1b) présente au moins une zone de travail (13), au moins un dispositif de raccordement (12) et au moins une zone de liaison (11, 32a, 32b) ;
**que** ladite zone de travail (13) est mise au point pour agir sur un ensemble de pièces ou sur une pièce ; et qu'une zone de liaison (11, 32a, 32b) est disposée entre ledit dispositif de raccordement (12) et chacune desdites zones de travail (13) ; et
en particulier **caractérisé en ce que** ladite au moins une zone de liaison (11, 32a, 32b), de préférence toutes les zones de liaison (11, 32a, 32b) sont disposées sensiblement dans la zone d'un desdits deuxièmes plans de délimitation inférieurs (8b) et de préférence coïncident sensiblement avec ce dernier.

11. Dispositif formant outil selon l'une quelconque des revendications précédentes, **caractérisé en ce que** l'angle α est formé entre un desdits plans tangentiels (4) et ledit plan radial (6), dans lequel ledit plan radial (6) est disposé de manière perpendiculaire par rapport à l'axe de rotation d'outil (5),
dans lequel l'angle α est inférieur à 90°, de manière préférée est inférieur à 80° et de manière particulièrement préférée est inférieur à 75°, du reste de préférence l'angle α est supérieur à 0°, de manière préférée est supérieur à 45° et de manière particulièrement préférée est supérieur à 60°, du reste de préférence l'angle α se situe dans une plage allant de 62,5° à 72,5°.

12. Dispositif formant outil selon l'une quelconque des revendications précédentes, **caractérisé en ce**
**que** l'angle β est formé entre l'un desdits plans tangentiels (4) et ledit plan axial (7), dans lequel l'axe de rotation d'outil (5) se trouve dans ledit plan axial (7),
dans lequel l'angle β est inférieur à 90°, de manière préférée est inférieur à 70° et de manière particulièrement préférée est inférieur à 65° et du reste de préférence l'angle β est supérieur à 0°, de manière préférée est supérieur à 15° et de manière particulièrement préférée est supérieur à 30°, du reste de préférence l'angle β est sensiblement de 30°, de 45° ou de 60°.

13. Dispositif formant outil selon l'une quelconque des revendications précédentes, **caractérisé en ce que** le dispositif de raccordement (12) présente un nombre pair de zones de surface d'entraînement (2, 2a, 2b), de préférence 4 ou plus, de manière préférée 8 ou plus et de manière particulièrement préférée 16 ou plus, et du reste de préférence 64 ou moins, de manière préférée 48 ou moins et de manière particulièrement préférée 32 ou moins, de manière idéale 24,
dans lequel lesdites zones de surface d'entraînement (2, 2a, 2b) sont réalisées en particulier sensiblement à la manière d'une étoile, de préférence sous la forme d'un polygone en forme d'étoile, de préférence avec des arrondis au niveau des zones de transition entre les diverses zones de surface d'entraînement.

14. Dispositif formant outil selon l'une quelconque des revendications précédentes, **caractérisé en ce que** lesdits plans tangentiels (4) sont inclinés par rapport à une droite, qui s'étend de manière parallèle par rapport à l'axe de rotation d'outil (5).

15. Dispositif de liaison (1a), qui est adapté afin de relier un dispositif formant outil (1, 1b) à une machine-outil (22) en particulier à guidage manuel,
qui présente un dispositif d'entraînement se déplaçant autour d'un axe d'entraînement, en particulier par oscillations,
dans lequel ledit dispositif de liaison (1a) présente une première zone de liaison (32a) et une deuxième zone de liaison (32b),
dans lequel la première zone de liaison (32a) est mise au point afin de relier le dispositif de liaison (1a) à la machine-outil (22), dans lequel le dispositif de liaison (1a) peut être relié de telle manière à la machine-outil (22) que l'axe d'entraînement et un axe de rotation de liaison coïncident sensiblement,
dans lequel la deuxième zone de liaison (32b) est mise au point afin de relier le dispositif de liaison (1a) au dispositif formant outil (1, 1b),
**caractérisé en ce que**
au moins une desdites zones de liaison (32a, 32b) présente un dispositif de raccordement (12), dans lequel ledit dispositif de raccordement (12) servant à recevoir une force d'entraînement présente au moins deux zones de surface d'entraînement (2, 2a, 2b) disposées à distance de l'axe de rotation de liaison pourvues respectivement d'une pluralité de points de surface (3), dans lequel des plans tangentiels (4) sont inclinés au niveau desdits points de surface (3) par rapport à un plan axial (7), qui forme ledit axe de rotation de liaison, dans lequel lesdits plans tangentiels (4) sont inclinés par rapport à un plan radial (6), qui s'étend de manière perpendiculaire par rapport à l'axe de rotation de liaison, dans lequel le dispositif de raccordement (12) présente une paroi latérale, dans lequel ladite paroi latérale s'étend de manière espacée radialement de l'axe de rotation de liaison, dans lequel ladite paroi latérale s'étend entre un premier plan de délimitation supérieur (8a) et un deuxième plan de délimitation inférieur (8b), et dans lequel ladite paroi latérale présente les zones de surface d'entraînement (2, 2a, 2b), dans lequel la paroi latérale permet de former une section sensiblement en forme de cône creux dans la zone du dispositif de raccordement, laquelle présente une section transversale présentant une distance variable de la paroi latérale par rapport à l'axe de rotation de liaison dans un plan orthogonal par rapport audit axe de rotation de liaison.

16. Dispositif de liaison selon la revendication 15, **caractérisé en ce que** la première zone de liaison (32a) est disposée de manière symétrique en rotation par rapport à l'axe de rotation de liaison, et/ou que la deuxième zone de liaison (32b) est disposée de manière symétrique en rotation ou de manière non symétrique en rotation par rapport à l'axe de rotation de liaison.

17. Dispositif de liaison selon l'une quelconque des revendications 15 ou 16, **caractérisé en ce**
**que** le dispositif de liaison (1a) présente un premier dispositif de maintien (30) ; et
**que** ledit premier dispositif de maintien (30) est mis au point afin de coopérer avec au moins ladite première zone de liaison (32a) et la machine-outil (22) ; et/ou **caractérisé en ce**
**que** le dispositif de liaison (1a) présente au moins un deuxième dispositif de maintien (31) ; et
**que** ledit deuxième dispositif de maintien (31) est mis au point afin de coopérer avec ladite deuxième zone de liaison (32b) et un dispositif formant outil (1, 1b).

18. Dispositif de liaison selon l'une quelconque des revendications 15 à 17, **caractérisé en ce**
**que** le premier dispositif de maintien (30) présente un premier axe de maintien (30a),
**que** le deuxième dispositif de maintien (31) présente un deuxième axe de maintien (31a) ; et
**que** le premier et le deuxième axe de maintien (30a, 31a) sont disposés sensiblement de manière parallèle, en particulier de manière congruente, ou de manière oblique, en particulier de manière gauchie l'un par rapport l'autre.

19. Gamme d'au moins deux dispositifs formant outil (1, 1b) selon l'une quelconque des revendications 1 à 14, **caractérisée en ce**
**que** chaque dispositif formant outil (1, 1b) de la gamme présente un plan de référence (14)
**que** ledit plan de référence (14) est disposé de manière perpendiculaire par rapport à l'axe de rotation d'outil (5),
**que** ledit plan de référence (14) contient un diamètre de référence (15, k4) desdites zones de surface d'entraînement (2, 2a, 2b) ; et
**qu'**une distance Δ d'une première surface de ladite section de surface de recouvrement (10, 10a) par rapport audit plan de référence (14) pour différents dispositifs formant outil (1, 1b) d'une gamme se situe entre une première mesure de limite inférieure et une deuxième mesure de limite supérieure, dans lequel la première mesure de limite inférieure est supérieure à 0,01 mm, de préférence est supérieure à 0,05 mm, et la deuxième mesure de limite supérieure est inférieure à 0,5 mm, de préférence est inférieure à 0,1 mm,
dans lequel la distance Δ est de manière préférée sensiblement constante pour différents dispositifs formant outil (1, 1b) de ladite gamme.

20. Gamme selon la revendication 19,
**caractérisée en ce que** différents dispositifs formant outil d'une gamme présentent différentes épaisseurs de paroi t.

21. Gamme selon l'une quelconque des revendications 19 ou 20, **caractérisée en ce**
**que** chaque dispositif formant outil (1, 1b) présente une zone de codage disposée sensiblement de manière similaire par rapport à sa position par rapport à l'axe de rotation d'outil (5) et par rapport auxdites zones de surface d'entraînement (2, 2a, 2b),
**que** chaque dispositif formant outil (1, 1b) est **caractérisé par** au moins un paramètre d'application, tel qu'en particulier une puissance d'entraînement préférée ; et
que ladite zone de codage présente au moins un dispositif de codage (16, 16a, 16b), qui est caractéristique dudit au moins un paramètre d'application, dans lequel la gamme d'au moins deux dispositifs formant outil (1, 1b) est caractérisée de manière préférée en ce
qu'au moins un premier dispositif formant outil (1) présente un premier dispositif de codage (16, 16a, 16b), qui est prévu pour coopérer avec un premier élément de codage, qui est disposé de préférence au niveau d'une machine-outil (22),
qu'au moins un deuxième dispositif formant outil (1b) présente un deuxième dispositif de codage, qui est prévu pour coopérer avec un deuxième élément de codage, qui est disposé de préférence au niveau d'une machine-outil (22), que lesdits dispositifs de codage (16, 16a, 16b) et lesdits éléments de codage sont configurés de telle sorte que le premier élément de codage peut coopérer avec le premier et le deuxième dispositif de codage (16, 16a, 16b) ; et
que le deuxième élément de codage peut coopérer seulement avec le deuxième dispositif de codage (16, 16a, 16b), toutefois pas avec le premier dispositif de codage (16, 16a, 16b).

22. Gamme selon la revendication 21, **caractérisée en ce que** la forme d'une surface de base d'au moins un dispositif de codage, de préférence de tous les dispositifs de codage (16, 16a, 16b) est choisie parmi un groupe de formes, qui présente au moins une ou plusieurs des formes qui suivant :
- un polygone présentant une pluralité d'angles, de préférence 3, 4, 5, 6, 7, 8 ou plus, qui sont de préférence arrondis,
- un cercle,
- une ellipse,
- un arc présentant un rayon variable ou constant, ou
- une combinaison de plusieurs des formes évoquées.

23. Gamme selon l'une quelconque des revendications 21 ou 22, **caractérisée en ce qu'**au moins deux desdits dispositifs de codage (16, 16a, 16b) présentent la même forme géométrique, toutefois une dimension différente.

24. Gamme selon l'une quelconque des revendications 21 à 23, **caractérisée en ce**
**qu'**au moins un dispositif de codage, de préférence tous lesdits dispositifs de codage (16, 16a, 16b) sont réalisés sous la forme de zones surélevées par rapport à une surface de référence de codage ; et
**qu'**au moins une extension d'un dispositif de codage (16, 16a, 16b) est supérieure à l'extension comparable de l'autre dispositif de codage (16, 16a, 16b) ou
**qu'**au moins un dispositif de codage, de préférence tous lesdits dispositifs de codage (16, 16a, 16b) sont réalisés sous la forme d'évidements (16b) ; et
**qu'**au moins une extension d'un dispositif de codage (16b) est plus grande que l'extension comparable de l'autre dispositif de codage (16, 16a, 16b).

25. Gamme selon l'une quelconque des revendications 21 à 24, **caractérisée en ce que** les zones de codage (16, 16a, 16b) sont disposées dans la zone de ladite section de surface de recouvrement (10, 10a).

26. Procédé servant à fabriquer un dispositif formant outil selon l'une quelconque des revendications 1 à 14, **caractérisé en ce que** ledit procédé présente afin de fabriquer une zone de surface d'entraînement (2, 2a, 2b) une étape de procédé de première transformation de mise en forme ou générative ou une combinaison de plusieurs étapes de procédé de ce type, qui sont choisies parmi un groupe qui comprend en particulier le forgeage, la gravure, le laminage, l'extrusion, le pliage, l'emboutissage, le nervurage, le bordage, le dressage, le cintrage, l'étirage, le tassement, le frittage, le moulage, l'application par couches ; et
présente afin de fabriquer un contour d'outil une étape de procédé de préférence de séparation thermique et/ou mécanique ou une combinaison de plusieurs étapes de procédé de ce type, qui sont choisies parmi un groupe, qui comprend en particulier le sciage, le ponçage, le fraisage, l'estampage, le cisaillement, le découpage par faisceau de particules, le découpage par faisceau d'électrons, le découpage par faisceau laser, le découpage par plasma, le découpage au chalumeau, le découpage par étincelage.
